# EUROPEAN PATENT SPECIFICATION

(11) **EP 4 020 880 B1**
(45) Date of publication and mention of the grant of the patent: **08.04.2026**
(21) Application number: 21196591.8
(22) Date of filing: 14.09.2021
(51) Int. Cl.: H04L 9/32, H04L 9/40, H04W 12/108, H04L 67/10, H04L 9/00, G06N 20/00, H04W 4/40

(54) **METHOD, APPARATUS AND MACHINE-READABLE STORAGE TO VERIFY TRAINED MODELS IN AN EDGE ENVIRONMENT**
VERFAHREN, VORRICHTUNG UND MASCHINENLESBARER SPEICHER ZUR ÜBERPRÜFUNG VON TRAINIERTEN MODELLEN IN EDGE-UMGEBUNG
PROCÉDÉ, APPAREIL ET STOCKAGE LISIBLE PAR ORDINATEUR POUR VÉRIFIER DES MODÈLES FORMÉS DANS UN ENVIRONNEMENT DE BORD

(30) Priority: 22.12.2020 US 202017131462
(43) Date of publication of application: 29.06.2022
(73) Proprietor: INTEL Corporation, Santa Clara, CA 95054 (US)
(72) Inventor: CHERUVU, Sunil, Tempe, AZ 85284 (US); GUIM BERNAT, Francesc, 08036 Barcelona (ES); KUMAR, Karthik, Chandler, AZ 85249 (US); SMITH, Ned M., Beaverton, OR 97006 (US); VERRALL, Timothy, Pleasant Hill, CA 94523 (US)
(74) Representative: Maiwald GmbH

(56) References cited:
- WO-A1-2015/022336
- US-A1- 2019 272 375
- US-A1- 2020 027 022
- CHENLI CHANGHAO ET AL: "Energy-recycling Blockchain with Proof-of-Deep-Learning", 2019 IEEE INTERNATIONAL CONFERENCE ON BLOCKCHAIN AND CRYPTOCURRENCY (ICBC), IEEE, 14 May 2019 (2019-05-14), pages 19 - 23, XP033571993, DOI: 10.1109/BLOC.2019.8751419

## Description

### FIELD OF THE DISCLOSURE

This disclosure relates generally to computing in edge environments and, more particularly, to methods and apparatus to verify trained models in an edge environment.

### BACKGROUND

Edge environments (e.g., an Edge, Fog, multi-access edge computing (MEC), or Internet of Things (IoT) network) enable workload execution (e.g., execution of one or more computing tasks, execution of a machine learning model using input data, etc.), data storage, etc. near endpoint devices that request an execution of the workload, or components of the workload. Edge environments may include infrastructure, such as an edge platform with networking and storage capabilities, that is connected to cloud infrastructure, endpoint devices, and/or additional edge infrastructure via networks such as the Internet. Edge platforms, edge nodes or edges may be closer in proximity to endpoint devices than cloud infrastructure, such as centralized servers.

US 2020/0027022 A1 reports systems and techniques for distributed machine learning (DML) in an information centric network (ICN). Finite message exchanges, such as those used in many DML exercises, may be efficiently implemented by treating certain data packets as interest packets to reduce overall network overhead when performing the finite message exchange. Further, network efficiency in DML may be improved achieved by using local coordinating nodes to manage devices participating in a distributed machine learning exercise. Additionally, modifying a round of DML training to accommodate available participant devices, such as by using a group quality of service metric to select the devices, or extending the round execution parameters to include additional devices, may have an impact on DML performance.

### SUMMARY

The invention is as per the claims as appended herein.

### BRIEF DESCRIPTION OF THE DRAWINGS

FIG. 1 illustrates an overview of an edge cloud configuration for edge computing.
FIG.2 illustrates operational layers among endpoints, an edge cloud, and cloud computing environments.
FIG. 3 illustrates an example approach for networking and services in an edge computing system.
FIG. 4 illustrates deployment of a virtual edge configuration in an edge computing system operated among multiple edge nodes and multiple tenants.
FIG. 5 illustrates various compute arrangements deploying containers in an edge computing system.
FIG. 6 illustrates a compute and communication use case involving mobile access to applications in an edge computing system.
FIG. 7 illustrates an example mobile edge system reference architecture, arranged according to an ETSI Multi-Access Edge Computing (MEC) specification.
FIG. 8A provides an overview of example components for compute deployed at a compute node in an edge computing system.
FIG. 8B provides a further overview of example components within a computing device in an edge computing system.
FIG. 9A illustrates a domain topology for respective internet-of-things (IoT) networks coupled through links to respective gateways, according to an example.
FIG. 9B illustrates a cloud computing network in communication with a mesh network of IoT devices operating as a fog device at the edge of the cloud computing network, according to an example.
FIG. 9C illustrates a drawing of a cloud computing network, or cloud, in communication with a number of Internet of Things (IoT) devices, according to an example;
FIG. 9D illustrates a block diagram for an example IoT processing system architecture upon which any one or more of the techniques (e.g., operations, processes, methods, and methodologies) discussed herein may be performed, according to an example;
FIG. 9E illustrates an overview of layers of distributed compute deployed among an edge computing system, according to an example;
FIG. 10 illustrates network connectivity in non-terrestrial (satellite) and terrestrial (mobile cellular network) settings, according to an example.
FIG. 11 illustrates an example information centric network (ICN), according to an example.
FIG. 12 illustrates an example software distribution platform to distribute software.
FIG. 13 illustrates an example edge implementation in which examples disclosed can be implemented.
FIG. 14 depicts an example model validating process in accordance with teachings of this disclosure.
FIG. 15 depicts an example implementation of the example model validating process of FIG. 14.
FIG. 16 is a schematic overview of an example model analysis system in accordance with teachings of this disclosure.
FIG. 17 is a flowchart representative of machine readable instructions which may be executed to implement the example model analysis system of FIG. 16 and/or the example model validating process of FIG. 14.
FIG. 18 is a flowchart representative of an example subroutine of the machine readable instructions of FIG. 17.
FIG. 19 is a flowchart representative of an example subroutine of the machine readable instructions of FIG. 17.
FIG. 20 is a block diagram of an example processing platform structured to execute the instructions of FIGS. 17-19 to implement the example model analysis system of FIG. 16 and/or the example model validating process of FIG. 14.

The figures are not to scale. In general, the same reference numbers will be used throughout the drawing(s) and accompanying written description to refer to the same or like parts.

Unless specifically stated otherwise, descriptors such as "first," "second," "third," etc. are used herein without imputing or otherwise indicating any meaning of priority, physical order, arrangement in a list, and/or ordering in any way, but are merely used as labels and/or arbitrary names to distinguish elements for ease of understanding the disclosed examples. In some examples, the descriptor "first" may be used to refer to an element in the detailed description, while the same element may be referred to in a claim with a different descriptor such as "second" or "third." In such instances, it should be understood that such descriptors are used merely for identifying those elements distinctly that might, for example, otherwise share a same name. As used herein "substantially real time" refers to occurrence in a near instantaneous manner recognizing there may be real world delays for computing time, transmission, etc. Thus, unless otherwise specified, "substantially real time" refers to real time +/- 1 second.

### DETAILED DESCRIPTION

Methods and apparatus to verify trained models in edge environments are disclosed. In autonomous driving, vehicle to everything (V2X) infrastructure can build and train machine learning/artificial intelligence (ML/AI) models for deployment in vehicles. In such systems, there are usually several vehicles receiving and using the ML/AI models. Examples disclosed herein enable generation and validation of ML/AI models at multiple end points in a V2X infrastructure associated with an edge environment, for example. In particular, the edge environment can enable additional computational resources to enhance capabilities of the V2X infrastructure. Accordingly, examples disclosed herein can enable secure and effective validation of models, as well as sharing of validated models between different end points in the V2X infrastructure, including vehicles, V2X infrastructure, stationary end points, etc. Further, examples disclosed herein can be applied to any type of system and/or infrastructure utilizing trained ML/AI models in an edge environment. Examples disclosed herein enable trained models to be validated so that they can be utilized to generate reliable data and/or output. In particular, examples disclosed herein can prevent tampered, divergent and/or erroneous models from being propagated and/or proliferated through the V2X infrastructure and/or an associated edge environment of the V2X infrastructure.

As mentioned above, examples disclosed herein implement evaluation of AI models in an edge environment. A model is trained using ML, deep learning (DL), and/or other artificial machine-driven logic, enables machines (e.g., computers, logic circuits, etc.). In turn, the model is used to process input data to generate an output based on patterns and/or associations previously learned by the model via a training process. For instance, the model may be trained with data to recognize patterns and/or associations and follow such patterns and/or associations when processing input data such that other input(s) result in output(s) consistent with the recognized patterns and/or associations.

In general, implementing a ML/AI system involves two phases, a learning/training phase and an inference phase. In the learning/training phase, a training algorithm is used to train a model to operate in accordance with patterns and/or associations based on, for example, training data. In general, the model includes internal parameters that guide how input data is transformed into output data, such as through a series of nodes and connections within the model to transform input data into output data. Additionally, hyperparameters are used as part of the training process to control how the learning is performed (e.g., a learning rate, a number of layers to be used in the machine learning model, etc.). Hyperparameters are defined to be training parameters that are determined prior to initiating the training process.

Different types of training may be performed based on the type of ML/AI model and/or the expected output. For example, supervised training uses inputs and corresponding expected (e.g., labeled) outputs to select parameters (e.g., by iterating over combinations of select parameters) for the ML/AI model that reduce model error. As used herein, labelling refers to an expected output of the machine learning model (e.g., a classification, an expected output value, etc.) Alternatively, unsupervised training (e.g., used in deep learning, a subset of machine learning, etc.) involves inferring patterns from inputs to select parameters for the ML/AI model (e.g., without the benefit of expected (e.g., labeled) outputs).

Once trained, the deployed model may be operated in an inference phase to process data. In the inference phase, data to be analyzed (e.g., live data) is input to the model, and the model executes to create an output. This inference phase can be thought of as the AI "thinking" to generate the output based on what it learned from the training (e.g., by executing the model to apply the learned patterns and/or associations to the live data). In some examples, input data undergoes pre-processing before being used as an input to the machine learning model. Moreover, in some examples, the output data may undergo post-processing after it is generated by the AI model to transform the output into a useful result (e.g., a display of data, an instruction to be executed by a machine, etc.).

In some examples, output of the deployed model may be captured and provided as feedback. By analyzing the feedback, an accuracy of the deployed model can be determined. If the feedback indicates that the accuracy of the deployed model is less than a threshold or other criterion, training of an updated model can be triggered using the feedback and an updated training data set, hyperparameters, etc., to generate an updated, deployed model.

The AI models of examples disclosed herein are implemented in an edge environment (e.g., edge nodes, an edge computing environment) that utilizes edge computational resources. Edge computing, at a general level, refers to the transition of compute and storage resources closer to endpoint devices (e.g., consumer computing devices, user equipment, etc.) in order to optimize total cost of ownership, operating expense, reduce application latency, reduce network backhaul traffic and energy, improve service capabilities, and improve compliance with data privacy or security requirements. Edge computing may, in some scenarios, provide a cloud-like distributed service that offers orchestration and management for applications among many types of storage and compute resources. As a result, some implementations of edge computing have been referred to as the "edge cloud" or the "fog," as powerful computing resources previously available only in large remote data centers are moved closer to endpoints and made available for use by consumers at the "edge" of the network.

Edge computing use cases in mobile network settings have been developed for integration with multi-access edge computing (MEC) approaches, also known as "mobile edge computing." MEC approaches are designed to allow application developers and content providers to access computing capabilities and an information technology (IT) service environment in dynamic mobile network settings at the edge of the network. Limited standards have been developed by the European Telecommunications Standards Institute (ETSI) industry specification group (ISG) in an attempt to define common interfaces for operation of MEC systems, platforms, hosts, services, and applications.

Edge computing, MEC, and related technologies attempt to provide reduced latency, increased responsiveness, reduce network backhaul traffic and energy, keep data local for improved privacy and security, and provide more available computing power and network bandwidth than offered in traditional cloud network services and wide area network connections. However, the integration of mobility and dynamically launched services to some mobile use and device processing use cases has led to limitations and concerns with orchestration, functional coordination, and resource management, especially in complex mobility settings where many participants (e.g., devices, hosts, tenants, service providers, operators, etc.) are involved.

In a similar manner, Internet of Things (IoT) networks and devices are designed to offer a distributed compute arrangement from a variety of endpoints. IoT devices can be physical or virtualized objects that may communicate on a network, and can include sensors, actuators, and other input/output components, which may be used to collect data or perform actions in a real-world environment. For example, IoT devices can include low-powered endpoint devices that are embedded or attached to everyday things, such as buildings, vehicles, packages, etc., to provide an additional level of artificial sensory perception of those things. In recent years, IoT devices have become more popular and thus applications using these devices have proliferated.

In some examples, an edge environment can include an enterprise edge in which communication with and/or communication within the enterprise edge can be facilitated via wireless and/or wired connectivity. The deployment of various Edge, Fog, MEC, and IoT networks, devices, and services have introduced a number of advanced use cases and scenarios occurring at and towards the edge of the network. However, these advanced use cases have also introduced a number of corresponding technical challenges relating to orchestration, security, processing and network resources, service availability and efficiency, among many other issues. One such challenge is in relation to Edge, Fog, MEC, and IoT networks, devices, and services executing workloads on behalf of endpoint devices.

The present techniques and configurations may be utilized in connection with many aspects of current networking systems, but are provided with reference to Edge Cloud, IoT, Multi-access Edge Computing (MEC), and other distributed computing deployments. The following systems and techniques may be implemented in, or augment, a variety of distributed, virtualized, or managed edge computing systems. These include environments in which network services are implemented or managed using multi-access edge computing (MEC), fourth generation (4G), fifth generation (5G) wireless or next generation network configurations; or in wired network configurations involving fiber, copper, and other connections. Further, aspects of processing by the respective computing components may involve computational elements which are in geographical proximity of a user equipment or other endpoint locations, such as a smartphone, vehicular communication component, IoT device, etc. Further, the presently disclosed techniques may relate to other Edge/MEC/IoT network communication standards and configurations, and other intermediate processing entities and architectures.

Edge computing is a developing paradigm where computing is performed at or closer to the "edge" of a network, typically through the use of a computing platform implemented at base stations, gateways, network routers, or other devices which are much closer to end point devices producing and consuming the data. For example, edge gateway servers may be equipped with pools of memory and storage resources to perform computation in real-time for low latency use-cases (e.g., autonomous driving or video surveillance) for connected client devices. Or as an example, base stations may be augmented with compute and acceleration resources to directly process service workloads for connected user equipment, without further communicating data via backhaul networks. Or as another example, central office network management hardware may be replaced with computing hardware that performs virtualized network functions and offers compute resources for the execution of services and consumer functions for connected devices.

Edge environments include networks and/or portions of networks that are located between a cloud environment and an endpoint environment. Edge environments enable computations of workloads at edges of a network. For example, an endpoint device may request a nearby base station to compute a workload rather than a central server in a cloud environment. Edge environments include edge platforms or edges, which include pools or clusters of memory, storage resources, and/or processing resources. These edges perform computations, such as an execution of a workload, on behalf of other edges and/or edge nodes. Edge environments facilitate connections between producers (e.g., workload executors, edges) and consumers (e.g., other edges, endpoint devices).

Because edges may be closer in proximity to endpoint devices than centralized servers in cloud environments, edges enable computations of workloads with a lower latency (e.g., response time) than cloud environments. Edges may also enable a localized execution of a workload based on geographic locations or network topographies. For example, an endpoint device may require a workload to be executed in a first geographic area, but a centralized server may be located in a second geographic area. The endpoint device can request a workload execution by an edge node located in the first geographic area to comply with corporate or regulatory restrictions. Other policies could drive the execution in the edge node (e.g., energy/power saving, network backhaul traffic reduction).

Examples of workloads to be executed in an edge environment include autonomous driving computations, video surveillance monitoring, machine learning model executions, and real time data analytics. Additional examples of workloads include delivering and/or encoding media streams, measuring advertisement impression rates, object detection in media streams, speech analytics, asset and/or inventory management, and augmented reality processing.

Edge nodes or edges enable both the execution of workloads and a return of a result of an executed workload to endpoint devices with a response time lower than the response time of a server in a cloud environment. For example, if an edge is located closer to an endpoint device on a network than a cloud server, the edge service may respond to workload execution requests from the endpoint device faster than the cloud server. An endpoint device may request an execution of a time-constrained workload from an edge service rather than a cloud server.

In addition, edge nodes enable the distribution and decentralization of workload executions. For example, an endpoint device may request a first workload execution and a second workload execution. In some examples, a cloud server may respond to both workload execution requests. With an edge environment, however, a first edge may execute the first workload execution request, and a second edge may execute the second workload execution request. Further, even with the edge, workload executions can be distributed within an edge. In particular, examples enable trained models to be evaluated within different computational resources and/or appliances of the edge.

Examples disclosed herein enable validation of trained machine learning AI models with edge nodes or edges. Examples disclosed herein can evaluate a trained model for trustworthiness, as well as whether the trained model functions effectively. Furthermore, examples disclosed herein can evaluate an accuracy of a trained model from another computational node (e.g., a different vehicle in a V2X environment of an edge network), which may be part of a same or different edge node.

Examples disclosed herein can be implemented to validate and execute a trained model in an edge environment. According to examples disclosed herein, an attestation verifier requests or determines an attestation score of the model received at a first appliance of an edge network. The attestation score is calculated at a second appliance different from the first appliance. A comparator compares the attestation score to a threshold, and a validator is to validate the model based on the comparison. In turn, the model is executed and/or deployed based on the validation. In some examples, a blockchain verifier is implemented to request a third appliance that is associated with a blockchain attestation of the model to validate the model (e.g., the model is validated by the third appliance in response to the attestation score exceeding the threshold).

In some examples, a model improvement analyzer is implemented to determine whether the model is improving or degrading. In other words, the model can be evaluated whether it is improving or degrading during or subsequent to training thereof. Additionally or alternatively, an authenticator is implemented to authenticate the model, software associated with the model, identifiers associated with the model and/or hardware associated with the model. In some such examples, the model authenticator authenticates signatures of sensors and/or sensor data associated with the model.

In some examples, the aforementioned attestation score is calculated based on a consensus and/or averaging between multiple appliances of the edge environment. In some examples, metrics (e.g., f1 score/confusion matrix, area under curve, logarithmic loss, etc.) regarding validation of a trained AI model are propagated through an edge network, for example. In some examples, a "reputation factor" or trustworthiness for different vehicles/end points of a V2X network and/or infrastructure is employed.

As used herein, the term "appliance" refers to a hardware computational device that is associated with an edge network. As such, the term "appliance" can refer to a stationary device (e.g., a base station, set top computing device, etc.), a mobile device (e.g., a tablet, a mobile phone, etc.) or hardware associated with a vehicle, for example. As used herein, the term "blockchain" refers to any decentralized ledger technology and/or implementation involving multiple different computing devices. As used herein, the term "trained model" refers to an ML/AI model that is at least partially trained. Accordingly, the term "trained model" can refer to a model that is undergoing a training process via a ML process or a model that has completed a training process.

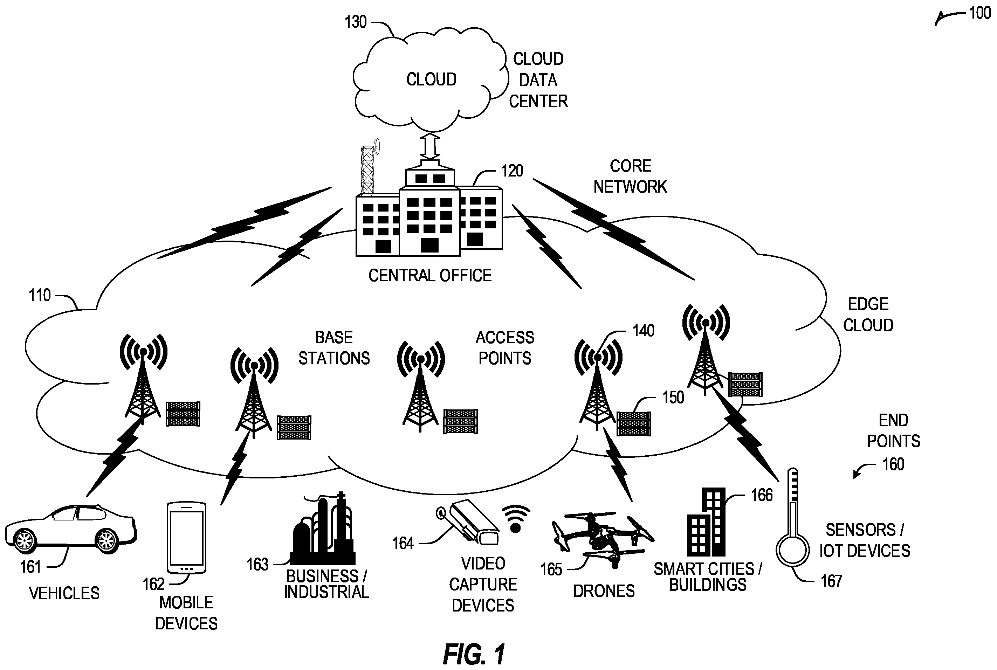

FIG. 1 is a block diagram 100 showing an overview of a configuration for edge computing, which includes a layer of processing referred to in many of the following examples as an "edge cloud". As shown, the edge cloud 110 is co-located at an edge location, such as an access point or base station 140, a local processing hub 150, or a central office 120, and thus may include multiple entities, devices, and equipment instances. The edge cloud 110 is located much closer to the endpoint (consumer and producer) data sources 160 (e.g., autonomous vehicles 161, user equipment 162, business and industrial equipment 163, video capture devices 164, drones 165, smart cities and building devices 166, sensors and IoT devices 167, etc.) than the cloud data center 130. Compute, memory, and storage resources which are offered at the edges in the edge cloud 110 are critical to providing ultra-low latency response times for services and functions used by the endpoint data sources 160 as well as reduce network backhaul traffic from the edge cloud 110 toward cloud data center 130 thus improving energy consumption and overall network usages among other benefits.

Compute, memory, and storage are scarce resources, and generally decrease depending on the edge location (e.g., fewer processing resources being available at consumer endpoint devices, than at a base station, than at a central office). However, the closer that the edge location is to the endpoint (e.g., user equipment (UE)), the more that space and power is often constrained. Thus, edge computing attempts to reduce the amount of resources needed for network services, through the distribution of more resources which are located closer both geographically and in network access time. In this manner, edge computing attempts to bring the compute resources to the workload data where appropriate, or bring the workload data to the compute resources.

The following describes aspects of an edge cloud architecture that covers multiple potential deployments and addresses restrictions that some network operators or service providers may have in their own infrastructures. These include, variation of configurations based on the edge location (because edges at a base station level, for instance, may have more constrained performance and capabilities in a multi-tenant scenario); configurations based on the type of compute, memory, storage, fabric, acceleration, or like resources available to edge locations, tiers of locations, or groups of locations; the service, security, and management and orchestration capabilities; and related objectives to achieve usability and performance of end services. These deployments may accomplish processing in network layers that may be considered as "near edge", "close edge", "local edge", "middle edge", or "far edge" layers, depending on latency, distance, and timing characteristics.

Edge computing is a developing paradigm where computing is performed at or closer to the "edge" of a network, typically through the use of a compute platform (e.g., x86 or ARM compute hardware architecture) implemented at base stations, gateways, network routers, or other devices which are much closer to endpoint devices producing and consuming the data. For example, edge gateway servers may be equipped with pools of memory and storage resources to perform computation in real-time for low latency use-cases (e.g., autonomous driving or video surveillance) for connected client devices. Or as an example, base stations may be augmented with compute and acceleration resources to directly process service workloads for connected user equipment, without further communicating data via backhaul networks. Or as another example, central office network management hardware may be replaced with standardized compute hardware that performs virtualized network functions and offers compute resources for the execution of services and consumer functions for connected devices. Within edge computing networks, there may be scenarios in services which the compute resource will be "moved" to the data, as well as scenarios in which the data will be "moved" to the compute resource. Or as an example, base station compute, acceleration and network resources can provide services in order to scale to workload demands on an as needed basis by activating dormant capacity (subscription, capacity on demand) in order to manage corner cases, emergencies or to provide longevity for deployed resources over a significantly longer implemented lifecycle.

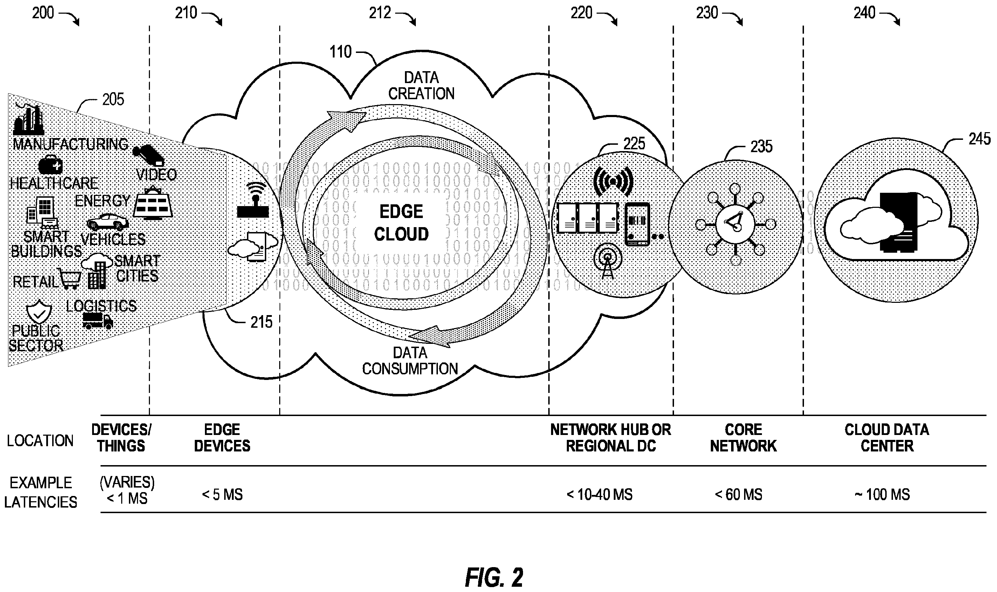

FIG. 2 illustrates operational layers among endpoints, an edge cloud, and cloud computing environments. Specifically, FIG. 2 depicts examples of computational use cases 205, utilizing the edge cloud 110 among multiple illustrative layers of network computing. The layers begin at an endpoint (devices and things) layer 200, which accesses the edge cloud 110 to conduct data creation, analysis, and data consumption activities. The edge cloud 110 may span multiple network layers, such as an edge devices layer 210 having gateways, on-premise servers, or network equipment (nodes 215) located in physically proximate edge systems; a network access layer 220, encompassing base stations, radio processing units, network hubs, regional data centers (DC), or local network equipment (equipment 225); and any equipment, devices, or nodes located therebetween (in layer 212, not illustrated in detail). The network communications within the edge cloud 110 and among the various layers may occur via any number of wired or wireless mediums, including via connectivity architectures and technologies not depicted.

Examples of latency, resulting from network communication distance and processing time constraints, may range from less than a millisecond (ms) when among the endpoint layer 200, under 5 ms at the edge devices layer 210, to even between 10 to 40 ms when communicating with nodes at the network access layer 220. Beyond the edge cloud 110 are core network 230 and cloud data center 240 layers, each with increasing latency (e.g., between 50-60 ms at the core network layer 230, to 100 or more ms at the cloud data center layer). As a result, operations at a core network data center 235 or a cloud data center 245, with latencies of at least 50 to 100 ms or more, will not be able to accomplish many time-critical functions of the use cases 205. Each of these latency values are provided for purposes of illustration and contrast; it will be understood that the use of other access network mediums and technologies may further reduce the latencies. In some examples, respective portions of the network may be categorized as "close edge", "local edge", "near edge", "middle edge", or "far edge" layers, relative to a network source and destination. For instance, from the perspective of the core network data center 235 or a cloud data center 245, a central office or content data network may be considered as being located within a "near edge" layer ("near" to the cloud, having high latency values when communicating with the devices and endpoints of the use cases 205), whereas an access point, base station, on-premise server, or network gateway may be considered as located within a "far edge" layer ("far" from the cloud, having low latency values when communicating with the devices and endpoints of the use cases 205). It will be understood that other categorizations of a particular network layer as constituting a "close", "local", "near", "middle", or "far" edge may be based on latency, distance, number of network hops, or other measurable characteristics, as measured from a source in any of the network layers 200-240.

The various use cases 205 may access resources under usage pressure from incoming streams, due to multiple services utilizing the edge cloud. To achieve results with low latency, the services executed within the edge cloud 110 balance varying requirements in terms of: (a) Priority (throughput or latency) and Quality of Service (QoS) (e.g., traffic for an autonomous car may have higher priority than a temperature sensor in terms of response time requirement; or, a performance sensitivity/bottleneck may exist at a compute/accelerator, memory, storage, or network resource, depending on the application); (b) Reliability and Resiliency (e.g., some input streams need to be acted upon and the traffic routed with mission-critical reliability, where as some other input streams may be tolerate an occasional failure, depending on the application); and (c) Physical constraints (e.g., power, cooling and form-factor).

The end-to-end service view for these use cases involves the concept of a service-flow and is associated with a transaction. The transaction details the overall service requirement for the entity consuming the service, as well as the associated services for the resources, workloads, workflows, and business functional and business level requirements. The services executed with the "terms" described may be managed at each layer in a way to assure real time, and runtime contractual compliance for the transaction during the lifecycle of the service. When a component in the transaction is missing its agreed to SLA, the system as a whole (components in the transaction) may provide the ability to (1) understand the impact of the SLA violation, and (2) augment other components in the system to resume overall transaction SLA, and (3) implement steps to remediate.

Thus, with these variations and service features in mind, edge computing within the edge cloud 110 may provide the ability to serve and respond to multiple applications of the use cases 205 (e.g., object tracking, video surveillance, connected cars, etc.) in real-time or near real-time, and meet ultra-low latency requirements for these multiple applications. These advantages enable a whole new class of applications (Virtual Network Functions (VNFs), Function as a Service (FaaS), Edge as a Service (EaaS), standard processes, etc.), which cannot leverage conventional cloud computing due to latency or other limitations.

However, with the advantages of edge computing comes the following caveats. The devices located at the edge are often resource constrained and therefore there is pressure on usage of edge resources. Typically, this is addressed through the pooling of memory and storage resources for use by multiple users (tenants) and devices. The edge may be power and cooling constrained and therefore the power usage needs to be accounted for by the applications that are consuming the most power. There may be inherent power-performance tradeoffs in these pooled memory resources, as many of them are likely to use emerging memory technologies, where more power requires greater memory bandwidth. Likewise, improved security of hardware and root of trust trusted functions are also required, because edge locations may be unmanned and may even need permissioned access (e.g., when housed in a third-party location). Such issues are magnified in the edge cloud 110 in a multi-tenant, multi-owner, or multi-access setting, where services and applications are requested by many users, especially as network usage dynamically fluctuates and the composition of the multiple stakeholders, use cases, and services changes.

At a more generic level, an edge computing system may be described to encompass any number of deployments at the previously discussed layers operating in the edge cloud 110 (network layers 200-240), which provide coordination from client and distributed computing devices. One or more edge gateway nodes, one or more edge aggregation nodes, and one or more core data centers may be distributed across layers of the network to provide an implementation of the edge computing system by or on behalf of a telecommunication service provider ("telco", or "TSP"), internet-of-things service provider, cloud service provider (CSP), enterprise entity, or any other number of entities. Various implementations and configurations of the edge computing system may be provided dynamically, such as when orchestrated to meet service objectives.

Consistent with the examples provided herein, a client compute node may be embodied as any type of endpoint component, device, appliance, or other thing capable of communicating as a producer or consumer of data. Further, the label "node" or "device" as used in the edge computing system does not necessarily mean that such node or device operates in a client or agent/minion/follower role; rather, any of the nodes or devices in the edge computing system refer to individual entities, nodes, or subsystems which include discrete or connected hardware or software configurations to facilitate or use the edge cloud 110.

As such, the edge cloud 110 is formed from network components and functional features operated by and within edge gateway nodes, edge aggregation nodes, or other edge compute nodes among network layers 210-230. The edge cloud 110 thus may be embodied as any type of network that provides edge computing and/or storage resources which are proximately located to radio access network (RAN) capable endpoint devices (e.g., mobile computing devices, IoT devices, smart devices, etc.), which are discussed herein. In other words, the edge cloud 110 may be envisioned as an "edge" which connects the endpoint devices and traditional network access points that serve as an ingress point into service provider core networks, including mobile carrier networks (e.g., Global System for Mobile Communications (GSM) networks, Long-Term Evolution (LTE) networks, 5G/6G networks, etc.), while also providing storage and/or compute capabilities. Other types and forms of network access (e.g., Wi-Fi, long-range wireless, wired networks including optical networks) may also be utilized in place of or in combination with such 3GPP carrier networks.

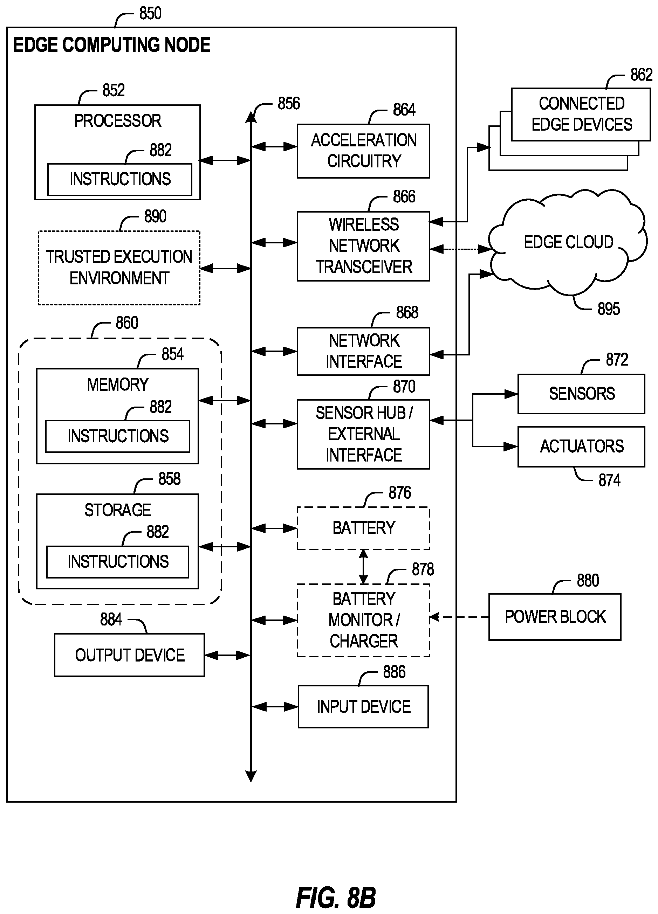

The network components of the edge cloud 110 may be servers, multi-tenant servers, appliance computing devices, and/or any other type of computing devices. For example, the edge cloud 110 may include an appliance computing device that is a self-contained electronic device including a housing, a chassis, a case or a shell. In some circumstances, the housing may be dimensioned for portability such that it can be carried by a human and/or shipped. Example housings may include materials that form one or more exterior surfaces that partially or fully protect contents of the appliance, in which protection may include weather protection, hazardous environment protection (e.g., EMI, vibration, extreme temperatures), and/or enable submergibility. Example housings may include power circuitry to provide power for stationary and/or portable implementations, such as AC power inputs, DC power inputs, AC/DC or DC/AC converter(s), power regulators, transformers, charging circuitry, batteries, wired inputs and/or wireless power inputs. Example housings and/or surfaces thereof may include or connect to mounting hardware to enable attachment to structures such as buildings, telecommunication structures (e.g., poles, antenna structures, etc.) and/or racks (e.g., server racks, blade mounts, etc.). Example housings and/or surfaces thereof may support one or more sensors (e.g., temperature sensors, vibration sensors, light sensors, acoustic sensors, capacitive sensors, proximity sensors, etc.). One or more such sensors may be contained in, carried by, or otherwise embedded in the surface and/or mounted to the surface of the appliance. Example housings and/or surfaces thereof may support mechanical connectivity, such as propulsion hardware (e.g., wheels, propellers, etc.) and/or articulating hardware (e.g., robot arms, pivotable appendages, etc.). In some circumstances, the sensors may include any type of input devices such as user interface hardware (e.g., buttons, switches, dials, sliders, etc.). In some circumstances, example housings include output devices contained in, carried by, embedded therein and/or attached thereto. Output devices may include displays, touchscreens, lights, LEDs, speakers, I/O ports (e.g., USB), etc. In some circumstances, edge devices are devices presented in the network for a specific purpose (e.g., a traffic light), but may have processing and/or other capacities that may be utilized for other purposes. Such edge devices may be independent from other networked devices and may be provided with a housing having a form factor suitable for its primary purpose; yet be available for other compute tasks that do not interfere with its primary task. Edge devices include Internet of Things devices. The appliance computing device may include hardware and software components to manage local issues such as device temperature, vibration, resource utilization, updates, power issues, physical and network security, etc. Example hardware for implementing an appliance computing device is described in conjunction with FIG. 8B. The edge cloud 110 may also include one or more servers and/or one or more multi-tenant servers. Such a server may include an operating system and implement a virtual computing environment. A virtual computing environment may include a hypervisor managing (e.g., spawning, deploying, destroying, etc.) one or more virtual machines, one or more containers, etc. Such virtual computing environments provide an execution environment in which one or more applications and/or other software, code or scripts may execute while being isolated from one or more other applications, software, code or scripts.

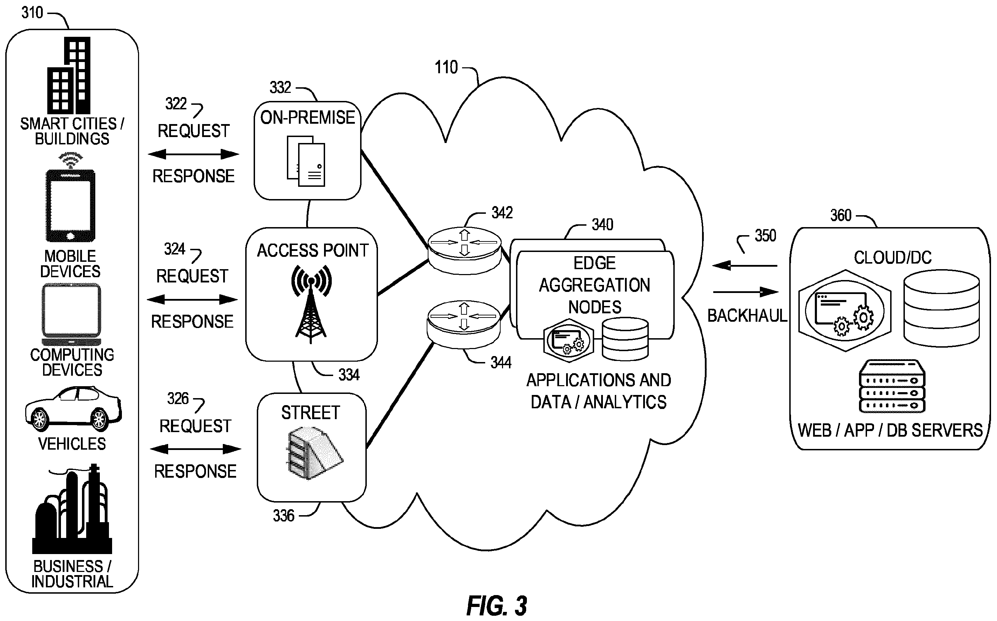

In FIG. 3, various client endpoints 310 (in the form of mobile devices, computers, autonomous vehicles, business computing equipment, industrial processing equipment) exchange requests and responses that are specific to the type of endpoint network aggregation. For instance, client endpoints 310 may obtain network access via a wired broadband network, by exchanging requests and responses 322 through an on-premise network system 332. Some client endpoints 310, such as mobile computing devices, may obtain network access via a wireless broadband network, by exchanging requests and responses 324 through an access point (e.g., cellular network tower) 334. Some client endpoints 310, such as autonomous vehicles may obtain network access for requests and responses 326 via a wireless vehicular network through a street-located network system 336. However, regardless of the type of network access, the TSP may deploy aggregation points 342, 344 within the edge cloud 110 to aggregate traffic and requests. Thus, within the edge cloud 110, the TSP may deploy various compute and storage resources, such as at edge aggregation nodes 340, to provide requested content. The edge aggregation nodes 340 and other systems of the edge cloud 110 are connected to a cloud or data center 360, which uses a backhaul network 350 to fulfill higher-latency requests from a cloud/data center for websites, applications, database servers, etc. Additional or consolidated instances of the edge aggregation nodes 340 and the aggregation points 342, 344, including those deployed on a single server framework, may also be present within the edge cloud 110 or other areas of the TSP infrastructure.

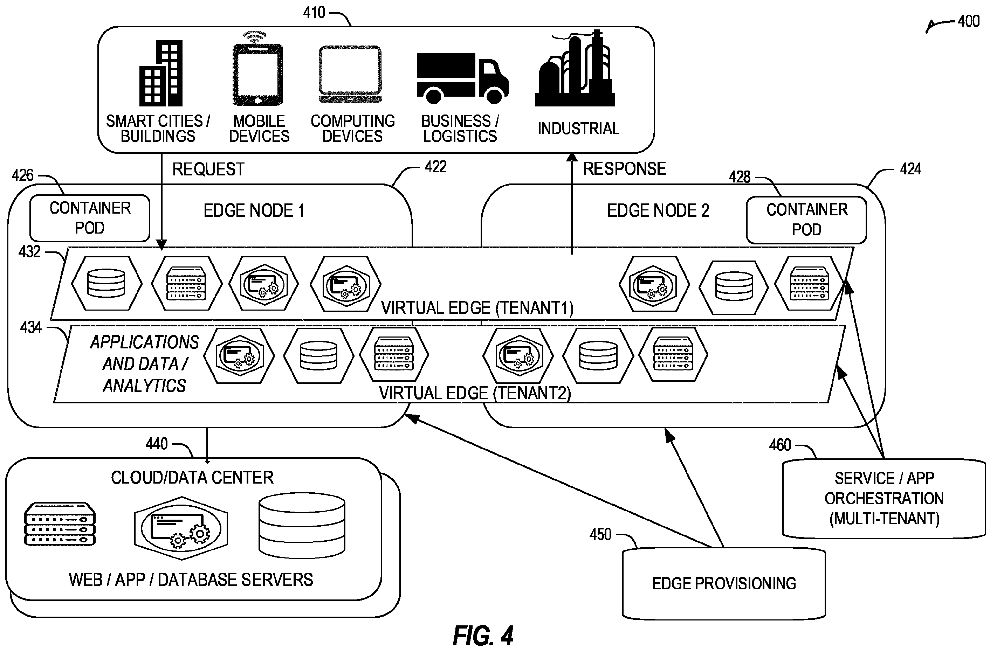

FIG. 4 illustrates deployment and orchestration for virtualized and container-based edge configurations across an edge computing system operated among multiple edge nodes and multiple tenants (e.g., users, providers) which use such edge nodes. Specifically, FIG. 4 depicts coordination of a first edge node 422 and a second edge node 424 in an edge computing system 400, to fulfill requests and responses for various client endpoints 410 (e.g., smart cities / building systems, mobile devices, computing devices, business/logistics systems, industrial systems, etc.), which access various virtual edge instances. Here, the virtual edge instances 432, 434 provide edge compute capabilities and processing in an edge cloud, with access to a cloud/data center 440 for higher-latency requests for websites, applications, database servers, etc. However, the edge cloud enables coordination of processing among multiple edge nodes for multiple tenants or entities.

In the example of FIG. 4, these virtual edge instances include: a first virtual edge 432, offered to a first tenant (Tenant 1), which offers a first combination of edge storage, computing, and services; and a second virtual edge 434, offering a second combination of edge storage, computing, and services. The virtual edge instances 432, 434 are distributed among the edge nodes 422, 424, and may include scenarios in which a request and response are fulfilled from the same or different edge nodes. The configuration of the edge nodes 422, 424 to operate in a distributed yet coordinated fashion occurs based on edge provisioning functions 450. The functionality of the edge nodes 422, 424 to provide coordinated operation for applications and services, among multiple tenants, occurs based on orchestration functions 460.

It should be understood that some of the devices in 410 are multi-tenant devices where Tenant 1 may function within a tenant1 'slice' while a Tenant 2 may function within a tenant2 slice (and, in further examples, additional or sub-tenants may exist; and each tenant may even be specifically entitled and transactionally tied to a specific set of features all the way day to specific hardware features). A trusted multi-tenant device may further contain a tenant specific cryptographic key such that the combination of key and slice may be considered a "root of trust" (RoT) or tenant specific RoT. A RoT may further be computed dynamically composed using a DICE (Device Identity Composition Engine) architecture such that a single DICE hardware building block may be used to construct layered trusted computing base contexts for layering of device capabilities (such as a Field Programmable Gate Array (FPGA)). The RoT may further be used for a trusted computing context to enable a "fan-out" that is useful for supporting multi-tenancy. Within a multi-tenant environment, the respective edge nodes 422, 424 may operate as security feature enforcement points for local resources allocated to multiple tenants per node. Additionally, tenant runtime and application execution (e.g., in instances 432, 434) may serve as an enforcement point for a security feature that creates a virtual edge abstraction of resources spanning potentially multiple physical hosting platforms. Finally, the orchestration functions 460 at an orchestration entity may operate as a security feature enforcement point for marshalling resources along tenant boundaries.

Edge computing nodes may partition resources (memory, central processing unit (CPU), graphics processing unit (GPU), interrupt controller, input/output (I/O) controller, memory controller, bus controller, etc.) where respective partitioning may contain a RoT capability and where fan-out and layering according to a DICE model may further be applied to Edge Nodes. Cloud computing nodes often use containers, FaaS engines, Servlets, servers, or other computation abstraction that may be partitioned according to a DICE layering and fan-out structure to support a RoT context for each. Accordingly, the respective RoTs spanning devices 410, 422, and 440 may coordinate the establishment of a distributed trusted computing base (DTCB) such that a tenant-specific virtual trusted secure channel linking all elements end to end can be established.

Further, it will be understood that a container may have data or workload specific keys protecting its content from a previous edge node. As part of migration of a container, a pod controller at a source edge node may obtain a migration key from a target edge node pod controller where the migration key is used to wrap the container-specific keys. When the container/pod is migrated to the target edge node, the unwrapping key is exposed to the pod controller that then decrypts the wrapped keys. The keys may now be used to perform operations on container specific data. The migration functions may be gated by properly attested edge nodes and pod managers (as described above).

In further examples, an edge computing system is extended to provide for orchestration of multiple applications through the use of containers (a contained, deployable unit of software that provides code and needed dependencies) in a multi-owner, multi-tenant environment. A multi-tenant orchestrator may be used to perform key management, trust anchor management, and other security functions related to the provisioning and lifecycle of the trusted 'slice' concept in FIG. 4. For instance, an edge computing system may be configured to fulfill requests and responses for various client endpoints from multiple virtual edge instances (and, from a cloud or remote data center). The use of these virtual edge instances may support multiple tenants and multiple applications (e.g., augmented reality (AR)/virtual reality (VR), enterprise applications, content delivery, gaming, compute offload) simultaneously. Further, there may be multiple types of applications within the virtual edge instances (e.g., normal applications; latency sensitive applications; latency-critical applications; user plane applications; networking applications; etc.). The virtual edge instances may also be spanned across systems of multiple owners at different geographic locations (or, respective computing systems and resources which are co-owned or co-managed by multiple owners).

For instance, each edge node 422, 424 may implement the use of containers, such as with the use of a container "pod" 426, 428 providing a group of one or more containers. In a setting that uses one or more container pods, a pod controller or orchestrator is responsible for local control and orchestration of the containers in the pod. Various edge node resources (e.g., storage, compute, services, depicted with hexagons) provided for the respective edge slices 432, 434 are partitioned according to the needs of each container.

With the use of container pods, a pod controller oversees the partitioning and allocation of containers and resources. The pod controller receives instructions from an orchestrator (e.g., orchestrator 460) that instructs the controller on how best to partition physical resources and for what duration, such as by receiving key performance indicator (KPI) targets based on SLA contracts. The pod controller determines which container requires which resources and for how long in order to complete the workload and satisfy the SLA. The pod controller also manages container lifecycle operations such as: creating the container, provisioning it with resources and applications, coordinating intermediate results between multiple containers working on a distributed application together, dismantling containers when workload completes, and the like. Additionally, a pod controller may serve a security role that prevents assignment of resources until the right tenant authenticates or prevents provisioning of data or a workload to a container until an attestation result is satisfied.

Also, with the use of container pods, tenant boundaries can still exist but in the context of each pod of containers. If each tenant specific pod has a tenant specific pod controller, there will be a shared pod controller that consolidates resource allocation requests to avoid typical resource starvation situations. Further controls may be provided to ensure attestation and trustworthiness of the pod and pod controller. For instance, the orchestrator 460 may provision an attestation verification policy to local pod controllers that perform attestation verification. If an attestation satisfies a policy for a first tenant pod controller but not a second tenant pod controller, then the second pod could be migrated to a different edge node that does satisfy it. Alternatively, the first pod may be allowed to execute and a different shared pod controller is installed and invoked prior to the second pod executing.

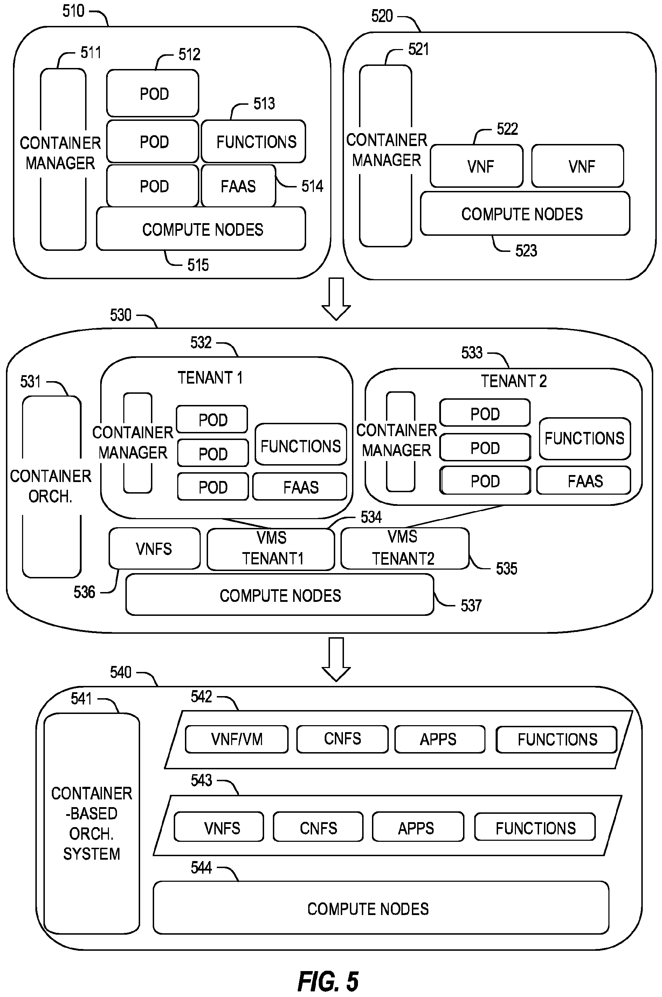

FIG. 5 illustrates additional compute arrangements deploying containers in an edge computing system. As a simplified example, system arrangements 510, 520 depict settings in which a pod controller (e.g., container managers 511, 521, and container orchestrator 531) is adapted to launch containerized pods, functions, and functions-as-a-service instances through execution via compute nodes (515 in arrangement 510), or to separately execute containerized virtualized network functions through execution via compute nodes (523 in arrangement 520). This arrangement is adapted for use of multiple tenants in system arrangement 530 (using compute nodes 537), where containerized pods (e.g., pods 512), functions (e.g., functions 513, VNFs 522, 536), and functions-as-a-service instances (e.g., FaaS instance 514) are launched within virtual machines (e.g., VMs 534, 535 for tenants 532, 533) specific to respective tenants (aside the execution of virtualized network functions). This arrangement is further adapted for use in system arrangement 540, which provides containers 542, 543, or execution of the various functions, applications, and functions on compute nodes 544, as coordinated by a container-based orchestration system 541.

The system arrangements of depicted in FIG. 5 provides an architecture that treats VMs, Containers, and Functions equally in terms of application composition (and resulting applications are combinations of these three ingredients). Each ingredient may involve use of one or more accelerator (FPGA, ASIC) components as a local backend. In this manner, applications can be split across multiple edge owners, coordinated by an orchestrator.

In the context of FIG. 5, the pod controller/container manager, container orchestrator, and individual nodes may provide a security enforcement point. However, tenant isolation may be orchestrated where the resources allocated to a tenant are distinct from resources allocated to a second tenant, but edge owners cooperate to ensure resource allocations are not shared across tenant boundaries. Or, resource allocations could be isolated across tenant boundaries, as tenants could allow "use" via a subscription or transaction/contract basis. In these contexts, virtualization, containerization, enclaves and hardware partitioning schemes may be used by edge owners to enforce tenancy. Other isolation environments may include: bare metal (dedicated) equipment, virtual machines, containers, virtual machines on containers, or combinations thereof.

In further examples, aspects of software-defined or controlled silicon hardware, and other configurable hardware, may integrate with the applications, functions, and services an edge computing system. Software defined silicon (SDSi) may be used to ensure the ability for some resource or hardware ingredient to fulfill a contract or service level agreement, based on the ingredient's ability to remediate a portion of itself or the workload (e.g., by an upgrade, reconfiguration, or provision of new features within the hardware configuration itself).

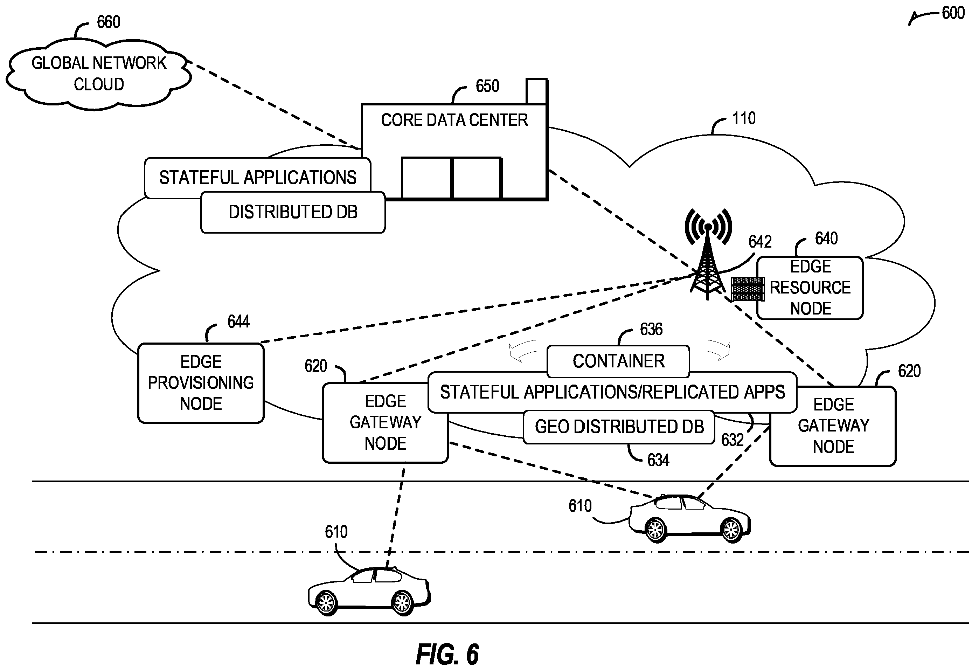

It should be appreciated that the edge computing systems and arrangements discussed herein may be applicable in various solutions, services, and/or use cases involving mobility. As an example, FIG. 6 shows a simplified vehicle compute and communication use case involving mobile access to applications in an edge computing system 600 that implements an edge cloud 110. In this use case, respective client compute nodes 610 may be embodied as in-vehicle compute systems (e.g., in-vehicle navigation and/or infotainment systems) located in corresponding vehicles which communicate with the edge gateway nodes 620 during traversal of a roadway. For instance, the edge gateway nodes 620 may be located in a roadside cabinet or other enclosure built-into a structure having other, separate, mechanical utility, which may be placed along the roadway, at intersections of the roadway, or other locations near the roadway. As respective vehicles traverse along the roadway, the connection between its client compute node 610 and a particular edge gateway device 620 may propagate so as to maintain a consistent connection and context for the client compute node 610. Likewise, mobile edge nodes may aggregate at the high priority services or according to the throughput or latency resolution requirements for the underlying service(s) (e.g., in the case of drones). The respective edge gateway devices 620 include an amount of processing and storage capabilities and, as such, some processing and/or storage of data for the client compute nodes 610 may be performed on one or more of the edge gateway devices 620.

The edge gateway devices 620 may communicate with one or more edge resource nodes 640, which are illustratively embodied as compute servers, appliances or components located at or in a communication base station 642 (e.g., a base station of a cellular network). As discussed above, the respective edge resource nodes 640 include an amount of processing and storage capabilities and, as such, some processing and/or storage of data for the client compute nodes 610 may be performed on the edge resource node 640. For example, the processing of data that is less urgent or important may be performed by the edge resource node 640, while the processing of data that is of a higher urgency or importance may be performed by the edge gateway devices 620 (depending on, for example, the capabilities of each component, or information in the request indicating urgency or importance). Based on data access, data location or latency, work may continue on edge resource nodes when the processing priorities change during the processing activity. Likewise, configurable systems or hardware resources themselves can be activated (e.g., through a local orchestrator) to provide additional resources to meet the new demand (e.g., adapt the compute resources to the workload data).

The edge resource node(s) 640 also communicate with the core data center 650, which may include compute servers, appliances, and/or other components located in a central location (e.g., a central office of a cellular communication network). The core data center 650 may provide a gateway to the global network cloud 660 (e.g., the Internet) for the edge cloud 110 operations formed by the edge resource node(s) 640 and the edge gateway devices 620. Additionally, in some examples, the core data center 650 may include an amount of processing and storage capabilities and, as such, some processing and/or storage of data for the client compute devices may be performed on the core data center 650 (e.g., processing of low urgency or importance, or high complexity).

The edge gateway nodes 620 or the edge resource nodes 640 may offer the use of stateful applications 632 and a geographic distributed database 634. Although the applications 632 and database 634 are illustrated as being horizontally distributed at a layer of the edge cloud 110, it will be understood that resources, services, or other components of the application may be vertically distributed throughout the edge cloud (including, part of the application executed at the client compute node 610, other parts at the edge gateway nodes 620 or the edge resource nodes 640, etc.). Additionally, as stated previously, there can be peer relationships at any level to meet service objectives and obligations. Further, the data for a specific client or application can move from edge to edge based on changing conditions (e.g., based on acceleration resource availability, following the car movement, etc.). For instance, based on the "rate of decay" of access, prediction can be made to identify the next owner to continue, or when the data or computational access will no longer be viable. These and other services may be utilized to complete the work that is needed to keep the transaction compliant and lossless.

In further scenarios, a container 636 (or pod of containers) may be flexibly migrated from an edge node 620 to other edge nodes (e.g., 620, 640, etc.) such that the container with an application and workload does not need to be reconstituted, re-compiled, re-interpreted in order for migration to work. However, in such settings, there may be some remedial or "swizzling" translation operations applied. For example, the physical hardware at node 640 may differ from edge gateway node 620 and therefore, the hardware abstraction layer (HAL) that makes up the bottom edge of the container will be re-mapped to the physical layer of the target edge node. This may involve some form of late-binding technique, such as binary translation of the HAL from the container native format to the physical hardware format, or may involve mapping interfaces and operations. A pod controller may be used to drive the interface mapping as part of the container lifecycle, which includes migration to/from different hardware environments.

The scenarios encompassed by FIG. 6 may utilize various types of mobile edge nodes, such as an edge node hosted in a vehicle (car/truck/tram/train) or other mobile unit, as the edge node will move to other geographic locations along the platform hosting it. With vehicle-to-vehicle communications, individual vehicles may even act as network edge nodes for other cars, (e.g., to perform caching, reporting, data aggregation, etc.). Thus, it will be understood that the application components provided in various edge nodes may be distributed in static or mobile settings, including coordination between some functions or operations at individual endpoint devices or the edge gateway nodes 620, some others at the edge resource node 640, and others in the core data center 650 or global network cloud 660.

In further configurations, the edge computing system may implement FaaS computing capabilities through the use of respective executable applications and functions. In an example, a developer writes function code (e.g., "computer code" herein) representing one or more computer functions, and the function code is uploaded to a FaaS platform provided by, for example, an edge node or data center. A trigger such as, for example, a service use case or an edge processing event, initiates the execution of the function code with the FaaS platform.

In an example of FaaS, a container is used to provide an environment in which function code (e.g., an application which may be provided by a third party) is executed. The container may be any isolated-execution entity such as a process, a Docker or Kubernetes container, a virtual machine, etc. Within the edge computing system, various datacenter, edge, and endpoint (including mobile) devices are used to "spin up" functions (e.g., activate and/or allocate function actions) that are scaled on demand. The function code gets executed on the physical infrastructure (e.g., edge computing node) device and underlying virtualized containers. Finally, container is "spun down" (e.g., deactivated and/or deallocated) on the infrastructure in response to the execution being completed.

Further aspects of FaaS may enable deployment of edge functions in a service fashion, including a support of respective functions that support edge computing as a service (Edge-as-a-Service or "EaaS"). Additional features of FaaS may include: a granular billing component that enables customers (e.g., computer code developers) to pay only when their code gets executed; common data storage to store data for reuse by one or more functions; orchestration and management among individual functions; function execution management, parallelism, and consolidation; management of container and function memory spaces; coordination of acceleration resources available for functions; and distribution of functions between containers (including "warm" containers, already deployed or operating, versus "cold" which require initialization, deployment, or configuration).

The edge computing system 600 can include or be in communication with an edge provisioning node 644. The edge provisioning node 644 can distribute software such as the example computer readable instructions 882 of FIG. 8B, to various receiving parties for implementing any of the methods described herein. The example edge provisioning node 644 may be implemented by any computer server, home server, content delivery network, virtual server, software distribution system, central facility, storage device, storage node, data facility, cloud service, etc., capable of storing and/or transmitting software instructions (e.g., code, scripts, executable binaries, containers, packages, compressed files, and/or derivatives thereof) to other computing devices. Component(s) of the example edge provisioning node 644 may be located in a cloud, in a local area network, in an edge network, in a wide area network, on the Internet, and/or any other location communicatively coupled with the receiving party(ies). The receiving parties may be customers, clients, associates, users, etc. of the entity owning and/or operating the edge provisioning node 644. For example, the entity that owns and/or operates the edge provisioning node 644 may be a developer, a seller, and/or a licensor (or a customer and/or consumer thereof) of software instructions such as the example computer readable instructions 882 of FIG. 8B. The receiving parties may be consumers, service providers, users, retailers, OEMs, etc., who purchase and/or license the software instructions for use and/or re-sale and/or sub-licensing.

In an example, edge provisioning node 644 includes one or more servers and one or more storage devices. The storage devices host computer readable instructions such as the example computer readable instructions 882 of FIG. 8B, as described below. Similarly to edge gateway devices 620 described above, the one or more servers of the edge provisioning node 644 are in communication with a base station 642 or other network communication entity. In some examples, the one or more servers are responsive to requests to transmit the software instructions to a requesting party as part of a commercial transaction. Payment for the delivery, sale, and/or license of the software instructions may be handled by the one or more servers of the software distribution platform and/or via a third-party payment entity. The servers enable purchasers and/or licensors to download the computer readable instructions 882 from the edge provisioning node 644. For example, the software instructions, which may correspond to the example computer readable instructions 882 of FIG. 8B, may be downloaded to the example processor platform/s, which is to execute the computer readable instructions 882 to implement the methods described herein.

In some examples, the processor platform(s) that execute the computer readable instructions 882 can be physically located in different geographic locations, legal jurisdictions, etc. In some examples, one or more servers of the edge provisioning node 644 periodically offer, transmit, and/or force updates to the software instructions (e.g., the example computer readable instructions 882 of FIG. 8B) to ensure improvements, patches, updates, etc. are distributed and applied to the software instructions implemented at the end user devices. In some examples, different components of the computer readable instructions 882 can be distributed from different sources and/or to different processor platforms; for example, different libraries, plug-ins, components, and other types of compute modules, whether compiled or interpreted, can be distributed from different sources and/or to different processor platforms. For example, a portion of the software instructions (e.g., a script that is not, in itself, executable) may be distributed from a first source while an interpreter (capable of executing the script) may be distributed from a second source.

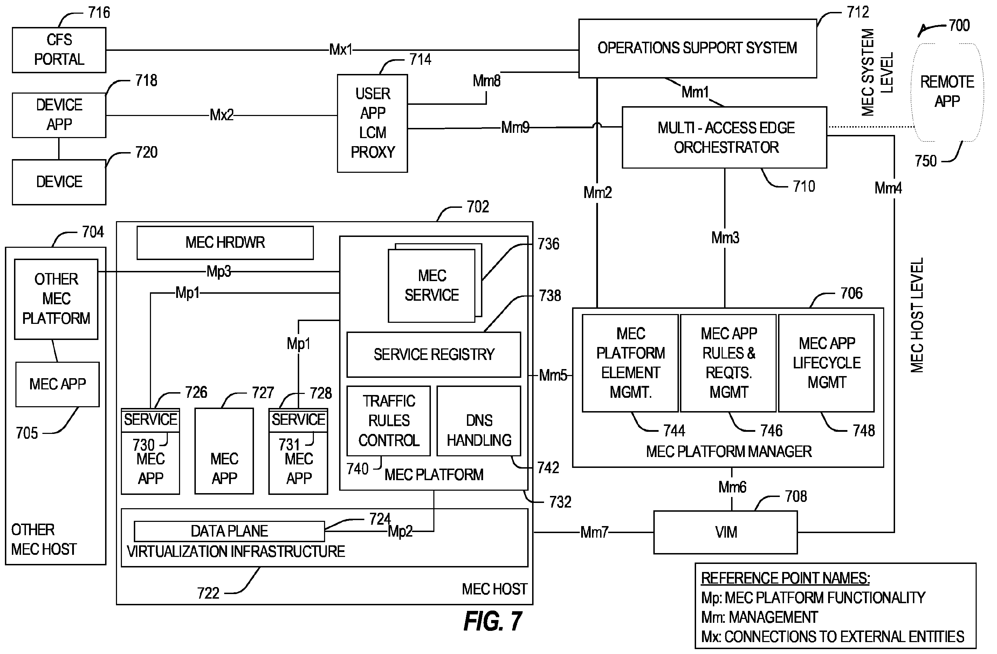

FIG. 7 illustrates a mobile edge system reference architecture (or MEC architecture) 700, such as is indicated by ETSI MEC specifications. FIG. 7 specifically illustrates a MEC architecture 700 with MEC hosts 702 and 704 providing functionalities in accordance with the ETSI GS MEC-003 specification. In some aspects, enhancements to the MEC platform 632 and the MEC platform manager 706 may be used for providing specific computing functions within the MEC architecture 700. Examples disclosed herein can be implemented in the MEC architecture 700 by enabling trained models to be validated and distributed therethrough.

Referring to FIG. 7, the MEC network architecture 700 can include MEC hosts 702 and 704, a virtualization infrastructure manager (VIM) 708, an MEC platform manager 706, an MEC orchestrator 710, an operations support system 712, a user app proxy 714, a UE app 718 running on UE 720, and CFS portal 716. The MEC host 702 can include a MEC platform 732 with filtering rules control component 740, a DNS handling component 742, a service registry 738, and MEC services 736. The MEC services 736 can include at least one scheduler, which can be used to select resources for instantiating MEC apps (or NFVs) 726, 727, and 728 upon virtualization infrastructure 722. The MEC apps 726 and 728 can be configured to provide services 730 and 731, which can include processing network communications traffic of different types associated with one or more wireless connections (e.g., connections to one or more RAN or telecom-core network entities). The MEC app 705 instantiated within MEC host 704 can be similar to the MEC apps 726-7728 instantiated within MEC host 702. The virtualization infrastructure 722 includes a data plane 724 coupled to the MEC platform via an MP2 interface. Additional interfaces between various network entities of the MEC architecture 700 are illustrated in FIG. 7.

The MEC platform manager 706 can include MEC platform element management component 744, MEC app rules and requirements management component 746, and MEC app lifecycle management component 748. The various entities within the MEC architecture 700 can perform functionalities as disclosed by the ETSI GS MEC-003 specification.

In some aspects, the remote application (or app) 750 is configured to communicate with the MEC host 702 (e.g., with the MEC apps 726-7728) via the MEC orchestrator 710 and the MEC platform manager 706.

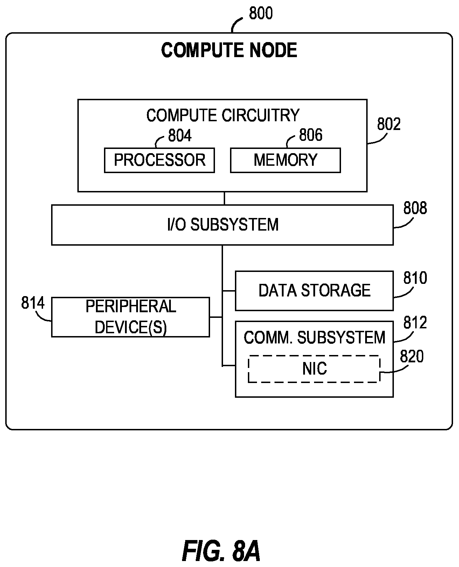

In further examples, any of the compute nodes or devices discussed with reference to the present edge computing systems and environment may be fulfilled based on the components depicted in FIGS. 8A and 8B. Respective edge compute nodes may be embodied as a type of device, appliance, computer, or other "thing" capable of communicating with other edge, networking, or endpoint components. For example, an edge compute device may be embodied as a personal computer, server, smartphone, a mobile compute device, a smart appliance, an in-vehicle compute system (e.g., a navigation system), a self-contained device having an outer case, shell, etc., or other device or system capable of performing the described functions.

In the simplified example depicted in FIG. 8A, an edge compute node 800 includes a compute engine (also referred to herein as "compute circuitry") 802, an input/output (I/O) subsystem 808, data storage 810, a communication circuitry subsystem 812, and, optionally, one or more peripheral devices 814. In other examples, respective compute devices may include other or additional components, such as those typically found in a computer (e.g., a display, peripheral devices, etc.). Additionally, in some examples, one or more of the illustrative components may be incorporated in, or otherwise form a portion of, another component.

The compute node 800 may be embodied as any type of engine, device, or collection of devices capable of performing various compute functions. In some examples, the compute node 800 may be embodied as a single device such as an integrated circuit, an embedded system, a field-programmable gate array (FPGA), a system-on-a-chip (SOC), or other integrated system or device. In the illustrative example, the compute node 800 includes or is embodied as a processor 804 and a memory 806. The processor 804 may be embodied as any type of processor capable of performing the functions described herein (e.g., executing an application). For example, the processor 804 may be embodied as a multi-core processor(s), a microcontroller, a processing unit, a specialized or special purpose processing unit, or other processor or processing/controlling circuit.

In some examples, the processor 804 may be embodied as, include, or be coupled to an FPGA, an application specific integrated circuit (ASIC), reconfigurable hardware or hardware circuitry, or other specialized hardware to facilitate performance of the functions described herein. Also in some examples, the processor 704 may be embodied as a specialized x-processing unit (xPU) also known as a data processing unit (DPU), infrastructure processing unit (IPU), or network processing unit (NPU). Such an xPU may be embodied as a standalone circuit or circuit package, integrated within an SOC, or integrated with networking circuitry (e.g., in a SmartNIC, or enhanced SmartNIC), acceleration circuitry, storage devices, or AI hardware (e.g., GPUs or programmed FPGAs). Such an xPU may be designed to receive programming to process one or more data streams and perform specific tasks and actions for the data streams (such as hosting microservices, performing service management or orchestration, organizing or managing server or data center hardware, managing service meshes, or collecting and distributing telemetry), outside of the CPU or general purpose processing hardware. However, it will be understood that a xPU, a SOC, a CPU, and other variations of the processor 804 may work in coordination with each other to execute many types of operations and instructions within and on behalf of the compute node 800.

The memory 806 may be embodied as any type of volatile (e.g., dynamic random access memory (DRAM), etc.) or non-volatile memory or data storage capable of performing the functions described herein. Volatile memory may be a storage medium that requires power to maintain the state of data stored by the medium. Non-limiting examples of volatile memory may include various types of random access memory (RAM), such as DRAM or static random access memory (SRAM). One particular type of DRAM that may be used in a memory module is synchronous dynamic random access memory (SDRAM).

In an example, the memory device is a block addressable memory device, such as those based on NAND or NOR technologies. A memory device may also include a three dimensional crosspoint memory device (e.g., Intel^{®} 3D XPoint^{™} memory), or other byte addressable write-in-place nonvolatile memory devices. The memory device may refer to the die itself and/or to a packaged memory product. In some examples, 3D crosspoint memory (e.g., Intel^{®} 3D XPoint^{™} memory) may comprise a transistor-less stackable cross point architecture in which memory cells sit at the intersection of word lines and bit lines and are individually addressable and in which bit storage is based on a change in bulk resistance. In some examples, all or a portion of the memory 806 may be integrated into the processor 804. The memory 806 may store various software and data used during operation such as one or more applications, data operated on by the application(s), libraries, and drivers.

The compute circuitry 802 is communicatively coupled to other components of the compute node 800 via the I/O subsystem 808, which may be embodied as circuitry and/or components to facilitate input/output operations with the compute circuitry 802 (e.g., with the processor 804 and/or the main memory 806) and other components of the compute circuitry 802. For example, the I/O subsystem 808 may be embodied as, or otherwise include, memory controller hubs, input/output control hubs, integrated sensor hubs, firmware devices, communication links (e.g., point-to-point links, bus links, wires, cables, light guides, printed circuit board traces, etc.), and/or other components and subsystems to facilitate the input/output operations. In some examples, the I/O subsystem 808 may form a portion of a system-on-a-chip (SoC) and be incorporated, along with one or more of the processor 804, the memory 806, and other components of the compute circuitry 802, into the compute circuitry 802.

The one or more illustrative data storage devices 810 may be embodied as any type of devices configured for short-term or long-term storage of data such as, for example, memory devices and circuits, memory cards, hard disk drives, solid-state drives, or other data storage devices. Individual data storage devices 810 may include a system partition that stores data and firmware code for the data storage device 810. Individual data storage devices 810 may also include one or more operating system partitions that store data files and executables for operating systems depending on, for example, the type of compute node 800.

The communication circuitry 812 may be embodied as any communication circuit, device, or collection thereof, capable of enabling communications over a network between the compute circuitry 802 and another compute device (e.g., an edge gateway of an implementing edge computing system). The communication circuitry 812 may be configured to use any one or more communication technology (e.g., wired or wireless communications) and associated protocols (e.g., a cellular networking protocol such a 3GPP 4G or 5G standard, a wireless local area network protocol such as IEEE 802.11/Wi-Fi^{®}, a wireless wide area network protocol, Ethernet, Bluetooth^{®}, Bluetooth Low Energy, a IoT protocol such as IEEE 802.15.4 or ZigBee^{®}, low-power wide-area network (LPWAN) or low-power wide-area (LPWA) protocols, etc.) to effect such communication.

The illustrative communication circuitry 812 includes a network interface controller (NIC) 820, which may also be referred to as a host fabric interface (HFI). The NIC 820 may be embodied as one or more add-in-boards, daughter cards, network interface cards, controller chips, chipsets, or other devices that may be used by the compute node 800 to connect with another compute device (e.g., an edge gateway node). In some examples, the NIC 820 may be embodied as part of a system-on-a-chip (SoC) that includes one or more processors, or included on a multichip package that also contains one or more processors. In some examples, the NIC 820 may include a local processor (not shown) and/or a local memory (not shown) that are both local to the NIC 820. In such examples, the local processor of the NIC 820 may be capable of performing one or more of the functions of the compute circuitry 802 described herein. Additionally, or alternatively, in such examples, the local memory of the NIC 820 may be integrated into one or more components of the client compute node at the board level, socket level, chip level, and/or other levels.

Additionally, in some examples, a respective compute node 800 may include one or more peripheral devices 814. Such peripheral devices 814 may include any type of peripheral device found in a compute device or server such as audio input devices, a display, other input/output devices, interface devices, and/or other peripheral devices, depending on the particular type of the compute node 800. In further examples, the compute node 800 may be embodied by a respective edge compute node (whether a client, gateway, or aggregation node) in an edge computing system or like forms of appliances, computers, subsystems, circuitry, or other components.

In a more detailed example, FIG. 8B illustrates a block diagram of an example of components that may be present in an edge computing node 850 for implementing the techniques (e.g., operations, processes, methods, and methodologies) described herein. This edge computing node 850 provides a closer view of the respective components of node 800 when implemented as or as part of a computing device (e.g., as a mobile device, a base station, server, gateway, etc.). The edge computing node 850 may include any combinations of the hardware or logical components referenced herein, and it may include or couple with any device usable with an edge communication network or a combination of such networks. The components may be implemented as integrated circuits (ICs), portions thereof, discrete electronic devices, or other modules, instruction sets, programmable logic or algorithms, hardware, hardware accelerators, software, firmware, or a combination thereof adapted in the edge computing node 850, or as components otherwise incorporated within a chassis of a larger system.

The edge computing device 850 may include processing circuitry in the form of a processor 852, which may be a microprocessor, a multi-core processor, a multithreaded processor, an ultra-low voltage processor, an embedded processor, an xPU/DPU/IPU/NPU, special purpose processing unit, specialized processing unit, or other known processing elements. The processor 852 may be a part of a system on a chip (SoC) in which the processor 852 and other components are formed into a single integrated circuit, or a single package, such as the Edison^{™} or Galileo^{™} SoC boards from Intel Corporation, Santa Clara, California. As an example, the processor 852 may include an Intel^{®} Architecture Core^{™} based CPU processor, such as a Quark^{™}, an Atom^{™}, an i3, an i5, an i7, an i9, or an MCU-class processor, or another such processor available from Intel^{®}. However, any number other processors may be used, such as available from Advanced Micro Devices, Inc. (AMD^{®}) of Sunnyvale, California, a MIPS^{®}-based design from MIPS Technologies, Inc. of Sunnyvale, California, an ARM^{®}-based design licensed from ARM Holdings, Ltd. or a customer thereof, or their licensees or adopters. The processors may include units such as an A5-A13 processor from Apple^{®} Inc., a Snapdragon^{™} processor from Qualcomm^{®} Technologies, Inc., or an OMAP^{™} processor from Texas Instruments, Inc. The processor 852 and accompanying circuitry may be provided in a single socket form factor, multiple socket form factor, or a variety of other formats, including in limited hardware configurations or configurations that include fewer than all elements shown in FIG. 8B.

The processor 852 may communicate with a system memory 854 over an interconnect 856 (e.g., a bus). Any number of memory devices may be used to provide for a given amount of system memory. As examples, the memory 754 may be random access memory (RAM) in accordance with a Joint Electron Devices Engineering Council (JEDEC) design such as the DDR or mobile DDR standards (e.g., LPDDR, LPDDR2, LPDDR3, or LPDDR4). In particular examples, a memory component may comply with a DRAM standard promulgated by JEDEC, such as JESD79F for DDR SDRAM, JESD79-2F for DDR2 SDRAM, JESD79-3F for DDR3 SDRAM, JESD79-4A for DDR4 SDRAM, JESD209 for Low Power DDR (LPDDR), JESD209-2 for LPDDR2, JESD209-3 for LPDDR3, and JESD209-4 for LPDDR4. Such standards (and similar standards) may be referred to as DDR-based standards and communication interfaces of the storage devices that implement such standards may be referred to as DDR-based interfaces. In various implementations, the individual memory devices may be of any number of different package types such as single die package (SDP), dual die package (DDP) or quad die package (Q17P). These devices, in some examples, may be directly soldered onto a motherboard to provide a lower profile solution, while in other examples the devices are configured as one or more memory modules that in turn couple to the motherboard by a given connector. Any number of other memory implementations may be used, such as other types of memory modules, e.g., dual inline memory modules (DIMMs) of different varieties including but not limited to microDIMMs or MiniDIMMs.

To provide for persistent storage of information such as data, applications, operating systems and so forth, a storage 858 may also couple to the processor 852 via the interconnect 856. In an example, the storage 858 may be implemented via a solid-state disk drive (SSDD). Other devices that may be used for the storage 858 include flash memory cards, such as Secure Digital (SD) cards, microSD cards, eXtreme Digital (XD) picture cards, and the like, and Universal Serial Bus (USB) flash drives. In an example, the memory device may be or may include memory devices that use chalcogenide glass, multi-threshold level NAND flash memory, NOR flash memory, single or multi-level Phase Change Memory (PCM), a resistive memory, nanowire memory, ferroelectric transistor random access memory (FeTRAM), anti-ferroelectric memory, magnetoresistive random access memory (MRAM) memory that incorporates memristor technology, resistive memory including the metal oxide base, the oxygen vacancy base and the conductive bridge Random Access Memory (CB-RAM), or spin transfer torque (STT)-MRAM, a spintronic magnetic junction memory based device, a magnetic tunneling junction (MTJ) based device, a DW (Domain Wall) and SOT (Spin Orbit Transfer) based device, a thyristor based memory device, or a combination of any of the above, or other memory.

In low power implementations, the storage 858 may be on-die memory or registers associated with the processor 852. However, in some examples, the storage 858 may be implemented using a micro hard disk drive (HDD). Further, any number of new technologies may be used for the storage 858 in addition to, or instead of, the technologies described, such resistance change memories, phase change memories, holographic memories, or chemical memories, among others.

The components may communicate over the interconnect 856. The interconnect 856 may include any number of technologies, including industry standard architecture (ISA), extended ISA (EISA), peripheral component interconnect (PCI), peripheral component interconnect extended (PCIx), PCI express (PCIe), or any number of other technologies. The interconnect 856 may be a proprietary bus, for example, used in a SoC based system. Other bus systems may be included, such as an Inter-Integrated Circuit (I2C) interface, a Serial Peripheral Interface (SPI) interface, point to point interfaces, and a power bus, among others.

The interconnect 856 may couple the processor 852 to a transceiver 866, for communications with the connected edge devices 862. The transceiver 866 may use any number of frequencies and protocols, such as 2.4 Gigahertz (GHz) transmissions under the IEEE 802.15.4 standard, using the Bluetooth^{®} low energy (BLE) standard, as defined by the Bluetooth^{®} Special Interest Group, or the ZigBee^{®} standard, among others. Any number of radios, configured for a particular wireless communication protocol, may be used for the connections to the connected edge devices 862. For example, a wireless local area network (WLAN) unit may be used to implement Wi-Fi^{®} communications in accordance with the Institute of Electrical and Electronics Engineers (IEEE) 802.11 standard. In addition, wireless wide area communications, e.g., according to a cellular or other wireless wide area protocol, may occur via a wireless wide area network (WWAN) unit.

The wireless network transceiver 866 (or multiple transceivers) may communicate using multiple standards or radios for communications at a different range. For example, the edge computing node 850 may communicate with close devices, e.g., within about 10 meters, using a local transceiver based on Bluetooth Low Energy (BLE), or another low power radio, to save power. More distant connected edge devices 862, e.g., within about 50 meters, may be reached over ZigBee^{®} or other intermediate power radios. Both communications techniques may take place over a single radio at different power levels or may take place over separate transceivers, for example, a local transceiver using BLE and a separate mesh transceiver using ZigBee^{®}.

A wireless network transceiver 866 (e.g., a radio transceiver) may be included to communicate with devices or services in a cloud (e.g., an edge cloud 895) via local or wide area network protocols. The wireless network transceiver 866 may be a low-power wide-area (LPWA) transceiver that follows the IEEE 802.15.4, or IEEE 802.15.4g standards, among others. The edge computing node 850 may communicate over a wide area using LoRaWAN^{™} (Long Range Wide Area Network) developed by Semtech and the LoRa Alliance. The techniques described herein are not limited to these technologies but may be used with any number of other cloud transceivers that implement long range, low bandwidth communications, such as Sigfox, and other technologies. Further, other communications techniques, such as time-slotted channel hopping, described in the IEEE 802.15.4e specification may be used.

Any number of other radio communications and protocols may be used in addition to the systems mentioned for the wireless network transceiver 866, as described herein. For example, the transceiver 866 may include a cellular transceiver that uses spread spectrum (SPA/SAS) communications for implementing high-speed communications. Further, any number of other protocols may be used, such as Wi-Fi^{®} networks for medium speed communications and provision of network communications. The transceiver 866 may include radios that are compatible with any number of 3GPP (Third Generation Partnership Project) specifications, such as Long Term Evolution (LTE) and 5th Generation (5G) communication systems, discussed in further detail at the end of the present disclosure. A network interface controller (NIC) 868 may be included to provide a wired communication to nodes of the edge cloud 895 or to other devices, such as the connected edge devices 862 (e.g., operating in a mesh). The wired communication may provide an Ethernet connection or may be based on other types of networks, such as Controller Area Network (CAN), Local Interconnect Network (LIN), DeviceNet, ControlNet, Data Highway+, PROFIBUS, or PROFINET, among many others. An additional NIC 868 may be included to enable connecting to a second network, for example, a first NIC 868 providing communications to the cloud over Ethernet, and a second NIC 868 providing communications to other devices over another type of network.

Given the variety of types of applicable communications from the device to another component or network, applicable communications circuitry used by the device may include or be embodied by any one or more of components 864, 866, 868, or 870. Accordingly, in various examples, applicable means for communicating (e.g., receiving, transmitting, etc.) may be embodied by such communications circuitry.

The edge computing node 850 may include or be coupled to acceleration circuitry 864, which may be embodied by one or more artificial intelligence (AI) accelerators, a neural compute stick, neuromorphic hardware, an FPGA, an arrangement of GPUs, an arrangement of xPUs/DPUs/IPU/NPUs, one or more SoCs, one or more CPUs, one or more digital signal processors, dedicated ASICs, or other forms of specialized processors or circuitry designed to accomplish one or more specialized tasks. These tasks may include AI processing (including machine learning, training, inferencing, and classification operations), visual data processing, network data processing, object detection, rule analysis, or the like. These tasks also may include the specific edge computing tasks for service management and service operations discussed elsewhere in this document.

The interconnect 856 may couple the processor 852 to a sensor hub or external interface 870 that is used to connect additional devices or subsystems. The devices may include sensors 872, such as accelerometers, level sensors, flow sensors, optical light sensors, camera sensors, temperature sensors, global navigation system (e.g., GPS) sensors, pressure sensors, barometric pressure sensors, and the like. The hub or interface 870 further may be used to connect the edge computing node 850 to actuators 874, such as power switches, valve actuators, an audible sound generator, a visual warning device, and the like.

In some optional examples, various input/output (I/O) devices may be present within or connected to, the edge computing node 850. For example, a display or other output device 884 may be included to show information, such as sensor readings or actuator position. An input device 886, such as a touch screen or keypad may be included to accept input. An output device 884 may include any number of forms of audio or visual display, including simple visual outputs such as binary status indicators (e.g., light-emitting diodes (LEDs)) and multi-character visual outputs, or more complex outputs such as display screens (e.g., liquid crystal display (LCD) screens), with the output of characters, graphics, multimedia objects, and the like being generated or produced from the operation of the edge computing node 850. A display or console hardware, in the context of the present system, may be used to provide output and receive input of an edge computing system; to manage components or services of an edge computing system; identify a state of an edge computing component or service; or to conduct any other number of management or administration functions or service use cases.

A battery 876 may power the edge computing node 850, although, in examples in which the edge computing node 850 is mounted in a fixed location, it may have a power supply coupled to an electrical grid, or the battery may be used as a backup or for temporary capabilities. The battery 876 may be a lithium ion battery, or a metal-air battery, such as a zinc-air battery, an aluminum-air battery, a lithium-air battery, and the like.

A battery monitor/charger 878 may be included in the edge computing node 850 to track the state of charge (SoCh) of the battery 876, if included. The battery monitor/charger 878 may be used to monitor other parameters of the battery 876 to provide failure predictions, such as the state of health (SoH) and the state of function (SoF) of the battery 876. The battery monitor/charger 878 may include a battery monitoring integrated circuit, such as an LTC4020 or an LTC2990 from Linear Technologies, an ADT7488A from ON Semiconductor of Phoenix Arizona, or an IC from the UCD90xxx family from Texas Instruments of Dallas, TX. The battery monitor/charger 878 may communicate the information on the battery 876 to the processor 852 over the interconnect 856. The battery monitor/charger 878 may also include an analog-to-digital (ADC) converter that enables the processor 852 to directly monitor the voltage of the battery 876 or the current flow from the battery 876. The battery parameters may be used to determine actions that the edge computing node 850 may perform, such as transmission frequency, mesh network operation, sensing frequency, and the like.

A power block 880, or other power supply coupled to a grid, may be coupled with the battery monitor/charger 878 to charge the battery 876. In some examples, the power block 880 may be replaced with a wireless power receiver to obtain the power wirelessly, for example, through a loop antenna in the edge computing node 850. A wireless battery charging circuit, such as an LTC4020 chip from Linear Technologies of Milpitas, California, among others, may be included in the battery monitor/charger 878. The specific charging circuits may be selected based on the size of the battery 876, and thus, the current required. The charging may be performed using the Airfuel standard promulgated by the Airfuel Alliance, the Qi wireless charging standard promulgated by the Wireless Power Consortium, or the Rezence charging standard, promulgated by the Alliance for Wireless Power, among others.

The storage 858 may include instructions 882 in the form of software, firmware, or hardware commands to implement the techniques described herein. Although such instructions 882 are shown as code blocks included in the memory 854 and the storage 858, it may be understood that any of the code blocks may be replaced with hardwired circuits, for example, built into an application specific integrated circuit (ASIC).

In an example, the instructions 882 provided via the memory 854, the storage 858, or the processor 852 may be embodied as a non-transitory, machine-readable medium 860 including code to direct the processor 852 to perform electronic operations in the edge computing node 850. The processor 852 may access the non-transitory, machine-readable medium 860 over the interconnect 856. For instance, the non-transitory, machine-readable medium 860 may be embodied by devices described for the storage 858 or may include specific storage units such as optical disks, flash drives, or any number of other hardware devices. The non-transitory, machine-readable medium 860 may include instructions to direct the processor 852 to perform a specific sequence or flow of actions, for example, as described with respect to the flowchart(s) and block diagram(s) of operations and functionality depicted above. As used herein, the terms "machine-readable medium" and "computer-readable medium" are interchangeable.

Also in a specific example, the instructions 882 on the processor 852 (separately, or in combination with the instructions 882 of the machine readable medium 860) may configure execution or operation of a trusted execution environment (TEE) 890. In an example, the TEE 890 operates as a protected area accessible to the processor 852 for secure execution of instructions and secure access to data. Various implementations of the TEE 890, and an accompanying secure area in the processor 852 or the memory 854 may be provided, for instance, through use of Intel^{®} Software Guard Extensions (SGX) or ARM^{®} TrustZone^{®} hardware security extensions, Intel^{®} Management Engine (ME), or Intel^{®} Converged Security Manageability Engine (CSME). Other aspects of security hardening, hardware roots-of-trust, and trusted or protected operations may be implemented in the device 850 through the TEE 890 and the processor 852.

In further examples, a machine-readable medium also includes any tangible medium that is capable of storing, encoding or carrying instructions for execution by a machine and that cause the machine to perform any one or more of the methodologies of the present disclosure or that is capable of storing, encoding or carrying data structures utilized by or associated with such instructions. A "machine-readable medium" thus may include but is not limited to, solid-state memories, and optical and magnetic media. Specific examples of machine-readable media include non-volatile memory, including but not limited to, by way of example, semiconductor memory devices (e.g., electrically programmable read-only memory (EPROM), electrically erasable programmable read-only memory (EEPROM)) and flash memory devices; magnetic disks such as internal hard disks and removable disks; magnetooptical disks; and CD-ROM and DVD-ROM disks. The instructions embodied by a machine-readable medium may further be transmitted or received over a communications network using a transmission medium via a network interface device utilizing any one of a number of transfer protocols (e.g., Hypertext Transfer Protocol (HTTP)).

A machine-readable medium may be provided by a storage device or other apparatus which is capable of hosting data in a non-transitory format. In an example, information stored or otherwise provided on a machine-readable medium may be representative of instructions, such as instructions themselves or a format from which the instructions may be derived. This format from which the instructions may be derived may include source code, encoded instructions (e.g., in compressed or encrypted form), packaged instructions (e.g., split into multiple packages), or the like. The information representative of the instructions in the machine-readable medium may be processed by processing circuitry into the instructions to implement any of the operations discussed herein. For example, deriving the instructions from the information (e.g., processing by the processing circuitry) may include: compiling (e.g., from source code, object code, etc.), interpreting, loading, organizing (e.g., dynamically or statically linking), encoding, decoding, encrypting, unencrypting, packaging, unpackaging, or otherwise manipulating the information into the instructions.

In an example, the derivation of the instructions may include assembly, compilation, or interpretation of the information (e.g., by the processing circuitry) to create the instructions from some intermediate or preprocessed format provided by the machine-readable medium. The information, when provided in multiple parts, may be combined, unpacked, and modified to create the instructions. For example, the information may be in multiple compressed source code packages (or object code, or binary executable code, etc.) on one or several remote servers. The source code packages may be encrypted when in transit over a network and decrypted, uncompressed, assembled (e.g., linked) if necessary, and compiled or interpreted (e.g., into a library, stand-alone executable, etc.) at a local machine, and executed by the local machine.

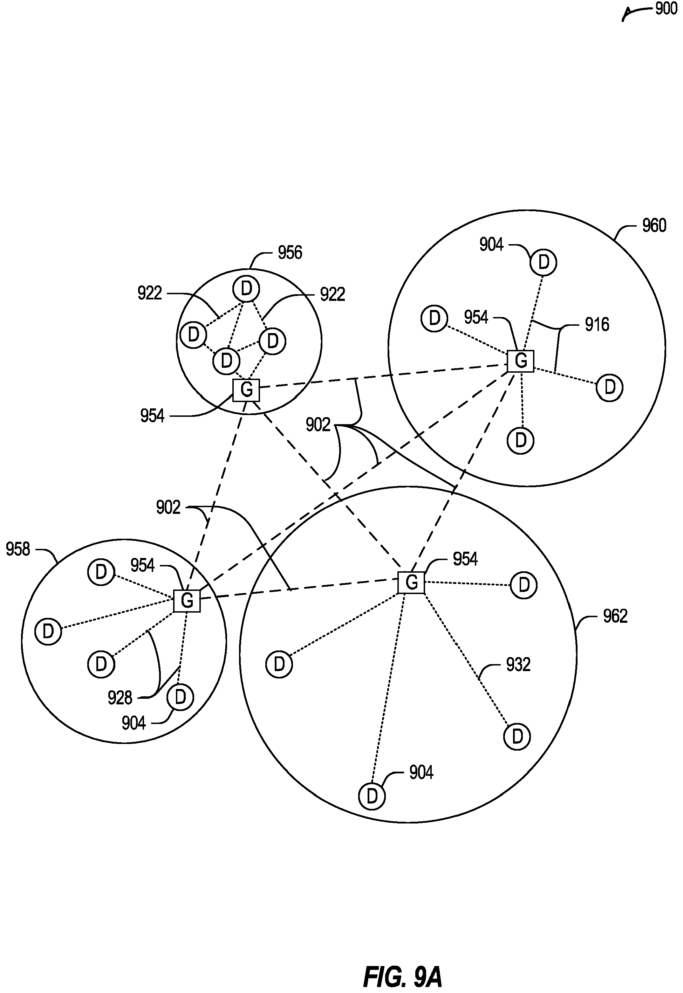

FIG. 9A illustrates an example domain topology for respective internet-of-things (IoT) networks coupled through links to respective gateways. The internet of things (IoT) is a concept in which a large number of computing devices are interconnected to each other and to the Internet to provide functionality and data acquisition at very low levels. Thus, as used herein, an IoT device may include a semiautonomous device performing a function, such as sensing or control, among others, in communication with other IoT devices and a wider network, such as the Internet.

[00103] Often, IoT devices are limited in memory, size, or functionality, allowing larger numbers to be deployed for a similar cost to smaller numbers of larger devices. However, an IoT device may be a smart phone, laptop, tablet, or PC, or other larger device. Further, an IoT device may be a virtual device, such as an application on a smart phone or other computing device. IoT devices may include IoT gateways, used to couple IoT devices to other IoT devices and to cloud applications, for data storage, process control, and the like.

Networks of IoT devices may include commercial and home automation devices, such as water distribution systems, electric power distribution systems, pipeline control systems, plant control systems, light switches, thermostats, locks, cameras, alarms, motion sensors, and the like. The IoT devices may be accessible through remote computers, servers, and other systems, for example, to control systems or access data.

The future growth of the Internet and like networks may involve very large numbers of IoT devices. Accordingly, in the context of the techniques discussed herein, a number of innovations for such future networking will address the need for all these layers to grow unhindered, to discover and make accessible connected resources, and to support the ability to hide and compartmentalize connected resources. Any number of network protocols and communications standards may be used, wherein each protocol and standard is designed to address specific objectives. Further, the protocols are part of the fabric supporting human accessible services that operate regardless of location, time or space. The innovations include service delivery and associated infrastructure, such as hardware and software; security enhancements; and the provision of services based on Quality of Service (QoS) terms specified in service level and service delivery agreements. As will be understood, the use of IoT devices and networks, such as those introduced in FIG. 9A and F2, present a number of new challenges in a heterogeneous network of connectivity comprising a combination of wired and wireless technologies.

FIG. 9A specifically provides a simplified drawing of a domain topology that may be used for a number of internet-ofthings (IoT) networks comprising IoT devices 904, with the IoT networks 956, 958, 960, 962, coupled through backbone links 902 to respective gateways 954. For example, a number of IoT devices 904 may communicate with a gateway 954, and with each other through the gateway 954. To simplify the drawing, not every IoT device 904, or communications link (e.g., link 916, 922, 928, or 932) is labeled. The backbone links 902 may include any number of wired or wireless technologies, including optical networks, and may be part of a local area network (LAN), a wide area network (WAN), or the Internet. Additionally, such communication links facilitate optical signal paths among both IoT devices 904 and gateways 954, including the use of MUXing/deMUXing components that facilitate interconnection of the various devices.

The network topology may include any number of types of IoT networks, such as a mesh network provided with the network 956 using Bluetooth low energy (BLE) links 922. Other types of IoT networks that may be present include a wireless local area network (WLAN) network 958 used to communicate with IoT devices 904 through IEEE 802.11 (Wi-Fi^{®}) links 928, a cellular network 960 used to communicate with IoT devices 904 through an LTE/LTE-A (4G) or 5G cellular network, and a low-power wide area (LPWA) network 962, for example, a LPWA network compatible with the LoRaWan specification promulgated by the LoRa alliance, or a IPv6 over Low Power Wide-Area Networks (LPWAN) network compatible with a specification promulgated by the Internet Engineering Task Force (IETF). Further, the respective IoT networks may communicate with an outside network provider (e.g., a tier 2 or tier 3 provider) using any number of communications links, such as an LTE cellular link, an LPWA link, or a link based on the IEEE 802.15.4 standard, such as Zigbee^{®}. The respective IoT networks may also operate with use of a variety of network and internet application protocols such as Constrained Application Protocol (CoAP). The respective IoT networks may also be integrated with coordinator devices that provide a chain of links that forms cluster tree of linked devices and networks.

Each of these IoT networks may provide opportunities for new technical features, such as those as described herein. The improved technologies and networks may enable the exponential growth of devices and networks, including the use of IoT networks into "fog" devices or integrated into "edge" computing systems. As the use of such improved technologies grows, the IoT networks may be developed for self-management, functional evolution, and collaboration, without needing direct human intervention. The improved technologies may even enable IoT networks to function without centralized controlled systems. Accordingly, the improved technologies described herein may be used to automate and enhance network management and operation functions far beyond current implementations.

In an example, communications between IoT devices 904, such as over the backbone links 902, may be protected by a decentralized system for authentication, authorization, and accounting (AAA). In a decentralized AAA system, distributed payment, credit, audit, authorization, and authentication systems may be implemented across interconnected heterogeneous network infrastructure. This allows systems and networks to move towards autonomous operations. In these types of autonomous operations, machines may even contract for human resources and negotiate partnerships with other machine networks. This may allow the achievement of mutual objectives and balanced service delivery against outlined, planned service level agreements as well as achieve solutions that provide metering, measurements, traceability, and trackability. The creation of new supply chain structures and methods may enable a multitude of services to be created, mined for value, and collapsed without any human involvement.

Such IoT networks may be further enhanced by the integration of sensing technologies, such as sound, light, electronic traffic, facial and pattern recognition, smell, vibration, into the autonomous organizations among the IoT devices. The integration of sensory systems may allow systematic and autonomous communication and coordination of service delivery against contractual service objectives, orchestration and quality of service (QoS) based swarming and fusion of resources. Some of the individual examples of network-based resource processing include the following.

The mesh network 956, for instance, may be enhanced by systems that perform inline data-to-information transforms. For example, self-forming chains of processing resources comprising a multi-link network may distribute the transformation of raw data to information in an efficient manner, and the ability to differentiate between assets and resources and the associated management of each. Furthermore, the proper components of infrastructure and resource based trust and service indices may be inserted to improve the data integrity, quality, assurance and deliver a metric of data confidence.

The WLAN network 958, for instance, may use systems that perform standards conversion to provide multi-standard connectivity, enabling IoT devices 904 using different protocols to communicate. Further systems may provide seamless interconnectivity across a multi-standard infrastructure comprising visible Internet resources and hidden Internet resources.

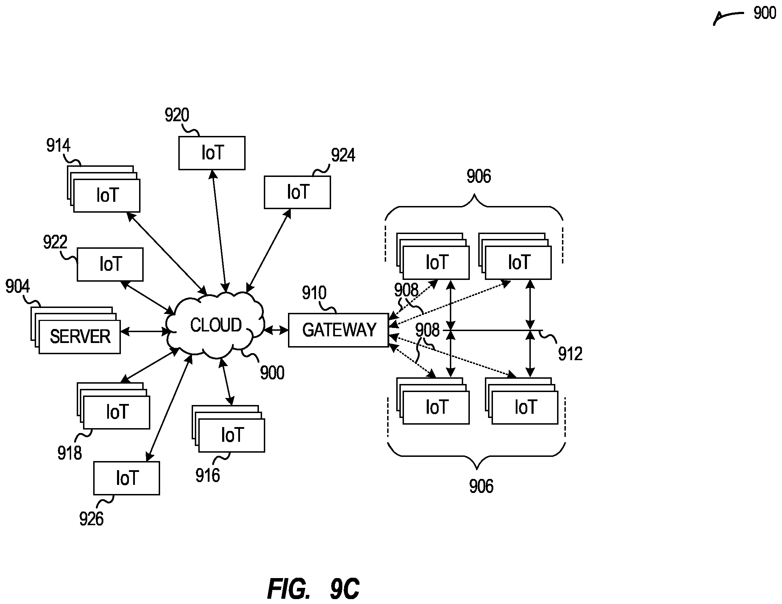

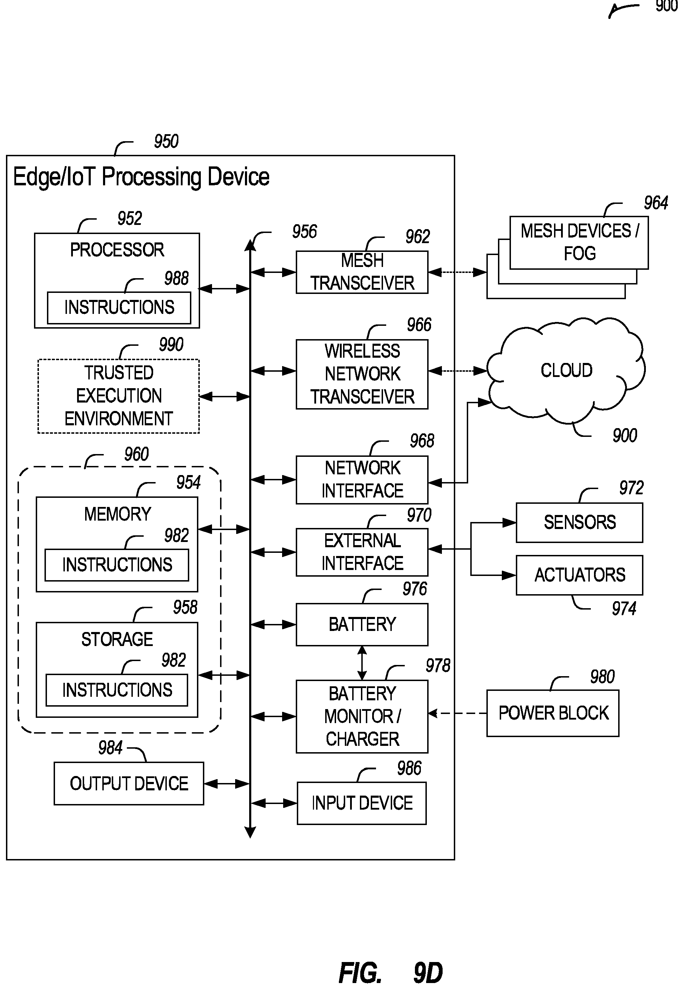

Communications in the cellular network 960, for instance, may be enhanced by systems that offload data, extend communications to more remote devices, or both. The LPWA network 962 may include systems that perform non-Internet protocol (IP) to IP interconnections, addressing, and routing. Further, each of the IoT devices 904 may include the appropriate transceiver for wide area communications with that device. Further, each IoT device 904 may include other transceivers for communications using additional protocols and frequencies. This is discussed further with respect to the communication environment and hardware of an IoT processing device depicted in FIGS. 9C and 9D.

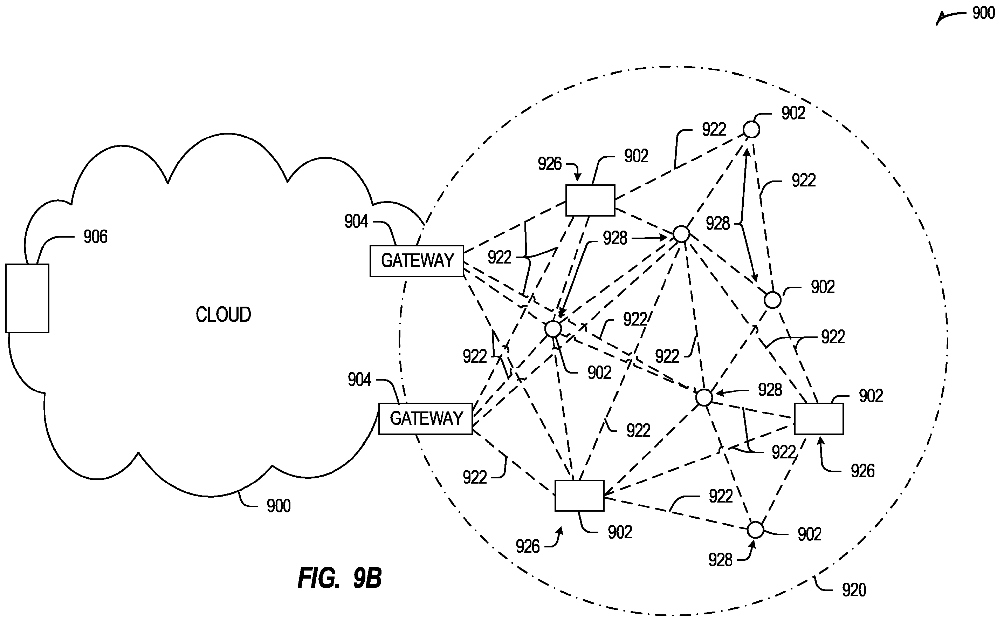

Finally, clusters of IoT devices may be equipped to communicate with other IoT devices as well as with a cloud network. This may allow the IoT devices to form an ad-hoc network between the devices, allowing them to function as a single device, which may be termed a fog device, fog platform, or fog network. This configuration is discussed further with respect to FIG. 9B below.

FIG. 9B illustrates a cloud computing network in communication with a mesh network of IoT devices (devices 902) operating as a fog platform in a networked scenario. The mesh network of IoT devices may be termed a fog network 920, established from a network of devices operating at the edge of the cloud 900. To simplify the diagram, not every IoT device 902 is labeled.

The fog network 920 may be considered to be a massively interconnected network wherein a number of IoT devices 902 are in communications with each other, for example, by radio links 922. The fog network 920 may establish a horizontal, physical, or virtual resource platform that can be considered to reside between IoT edge devices and cloud or data centers. A fog network, in some examples, may support vertically-isolated, latency-sensitive applications through layered, federated, or distributed computing, storage, and network connectivity operations. However, a fog network may also be used to distribute resources and services at and among the edge and the cloud. Thus, references in the present document to the "edge", "fog", and "cloud" are not necessarily discrete or exclusive of one another.

As an example, the fog network 920 may be facilitated using an interconnect specification released by the Open Connectivity Foundation^{™} (OCF). This standard allows devices to discover each other and establish communications for interconnects. Other interconnection protocols may also be used, including, for example, the optimized link state routing (OLSR) Protocol, the better approach to mobile ad-hoc networking (B.A.T.M.A.N.) routing protocol, or the OMA Lightweight M2M (LWM2M) protocol, among others.

Three types of IoT devices 902 are shown in this example, gateways 904, data aggregators 926, and sensors 928, although any combinations of IoT devices 902 and functionality may be used. The gateways 904 may be edge devices that provide communications between the cloud 900 and the fog network 920, and may also provide the backend process function for data obtained from sensors 928, such as motion data, flow data, temperature data, and the like. The data aggregators 926 may collect data from any number of the sensors 928, and perform the back end processing function for the analysis. The results, raw data, or both may be passed along to the cloud 900 through the gateways 904. The sensors 928 may be full IoT devices 902, for example, capable of both collecting data and processing the data. In some cases, the sensors 928 may be more limited in functionality, for example, collecting the data and allowing the data aggregators 926 or gateways 904 to process the data.

Communications from any IoT device 902 may be passed along a convenient path between any of the IoT devices 902 to reach the gateways 904. In these networks, the number of interconnections provide substantial redundancy, allowing communications to be maintained, even with the loss of a number of IoT devices 902. Further, the use of a mesh network may allow IoT devices 902 that are very low power or located at a distance from infrastructure to be used, as the range to connect to another IoT device 902 may be much less than the range to connect to the gateways 904.

The fog network 920 provided from these IoT devices 902 may be presented to devices in the cloud 900, such as a server 906, as a single device located at the edge of the cloud 900, e.g., a fog network operating as a device or platform. In this example, the alerts coming from the fog platform may be sent without being identified as coming from a specific IoT device 902 within the fog network 920. In this fashion, the fog network 920 may be considered a distributed platform that provides computing and storage resources to perform processing or data-intensive tasks such as data analytics, data aggregation, and machine-learning, among others.

In some examples, the IoT devices 902 may be configured using an imperative programming style, e.g., with each IoT device 902 having a specific function and communication partners. However, the IoT devices 902 forming the fog platform may be configured in a declarative programming style, enabling the IoT devices 902 to reconfigure their operations and communications, such as to determine needed resources in response to conditions, queries, and device failures. As an example, a query from a user located at a server 906 about the operations of a subset of equipment monitored by the IoT devices 902 may result in the fog network 920 device the IoT devices 902, such as particular sensors 928, needed to answer the query. The data from these sensors 928 may then be aggregated and analyzed by any combination of the sensors 928, data aggregators 926, or gateways 904, before being sent on by the fog network 920 to the server 906 to answer the query. In this example, IoT devices 902 in the fog network 920 may select the sensors 928 used based on the query, such as adding data from flow sensors or temperature sensors. Further, if some of the IoT devices 902 are not operational, other IoT devices 902 in the fog network 920 may provide analogous data, if available.

In other examples, the operations and functionality described herein may be embodied by an IoT or edge compute device in the example form of an electronic processing system, within which a set or sequence of instructions may be executed to cause the electronic processing system to perform any one of the methodologies discussed herein, according to an example embodiment. The device may be an IoT device or an IoT gateway, including a machine embodied by aspects of a personal computer (PC), a tablet PC, a personal digital assistant (PDA), a mobile telephone or smartphone, or any machine capable of executing instructions (sequential or otherwise) that specify actions to be taken by that machine.

Further, while only a single machine may be depicted and referenced in the examples above, such machine shall also be taken to include any collection of machines that individually or jointly execute a set (or multiple sets) of instructions to perform any one or more of the methodologies discussed herein. Further, these and like examples to a processor-based system shall be taken to include any set of one or more machines that are controlled by or operated by a processor, set of processors, or processing circuitry (e.g., a computer) to individually or jointly execute instructions to perform any one or more of the methodologies discussed herein. Accordingly, in various examples, applicable means for processing (e.g., processing, controlling, generating, evaluating, etc.) may be embodied by such processing circuitry.

FIG. 9B illustrates a drawing of a cloud computing network, or cloud 900, in communication with a number of Internet of Things (IoT) devices. The cloud 900 may represent the Internet, or may be a local area network (LAN), or a wide area network (WAN), such as a proprietary network for a company. The IoT devices may include any number of different types of devices, grouped in various combinations. For example, a traffic control group 906 may include IoT devices along streets in a city. These IoT devices may include stoplights, traffic flow monitors, cameras, weather sensors, and the like. The traffic control group 906, or other subgroups, may be in communication with the cloud 900 through wired or wireless links 908, such as LPWA links, and the like. Further, a wired or wireless subnetwork 912 may allow the IoT devices to communicate with each other, such as through a local area network, a wireless local area network, and the like. The IoT devices may use another device, such as a gateway 910 or 928 to communicate with remote locations such as the cloud 900; the IoT devices may also use one or more servers 930 to facilitate communication with the cloud 900 or with the gateway 910. For example, the one or more servers 930 may operate as an intermediate network node to support a local edge cloud or fog implementation among a local area network. Further, the gateway 928 that is depicted may operate in a cloud-to-gateway-to-many edge devices configuration, such as with the various IoT devices 914, 920, 924 being constrained or dynamic to an assignment and use of resources in the cloud 900.

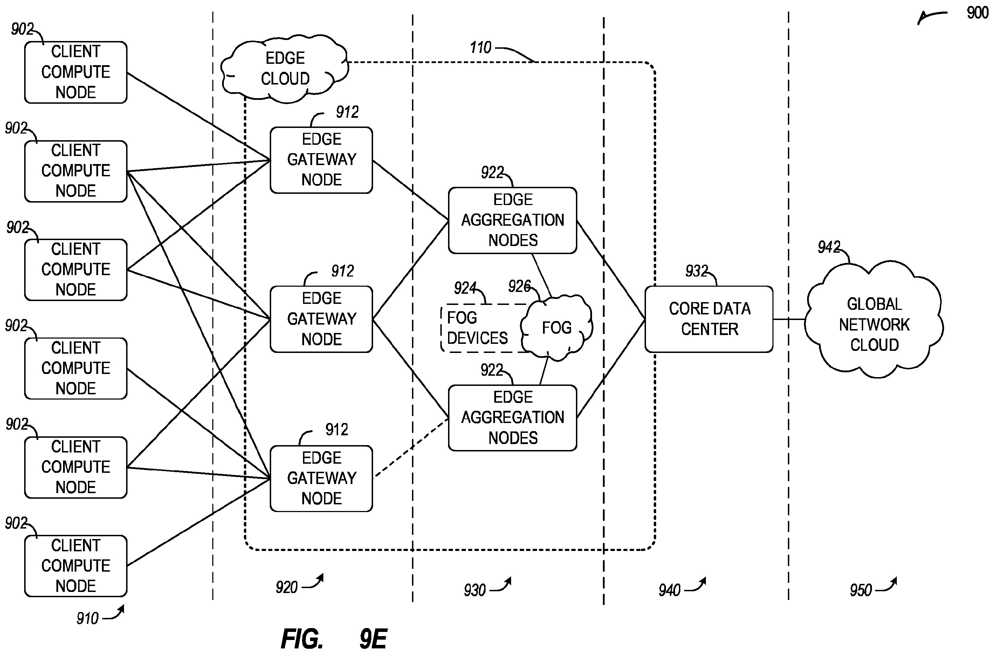

Other example groups of IoT devices may include remote weather stations 914, local information terminals 916, alarm systems 918, automated teller machines 920, alarm panels 922, or moving vehicles, such as emergency vehicles 924 or other vehicles 926, among many others. Each of these IoT devices may be in communication with other IoT devices, with servers 904, with another IoT fog device or system (not shown, but depicted in FIG. 9), or a combination therein. The groups of IoT devices may be deployed in various residential, commercial, and industrial settings (including in both private or public environments).

As may be seen from FIG. 9C, a large number of IoT devices may be communicating through the cloud 900. This may allow different IoT devices to request or provide information to other devices autonomously. For example, a group of IoT devices (e.g., the traffic control group 906) may request a current weather forecast from a group of remote weather stations 914, which may provide the forecast without human intervention. Further, an emergency vehicle 924 may be alerted by an automated teller machine 920 that a burglary is in progress. As the emergency vehicle 924 proceeds towards the automated teller machine 920, it may access the traffic control group 906 to request clearance to the location, for example, by lights turning red to block cross traffic at an intersection in sufficient time for the emergency vehicle 924 to have unimpeded access to the intersection.

Clusters of IoT devices, such as the remote weather stations 914 or the traffic control group 906, may be equipped to communicate with other IoT devices as well as with the cloud 900. This may allow the IoT devices to form an ad-hoc network between the devices, allowing them to function as a single device, which may be termed a fog device or system (e.g., as described above with reference to FIG. 9B).

FIG. 9D is a block diagram of an example of components that may be present in an IoT device 950 for implementing the techniques described herein. The IoT device 950 may include any combinations of the components shown in the example or referenced in the disclosure above. The components may be implemented as ICs, portions thereof, discrete electronic devices, or other modules, logic, hardware, software, firmware, or a combination thereof adapted in the IoT device 950, or as components otherwise incorporated within a chassis of a larger system. Additionally, the block diagram of FIG. 9 is intended to depict a high-level view of components of the IoT device 950. However, some of the components shown may be omitted, additional components may be present, and different arrangement of the components shown may occur in other implementations.

The IoT device 950 may include processing circuitry in the form of a processor 952, which may be a microprocessor, a multi-core processor, a multithreaded processor, an ultra-low voltage processor, an embedded processor, or other known processing elements. The processor 952 may be a part of a system on a chip (SoC) in which the processor 952 and other components are formed into a single integrated circuit, or a single package, such as the Edison^{™} or Galileo^{™} SoC boards from Intel. As an example, the processor 952 may include an Intel^{®} Architecture Core^{™} based processor, such as a Quark^{™}, an Atom^{™}, an i3, an i5, an i7, or an MCU-class processor, or another such processor available from Intel^{®} Corporation, Santa Clara, CA. However, any number other processors may be used, such as available from Advanced Micro Devices, Inc. (AMD) of Sunnyvale, CA, a MIPS-based design from MIPS Technologies, Inc. of Sunnyvale, CA, an ARM-based design licensed from ARM Holdings, Ltd. or customer thereof, or their licensees or adopters. The processors may include units such as an A5-A14 processor from Apple^{®} Inc., a Snapdragon^{™} processor from Qualcomm^{®} Technologies, Inc., or an OMAP^{™} processor from Texas Instruments, Inc.

The processor 952 may communicate with a system memory 954 over an interconnect 956 (e.g., a bus). Any number of memory devices may be used to provide for a given amount of system memory. As examples, the memory may be random access memory (RAM) in accordance with a Joint Electron Devices Engineering Council (JEDEC) design such as the DDR or mobile DDR standards (e.g., LPDDR, LPDDR2, LPDDR3, or LPDDR4). In various implementations the individual memory devices may be of any number of different package types such as single die package (SDP), dual die package (DDP) or quad die package (Q17P). These devices, in some examples, may be directly soldered onto a motherboard to provide a lower profile solution, while in other examples the devices are configured as one or more memory modules that in turn couple to the motherboard by a given connector. Any number of other memory implementations may be used, such as other types of memory modules, e.g., dual inline memory modules (DIMMs) of different varieties including but not limited to microDIMMs or MiniDIMMs.

To provide for persistent storage of information such as data, applications, operating systems and so forth, a storage 958 may also couple to the processor 952 via the interconnect 956. In an example the storage 958 may be implemented via a solid state disk drive (SSDD). Other devices that may be used for the storage 958 include flash memory cards, such as SD cards, microSD cards, xD picture cards, and the like, and USB flash drives. In low power implementations, the storage 958 may be on-die memory or registers associated with the processor 952. However, in some examples, the storage 958 may be implemented using a micro hard disk drive (HDD). Further, any number of new technologies may be used for the storage 958 in addition to, or instead of, the technologies described, such resistance change memories, phase change memories, holographic memories, or chemical memories, among others.

The components may communicate over the interconnect 956. The interconnect 956 may include any number of technologies, including industry standard architecture (ISA), extended ISA (EISA), peripheral component interconnect (PCI), peripheral component interconnect extended (PCIx), PCI express (PCIe), or any number of other technologies. The interconnect 956 may be a proprietary bus, for example, used in a SoC based system. Other bus systems may be included, such as an I2C interface, an SPI interface, point to point interfaces, and a power bus, among others.

Given the variety of types of applicable communications from the device to another component or network, applicable communications circuitry used by the device may include or be embodied by any one or more of components 962, 966, 968, or 970. Accordingly, in various examples, applicable means for communicating (e.g., receiving, transmitting, etc.) may be embodied by such communications circuitry.

The interconnect 956 may couple the processor 952 to a mesh transceiver 962, for communications with other mesh devices 964. The mesh transceiver 962 may use any number of frequencies and protocols, such as 2.4 Gigahertz (GHz) transmissions under the IEEE 802.15.4 standard, using the Bluetooth^{®} low energy (BLE) standard, as defined by the Bluetooth^{®} Special Interest Group, or the ZigBee^{®} standard, among others. Any number of radios, configured for a particular wireless communication protocol, may be used for the connections to the mesh devices 964. For example, a WLAN unit may be used to implement Wi-Fi^{™} communications in accordance with the Institute of Electrical and Electronics Engineers (IEEE) 802.11 standard. In addition, wireless wide area communications, e.g., according to a cellular or other wireless wide area protocol, may occur via a WWAN unit.

The mesh transceiver 962 may communicate using multiple standards or radios for communications at different range. For example, the IoT device 950 may communicate with close devices, e.g., within about 10 meters, using a local transceiver based on BLE, or another low power radio, to save power. More distant mesh devices 964, e.g., within about 50 meters, may be reached over ZigBee or other intermediate power radios. Both communications techniques may take place over a single radio at different power levels, or may take place over separate transceivers, for example, a local transceiver using BLE and a separate mesh transceiver using ZigBee.

A wireless network transceiver 966 may be included to communicate with devices or services in the cloud 900 via local or wide area network protocols. The wireless network transceiver 966 may be a LPW A transceiver that follows the IEEE 802.15.4, or IEEE 802.15.4g standards, among others. The IoT device 950 may communicate over a wide area using LoRaWAN^{™} (Long Range Wide Area Network) developed by Semtech and the LoRa Alliance. The techniques described herein are not limited to these technologies, but may be used with any number of other cloud transceivers that implement long range, low bandwidth communications, such as Sigfox, and other technologies. Further, other communications techniques, such as time-slotted channel hopping, described in the IEEE 802.15.4e specification may be used.

Any number of other radio communications and protocols may be used in addition to the systems mentioned for the mesh transceiver 962 and wireless network transceiver 966, as described herein. For example, the radio transceivers 962 and 966 may include an LTE or other cellular transceiver that uses spread spectrum (SPA/SAS) communications for implementing high speed communications. Further, any number of other protocols may be used, such as Wi-Fi^{®} networks for medium speed communications and provision of network communications.

The radio transceivers 962 and 966 may include radios that are compatible with any number of 3GPP (Third Generation Partnership Project) specifications, notably Long Term Evolution (LTE), Long Term Evolution-Advanced (LTE-A), and Long Term Evolution-Advanced Pro (LTE-A Pro). It may be noted that radios compatible with any number of other fixed, mobile, or satellite communication technologies and standards may be selected. These may include, for example, any Cellular Wide Area radio communication technology, which may include e.g. a 5th Generation (5G) communication systems, a Global System for Mobile Communications (GSM) radio communication technology, a General Packet Radio Service (GPRS) radio communication technology, or an Enhanced Data Rates for GSM Evolution (EDGE) radio communication technology, a UMTS (Universal Mobile Telecommunications System) communication technology, In addition to the standards listed above, any number of satellite uplink technologies may be used for the wireless network transceiver 966, including, for example, radios compliant with standards issued by the ITU (International Telecommunication Union), or the ETSI (European Telecommunications Standards Institute), among others. The examples provided herein are thus understood as being applicable to various other communication technologies, both existing and not yet formulated.

A network interface controller (NIC) 968 may be included to provide a wired communication to the cloud 900 or to other devices, such as the mesh devices 964. The wired communication may provide an Ethernet connection, or may be based on other types of networks, such as Controller Area Network (CAN), Local Interconnect Network (LIN), DeviceNet, ControlNet, Data Highway+, PROFIBUS, or PROFINET, among many others. An additional NIC 968 may be included to allow connect to a second network, for example, a NIC 968 providing communications to the cloud over Ethernet, and a second NIC 968 providing communications to other devices over another type of network.

The interconnect 956 may couple the processor 952 to an external interface 970 that is used to connect external devices or subsystems. The external devices may include sensors 972, such as accelerometers, level sensors, flow sensors, optical light sensors, camera sensors, temperature sensors, a global positioning system (GPS) sensors, pressure sensors, barometric pressure sensors, and the like. The external interface 970 further may be used to connect the IoT device 950 to actuators 974, such as power switches, valve actuators, an audible sound generator, a visual warning device, and the like.

In some optional examples, various input/output (I/O) devices may be present within, or connected to, the IoT device 950. For example, a display or other output device 984 may be included to show information, such as sensor readings or actuator position. An input device 986, such as a touch screen or keypad may be included to accept input. An output device 986 may include any number of forms of audio or visual display, including simple visual outputs such as binary status indicators (e.g., LEDs) and multi-character visual outputs, or more complex outputs such as display screens (e.g., LCD screens), with the output of characters, graphics, multimedia objects, and the like being generated or produced from the operation of the IoT device 950.

A battery 976 may power the IoT device 950, although in examples in which the IoT device 950 is mounted in a fixed location, it may have a power supply coupled to an electrical grid. The battery 976 may be a lithium ion battery, or a metal-air battery, such as a zinc-air battery, an aluminum-air battery, a lithium-air battery, and the like.

A battery monitor / charger 978 may be included in the IoT device 950 to track the state of charge (SoCh) of the battery 976. The battery monitor / charger 978 may be used to monitor other parameters of the battery 976 to provide failure predictions, such as the state of health (SoH) and the state of function (SoF) of the battery 976. The battery monitor / charger 978 may include a battery monitoring integrated circuit, such as an LTC4020 or an LTC2990 from Linear Technologies, an ADT7488A from ON Semiconductor of Phoenix Arizona, or an IC from the UCD90xxx family from Texas Instruments of Dallas, TX. The battery monitor / charger 978 may communicate the information on the battery 976 to the processor 952 over the interconnect 956. The battery monitor / charger 978 may also include an analog-to-digital (ADC) convertor that allows the processor 952 to directly monitor the voltage of the battery 976 or the current flow from the battery 976. The battery parameters may be used to determine actions that the IoT device 950 may perform, such as transmission frequency, mesh network operation, sensing frequency, and the like.

A power block 980, or other power supply coupled to a grid, may be coupled with the battery monitor / charger 978 to charge the battery 976. In some examples, the power block 980 may be replaced with a wireless power receiver to obtain the power wirelessly, for example, through a loop antenna in the IoT device 950. A wireless battery charging circuit, such as an LTC4020 chip from Linear Technologies of Milpitas, CA, among others, may be included in the battery monitor / charger 978. The specific charging circuits chosen can depend on the size of the battery 976, and thus, the current required. The charging may be performed using the Airfuel standard promulgated by the Airfuel Alliance, the Qi wireless charging standard promulgated by the Wireless Power Consortium, or the Rezence charging standard, promulgated by the Alliance for Wireless Power, among others.

The storage 958 may include instructions 982 in the form of software, firmware, or hardware commands to implement the techniques described herein. Although such instructions 982 are shown as code blocks included in the memory 954 and the storage 958, it may be understood that any of the code blocks may be replaced with hardwired circuits, for example, built into an application specific integrated circuit (ASIC).

In an example, the instructions 982 provided via the memory 954, the storage 958, or the processor 952 may be embodied as a non-transitory, machine readable medium 960 including code to direct the processor 952 to perform electronic operations in the IoT device 950. The processor 952 may access the non-transitory, machine readable medium 960 over the interconnect 956. For instance, the non-transitory, machine readable medium 960 may be embodied by devices described for the storage 958 of FIG. 9D or may include specific storage units such as optical disks, flash drives, or any number of other hardware devices. The non-transitory, machine readable medium 960 may include instructions to direct the processor 952 to perform a specific sequence or flow of actions, for example, as described with respect to the flowchart(s) and block diagram(s) of operations and functionality depicted above.

Also in a specific example, the instructions 988 on the processor 952 (separately, or in combination with the instructions 988 of the machine readable medium 960) may configure execution or operation of a trusted execution environment (TEE) 990. In an example, the TEE 990 operates as a protected area accessible to the processor 952 for secure execution of instructions and secure access to data. Various implementations of the TEE 990, and an accompanying secure area in the processor 952 or the memory 954 may be provided, for instance, through use of Intel^{®} Software Guard Extensions (SGX) or ARM^{®} TrustZone^{®} hardware security extensions, Intel^{®} Management Engine (ME), or Intel^{®} Converged Security Manageability Engine (CSME). Other aspects of security hardening, hardware roots-of-trust, and trusted or protected operations may be implemented in the device 950 through the TEE 990 and the processor 952.

At a more generic level, an edge computing system may be described to encompass any number of deployments operating in an edge cloud 110, which provide coordination from client and distributed computing devices. FIG. 9E provides a further abstracted overview of layers of distributed compute deployed among an edge computing environment for purposes of illustration.

FIG. 9E generically depicts an edge computing system for providing edge services and applications to multi-stakeholder entities, as distributed among one or more client compute nodes 902, one or more edge gateway nodes 912, one or more edge aggregation nodes 922, one or more core data centers 932, and a global network cloud 942, as distributed across layers of the network. The implementation of the edge computing system may be provided at or on behalf of a telecommunication service provider ("telco", or "TSP"), internet-of-things service provider, cloud service provider (CSP), enterprise entity, or any other number of entities.

Each node or device of the edge computing system is located at a particular layer corresponding to layers 910, 920, 930, 940, 950. For example, the client compute nodes 902 are each located at an endpoint layer 910, while each of the edge gateway nodes 912 are located at an edge devices layer 920 (local level) of the edge computing system. Additionally, each of the edge aggregation nodes 922 (and/or fog devices 924, if arranged or operated with or among a fog networking configuration 926) are located at a network access layer 930 (an intermediate level). Fog computing (or "fogging") generally refers to extensions of cloud computing to the edge of an enterprise's network, typically in a coordinated distributed or multi-node network. Some forms of fog computing provide the deployment of compute, storage, and networking services between end devices and cloud computing data centers, on behalf of the cloud computing locations. Such forms of fog computing provide operations that are consistent with edge computing as discussed herein; many of the edge computing aspects discussed herein are applicable to fog networks, fogging, and fog configurations. Further, aspects of the edge computing systems discussed herein may be configured as a fog, or aspects of a fog may be integrated into an edge computing architecture.

The core data center 932 is located at a core network layer 940 (e.g., a regional or geographically-central level), while the global network cloud 942 is located at a cloud data center layer 950 (e.g., a national or global layer). The use of "core" is provided as a term for a centralized network location-deeper in the network-which is accessible by multiple edge nodes or components; however, a "core" does not necessarily designate the "center" or the deepest location of the network. Accordingly, the core data center 932 may be located within, at, or near the edge cloud 110.

Although an illustrative number of client compute nodes 902, edge gateway nodes 912, edge aggregation nodes 922, core data centers 932, global network clouds 942 are shown in FIG. 9E, it should be appreciated that the edge computing system may include more or fewer devices or systems at each layer. Additionally, as shown in FIG. 9E, the number of components of each layer 910, 920, 930, 940, 950 generally increases at each lower level (i.e., when moving closer to endpoints). As such, one edge gateway node 912 may service multiple client compute nodes 902, and one edge aggregation node 922 may service multiple edge gateway nodes 912.

Consistent with the examples provided herein, each client compute node 902 may be embodied as any type of end point component, device, appliance, or "thing" capable of communicating as a producer or consumer of data. Further, the label "node" or "device" as used in the edge computing system 900 does not necessarily mean that such node or device operates in a client or agent/minion/follower role; rather, any of the nodes or devices in the edge computing system 900 refer to individual entities, nodes, or subsystems which include discrete or connected hardware or software configurations to facilitate or use the edge cloud 110.

As such, the edge cloud 110 is formed from network components and functional features operated by and within the edge gateway nodes 912 and the edge aggregation nodes 922 of layers 920, 930, respectively. The edge cloud 110 may be embodied as any type of network that provides edge computing and/or storage resources which are proximately located to radio access network (RAN) capable endpoint devices (e.g., mobile computing devices, IoT devices, smart devices, etc.), which are shown in FIG. 9E as the client compute nodes 902. In other words, the edge cloud 110 may be envisioned as an "edge" which connects the endpoint devices and traditional mobile network access points that serves as an ingress point into service provider core networks, including carrier networks (e.g., Global System for Mobile Communications (GSM) networks, Long-Term Evolution (LTE) networks, 5G networks, etc.), while also providing storage and/or compute capabilities. Other types and forms of network access (e.g., Wi-Fi, long-range wireless networks) may also be utilized in place of or in combination with such 3GPP carrier networks.

In some examples, the edge cloud 110 may form a portion of or otherwise provide an ingress point into or across a fog networking configuration 926 (e.g., a network of fog devices 924, not shown in detail), which may be embodied as a system-level horizontal and distributed architecture that distributes resources and services to perform a specific function. For instance, a coordinated and distributed network of fog devices 924 may perform computing, storage, control, or networking aspects in the context of an IoT system arrangement. Other networked, aggregated, and distributed functions may exist in the edge cloud 110 between the cloud data center layer 950 and the client endpoints (e.g., client compute nodes 902). Some of these are discussed in the following sections in the context of network functions or service virtualization, including the use of virtual edges and virtual services which are orchestrated for multiple stakeholders.

The edge gateway nodes 912 and the edge aggregation nodes 922 cooperate to provide various edge services and security to the client compute nodes 902. Furthermore, because each client compute node 902 may be stationary or mobile, each edge gateway node 912 may cooperate with other edge gateway devices to propagate presently provided edge services and security as the corresponding client compute node 902 moves about a region. To do so, each of the edge gateway nodes 912 and/or edge aggregation nodes 922 may support multiple tenancy and multiple stakeholder configurations, in which services from (or hosted for) multiple service providers and multiple consumers may be supported and coordinated across a single or multiple compute devices.

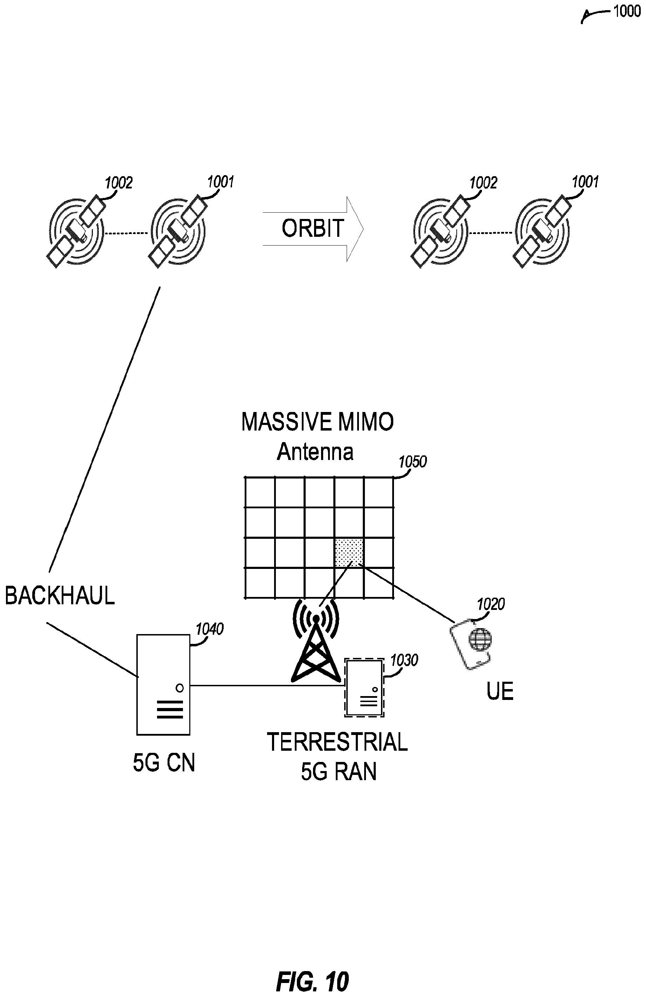

FIG. 10 illustrates network connectivity in non-terrestrial (satellite) and terrestrial (mobile cellular network) settings, according to an example. As shown, a satellite constellation 1000 may include multiple satellites 1001, 1002, which are connected to each other and to one or more terrestrial networks. Specifically, the satellite constellation is connected to a backhaul network, which is in turn connected to a 5G core network 1040. The 5G core network is used to support 5G communication operations at the satellite network and at a terrestrial 5G radio access network (RAN) 1030.

FIG. 10 also depicts the use of the terrestrial 5G RAN 1030, to provide radio connectivity to a user equipment (UE) 1020 via a massive MIMO antenna 1050. It will be understood that a variety of network communication components and units are not depicted in FIG. 10 for purposes of simplicity. With these basic entities in mind, the following techniques describe ways in which terrestrial and satellite networks can be extended for various edge computing scenarios. Examples disclosed herein can be implemented to validate and transfer learning models between the satellites 1001, 1002 and/or the satellite constellation 1000.

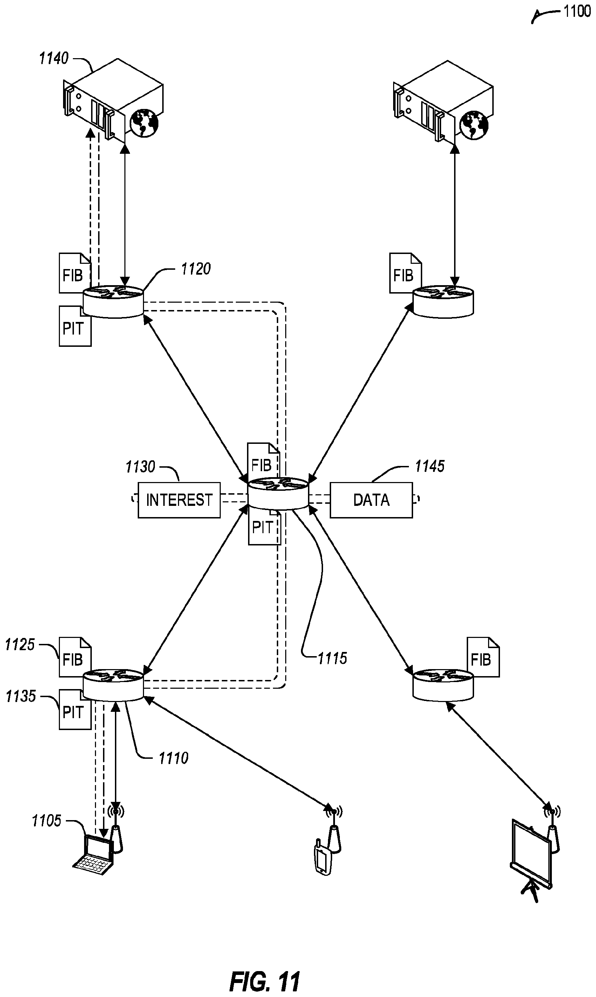

FIG. 11 illustrates an example information centric network (ICN) 1100, according to an embodiment. ICNs operate differently than traditional host-based (e.g., address-based) communication networks. ICN is an umbrella term for a networking paradigm in which information and/or functions themselves are named and requested from the network instead of hosts (e.g., machines that provide information). In a host-based networking paradigm, such as used in the Internet protocol (IP), a device locates a host and requests content from the host. The network understands how to route (e.g., direct) packets based on the address specified in the packet. In contrast, ICN does not include a request for a particular machine and does not use addresses. Instead, to get content, a device 1105 (e.g., subscriber) requests named content from the network itself. The content request may be called an interest and transmitted via an interest packet 1130. As the interest packet traverses network devices (e.g., network elements, routers, switches, hubs, etc.)-such as network elements 1110, 1115, and 1120-a record of the interest is kept, for example, in a pending interest table (PIT) at each network element. Thus, network element 1110 maintains an entry in its PIT 1135 for the interest packet 1130, network element 1115 maintains the entry in its PIT, and network element 1120 maintains the entry in its PIT.

When a device, such as publisher 1140, that has content matching the name in the interest packet 1130 is encountered, that device 1140 may send a data packet 1145 in response to the interest packet 1130. Typically, the data packet 1145 is tracked back through the network to the source (e.g., device 1105) by following the traces of the interest packet 1130 left in the network element PITs. Thus, the PIT 1135 at each network element establishes a trail back to the subscriber 1105 for the data packet 1145 to follow.

Matching the named data in an ICN may follow several strategies. Generally, the data is named hierarchically, such as with a universal resource identifier (URI). For example, a video may be named www.somedomain.com or videos or v8675309. Here, the hierarchy may be seen as the publisher, "www.somedomain.com," a sub-category, "videos," and the canonical identification "v8675309." As an interest 1130 traverses the ICN, ICN network elements will generally attempt to match the name to a greatest degree. Thus, if an ICN element has a cached item or route for both "www.somedomain.com or videos" and "www.somedomain.com or videos or v8675309," the ICN element will match the later for an interest packet 1130 specifying "www.somedomain.com or videos or v8675309." In an example, an expression may be used in matching by the ICN device. For example, the interest packet may specify "www.somedomain.com or videos or v8675*" where '*' is a wildcard. Thus, any cached item or route that includes the data other than the wildcard will be matched.

Item matching involves matching the interest 1130 to data cached in the ICN element. Thus, for example, if the data 1145 named in the interest 1130 is cached in network element 1115, then the network element 1115 will return the data 1145 to the subscriber 1105 via the network element 1110. However, if the data 1145 is not cached at network element 1115, the network element 1115 routes the interest 1130 on (e.g., to network element 1120). To facilitate routing, the network elements may use a forwarding information base 1125 (FIB) to match named data to an interface (e.g., physical port) for the route. Thus, the FIB 1125 operates much like a routing table on a traditional network device.

In an example, additional meta-data may be attached to the interest packet 1130, the cached data, or the route (e.g., in the FIB 1125), to provide an additional level of matching. For example, the data name may be specified as "www.somedomain.com or videos or v8675309," but also include a version number-or timestamp, time range, endorsement, etc. In this example, the interest packet 1130 may specify the desired name, the version number, or the version range. The matching may then locate routes or cached data matching the name and perform the additional comparison of meta-data or the like to arrive at an ultimate decision as to whether data or a route matches the interest packet 1130 for respectively responding to the interest packet 1130 with the data packet 1145 or forwarding the interest packet 1130.

ICN has advantages over host-based networking because the data segments are individually named. This enables aggressive caching throughout the network as a network element may provide a data packet 1130 in response to an interest 1130 as easily as an original author 1140. Accordingly, it is less likely that the same segment of the network will transmit duplicates of the same data requested by different devices.

Fine grained encryption is another feature of many ICN networks. A typical data packet 1145 includes a name for the data that matches the name in the interest packet 1130. Further, the data packet 1145 includes the requested data and may include additional information to filter similarly named data (e.g., by creation time, expiration time, version, etc.). To address malicious entities providing false information under the same name, the data packet 1145 may also encrypt its contents with a publisher key or provide a cryptographic hash of the data and the name. Thus, knowing the key (e.g., from a certificate of an expected publisher 1140) enables the recipient to ascertain whether the data is from that publisher 1140. This technique also facilitates the aggressive caching of the data packets 1145 throughout the network because each data packet 1145 is self-contained and secure. In contrast, many host-based networks rely on encrypting a connection between two hosts to secure communications. This may increase latencies while connections are being established and prevents data caching by hiding the data from the network elements.

Example ICN networks include content centric networking (CCN), as specified in the Internet Engineering Task Force (IETF) draft specifications for CCNx 0.x and CCN 1.x, and named data networking (NDN), as specified in the NDN technical report DND-0001. Examples disclosed herein can facilitate transfer of models associated with content through the information centric network (ICN) 1100.

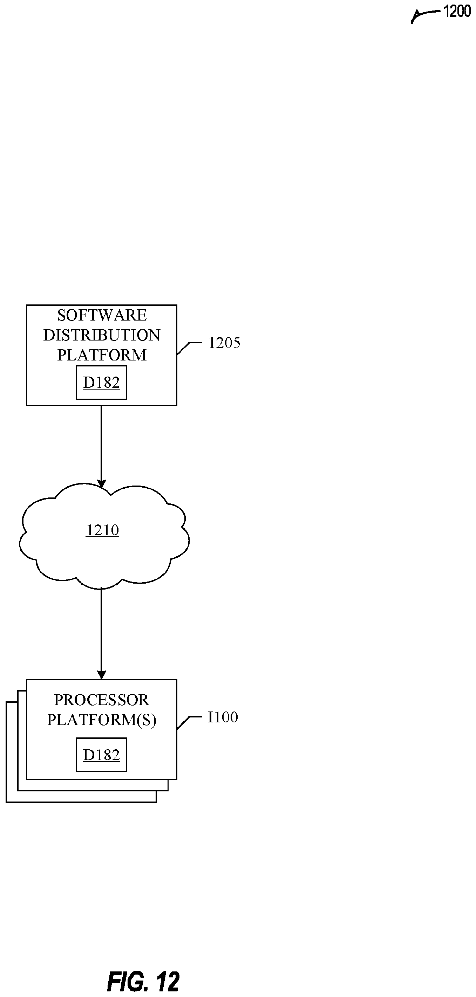

Figure 12 illustrates an example software distribution platform 1205 to distribute software, such as the example computer readable instructions 882 of FIG. 8, to one or more devices, such as example processor platform(s) 1200 and/or example connected edge devices. The example software distribution platform 1205 may be implemented by any computer server, data facility, cloud service, etc., capable of storing and transmitting software to other computing devices (e.g., third parties, example connected edge devices). Example connected edge devices may be customers, clients, managing devices (e.g., servers), third parties (e.g., customers of an entity owning and/or operating the software distribution platform 1205). Example connected edge devices may operate in commercial and/or home automation environments. In some examples, a third party is a developer, a seller, and/or a licensor of software such as the example computer readable instructions 882 of FIG. 8. The third parties may be consumers, users, retailers, OEMs, etc. that purchase and/or license the software for use and/or re-sale and/or sub-licensing. In some examples, distributed software causes display of one or more user interfaces (UIs) and/or graphical user interfaces (GUIs) to identify the one or more devices (e.g., connected edge devices) geographically and/or logically separated from each other (e.g., physically separated IoT devices chartered with the responsibility of water distribution control (e.g., pumps), electricity distribution control (e.g., relays), etc.).

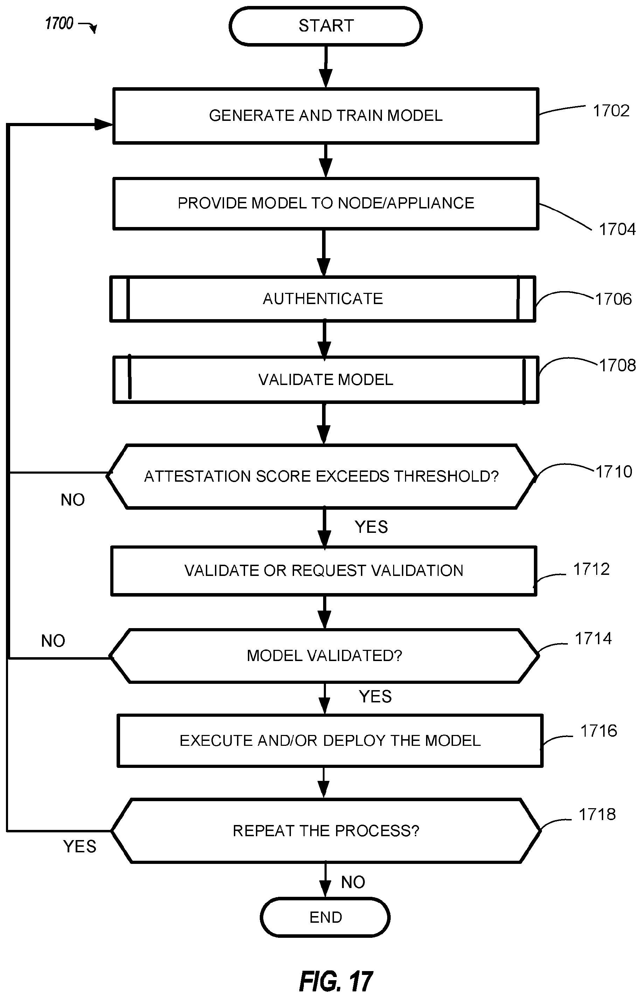

In the illustrated example of FIG. 12, the software distribution platform 1205 includes one or more servers and one or more storage devices. The storage devices store the computer readable instructions 882, which may correspond to the example computer readable instructions of FIGS. 17-19, as described above. The one or more servers of the example software distribution platform 1205 are in communication with a network 1210, which may correspond to any one or more of the Internet and/or any of the example networks described above. In some examples, the one or more servers are responsive to requests to transmit the software to a requesting party as part of a commercial transaction. Payment for the delivery, sale and/or license of the software may be handled by the one or more servers of the software distribution platform and/or via a third-party payment entity. The servers enable purchasers and/or licensors to download the computer readable instructions 882 from the software distribution platform 1205. For example, the software, which may correspond to the example computer readable instructions of FIGS. 17-19, may be downloaded to the example processor platform(s) 1200 (e.g., example connected edge devices), which is/are to execute the computer readable instructions 882 to implement examples disclosed herein. In some examples, one or more servers of the software distribution platform 1205 are communicatively connected to one or more security domains and/or security devices through which requests and transmissions of the example computer readable instructions 882 must pass. In some examples, one or more servers of the software distribution platform 1205 periodically offer, transmit, and/or force updates to the software (e.g., the example computer readable instructions 882 of FIG. 8) to ensure improvements, patches, updates, etc. are distributed and applied to the software at the end user devices.

In the illustrated example of FIG. 12, the computer readable instructions 882 are stored on storage devices of the software distribution platform 1205 in a particular format. A format of computer readable instructions includes, but is not limited to a particular code language (e.g., Java, JavaScript, Python, C, C#, SQL, HTML, etc.), and/or a particular code state (e.g., uncompiled code (e.g., ASCII), interpreted code, linked code, executable code (e.g., a binary), etc.). In some examples, the computer readable instructions 882 stored in the software distribution platform 1205 are in a first format when transmitted to the example processor platform(s) 1200. In some examples, the first format is an executable binary in which particular types of the processor platform(s) 1200 can execute. However, in some examples, the first format is uncompiled code that requires one or more preparation tasks to transform the first format to a second format to enable execution on the example processor platform(s) 1200. For instance, the receiving processor platform(s) 1200 may need to compile the computer readable instructions 882 in the first format to generate executable code in a second format that is capable of being executed on the processor platform(s) 1200. In still other examples, the first format is interpreted code that, upon reaching the processor platform(s) 1200, is interpreted by an interpreter to facilitate execution of instructions.

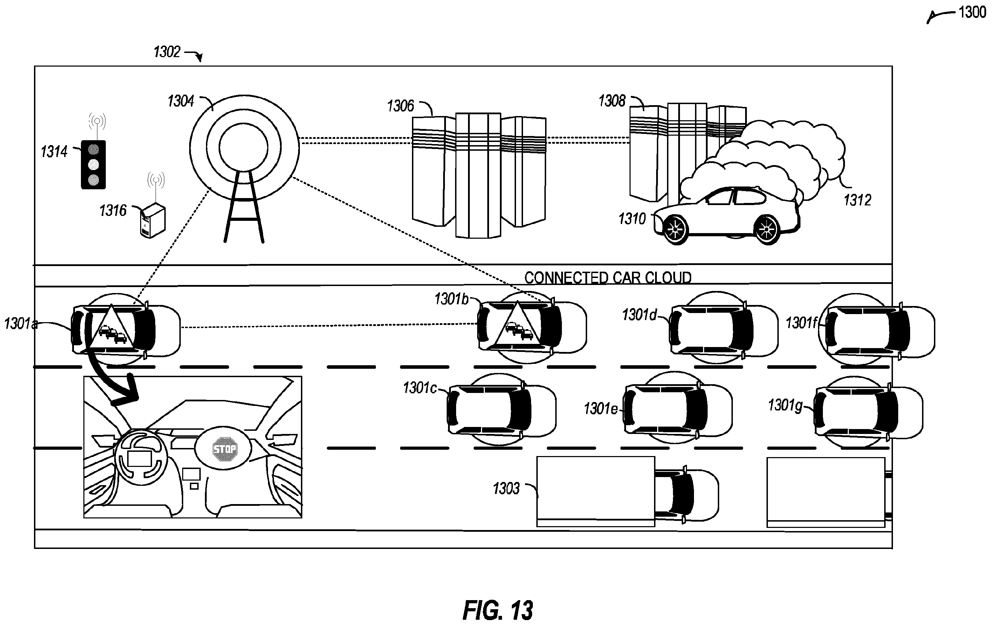

FIG. 13 illustrates an example edge implementation 1300 in which examples disclosed can be implemented. In the illustrated example, the edge implementation 1300 includes and/or is integrated with V2X infrastructure. Any suitable V2X implementation and/or communication protocol can be implemented. For example, a V2X implementation can include a vehicle to vehicle (V2V) implementation which can implement a base station, a low earth orbit (LEO_ satellite, WiFi hotspot or other bridging technology. The aforementioned V2V implementation can use direct connect technologies such as, but not limited to, WiFi-direct, Bluetooth, HAM, citizens ban and other electromagnetic spectrum that is authorized for direct and/or peer-to-peer connection. Additionally, V2X, as used herein, is not limited to radio electromagnetic spectrum. In some examples, a video camera, a 3D, infrared, LIDAR, etc. can be used to sense, read or otherwise obtain data from (or be the subject of data collection) in an X2V implementation utilizing light spectrum, for example. Further, the aforementioned V2X infrastructure is part of an edge network implementation. However, any suitable edge and/or network environment can be implemented instead.

As can be seen in the illustrated example of FIG. 13, vehicles 1301 (hereinafter 1301a, 1301b, 1301c 1301d, 1301e, 1301f, 1301g, etc.), which are implemented as automobiles in this example, are shown being driven on a road proximate a truck 1303. In this example, the vehicles 1301a, 1301b, 1301c 1301d, 1301e, 1301f, 1301g, etc. are communicatively coupled to infrastructure 1302 associated with the aforementioned V2X network. In this example, the example infrastructure 1302 includes a base station (e.g., a 4G LTE base station, a 5G cellular base station, a Wi-Fi base station, etc.) 1304, a computational node (e.g., a server network) 1306 and a computational node 1308. which serves another edge network, edge node or cluster 1309 different from that corresponding to the infrastructure 1302. In this example, the servers 1308 operate in conjunction with a cloud network 1312 that serves vehicles 1310 communicatively coupled thereto. Further, the example infrastructure 1302 includes a traffic device 1314, which functions as a computational device having a wireless interface in this example, and a wireless base station 1316, which may be communicatively coupled to the traffic device 1314 and/or at least one of the vehicles 1301a, 1301b, 1301c 1301d, 1301e, 1301f, 1301g.

In operation, communication between the vehicles 1301a, 1301b, 1301c 1301d, 1301e, 1301f, 1301g is enabled by the example base station 1304. In particular, the vehicles 1301a, 1301b, 1301c 1301d, 1301e, 1301f, 1301g, which are implemented as self-driven automobiles in this example, are communicatively coupled to one another via the base station 1304 and the computational node 1306. Additionally or alternatively, the traffic device 1314 and/or the base station 1316 serve to facilitate communications between the vehicles 1301a, 1301b, 1301c 1301d, 1301e, 1301f, 1301g. In some examples, the traffic device 1314 and/or the base station 1316 provide information to the vehicles 1301a, 1301b, 1301c 1301d, 1301e, 1301f, 1301g, such as traffic information, weather, road conditions, accidents, unusual driving behavior, unexpected driving encounters, etc. In other words, information and/or data can flow between the vehicles 1301a, 1301b, 1301c 1301d, 1301e, 1301f, 1301g and the infrastructure 1302.

According to the illustrated example, to direct movement of the vehicles 1301a, 1301b, 1301c 1301d, 1301e, 1301f, 1301g, information pertaining to driving conditions and/or patterns associated with the road (e.g., patterns corresponding to visibility, traffic conditions, road conditions, etc.) is shared between the vehicles 1301a, 1301b, 1301c 1301d, 1301e, 1301f, 1301g. In the illustrated example, the information can be shared in the form of a trained AI/ML model. The model can be trained by computational devices (e.g., appliances, computing nodes, etc.) of one or more of the vehicles 1301a, 1301b, 1301c 1301d, 1301e, 1301f, 1301g.

Turning to the example of FIG. 13, the vehicle 1301b conveys information in the form of a model to the vehicle 1301a via the base station 1304. Particularly, the information indicates that traffic is building up as the vehicles 1301d, 1301e, 1301f, 1301g are in front of the vehicle 1301b and stopped. In turn, because the vehicle 1301b is ahead of the vehicle 1301a, the vehicle 1301a is provided a warning as an AI/ML model. For example, the AI/ML model has been generated using data from the vehicles 1301d, 1301e, 1301f, 1301g. However, to ensure that the vehicle 1301a receives relatively error free information and/or untampered information, the AI/ML model provided to the vehicle 1301a is validated. Examples disclosed herein can be implemented to validate and authenticate the model. Additionally or alternatively, examples disclosed herein can determine whether the model is improving or degrading during a training phase, for example.

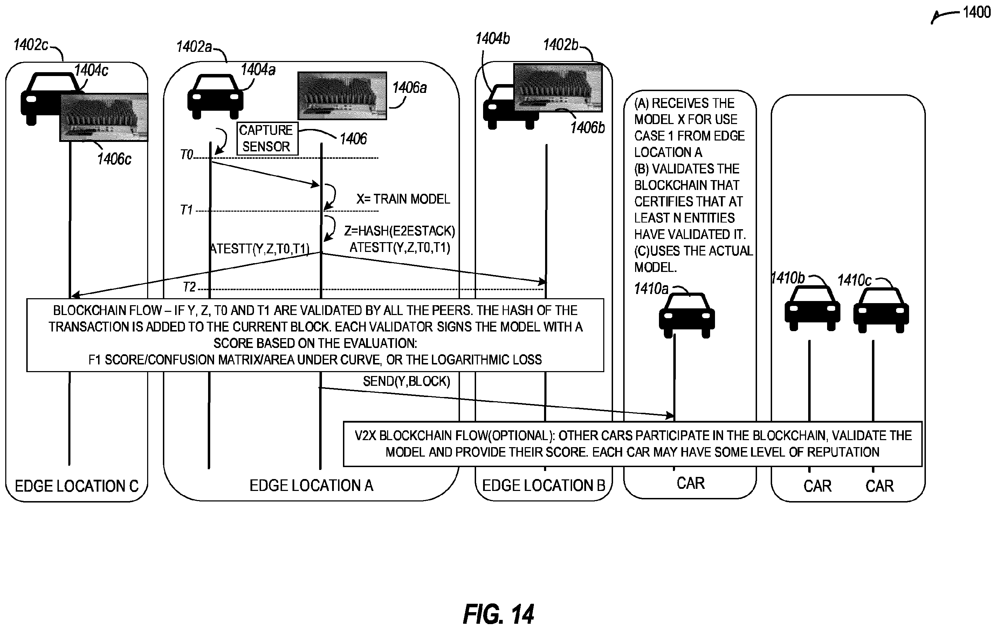

While the example of FIG. 13 is related to a V2X implementation, examples disclosed herein can be applied to any suitable distributed computing implementation that pertains to evaluation, training, authentication and/or validation of AI/ML models. In other words, examples disclosed herein are applicable to any of the implementations, topologies and/or systems described herein. Further, examples disclosed herein can be applied to any suitable AI/ML model in addition to those described below in connection with FIGS. 14-20.

FIG. 14 depicts an example model validating process 1400 in accordance with teachings of this disclosure. The model validating process 1400 of the illustrated example can be implemented in the example edge cloud 110, the example edge cloud 210, the example endpoints 310, the example edge computing system 400, the example edge computing system 600, the example edge system architecture 700, the example edge compute node 800, the example cloud computing network 900, the example satellite constellation 1000, the example information centric network 1100 or the example software distribution platform 1200, or any other suitable example.

According to the illustrated example of FIG. 14, example edge locations 1402 (hereinafter 1402a, 1402b, 1402c, etc.) form part of an edge network and/or edge node. The example edge location 1402a corresponds to a vehicle 1404a having a corresponding appliance (e.g., an edge appliance, a computing device, etc.) 1406a and a sensor 1408. Similarly, the example edge location 1402b corresponds to a vehicle 1404b having a corresponding appliance 1406b while the example edge location 1402c corresponds to a vehicle 1404c having a corresponding appliance 1406c. In this example, the edge locations 1402a, 1402b, 1402c correspond to different edge computational/compute nodes (e.g., models are trained and/or validated across multiple edge nodes and/or edge clusters). However, in other examples, the edge locations 1402a, 1402b, 1402c can correspond to the same edge node (e.g., models are trained and/or validated within the same edge node).

To generate a model, in some examples, the appliance 1406a is provided with a request. For example, a corresponding edge network instructs the appliance 1406a to generate and/or initiate the model. In other examples, a request is initiated by the appliance 1406a. In yet other examples, the model is generated based on an indication that output data is necessitated (e.g., output data from a model is required for decision-making).

To train the model, the appliance 1406a utilizes sensor data from the example sensor 1406. In this example, the sensor data pertains to driving conditions experienced by the vehicle 1404a. In this example, the capture sensor 1406 obtains data as the vehicle 1404a is driven though an environment (e.g., an environment in a locale of the edge location 1402a). As the sensor data is collected by the sensor 1406 and analyzed by the appliance 1404a, the model is continually trained. In some examples, the model is trained until a convergence criteria is met (e.g., a degree of change over time is below a threshold criteria, an accuracy level is reached, the model is verified with known data, etc.). Further, the model is trained by the appliance 1406a in this example. However, in other examples, multiple appliances are utilized to train the model. In some examples, the model pertains to autonomous driving controls, autonomous driving environmental inputs, traffic conditions, traffic patterns, etc.

To validate the model, the model is provided to the appliance 1406c of the vehicle 1404c and the appliance 1406b of the vehicle 1404b. In other words, the appliances 1406c 1406b act as validators and/or peers (e.g., evaluating peers) of the model. The model may be provided to the appliances 1406c 1406b from the appliance 1406a based on an amount of time that the model has been trained or the aforementioned convergence criteria. In the illustrated example, the variables or parameters associated with the model, which are denoted by X, Z, T0 and T1, are validated by the appliances 1406c 1406b. Upon successful validation, a transaction is added to a block and/or a blockchain associated with the model. For example, a hash of the transaction is added to the block. In this example, the appliances 1406c 1406b assign the block and/or the model with a score (e.g., an attestation score) based on an evaluation. The evaluation of the model may be based on an F1 score, a confusion matrix, area under curve and/or a logarithmic loss. In some examples, attestation scores of the evaluating appliances 1406c 1406b are averaged and compared to a threshold. In other examples, a number of attestation scores exceeding a threshold are counted to evaluate the model. For example, evaluation of the model can be based on a "vote" of peers such that a majority, super-majority or other pre-determined threshold for establishing consensus is used within a distributed ledger technology (DLT) (e.g., blockchain), for example. In other words, DLT consensus and/or partial consensus evaluation can be carried across the different edge locations 1402a, 1402b, 1402c to accept (or reject) the trained / re-trained model based on an expected level of trustworthiness as defined by the attestation result and score.

In some examples, the evaluating appliances 1406b, 1406c place their score of the model onto a blockchain. In some such examples, at least one appliance validates the model with the blockchain, validates the model and adds their respective attestation score to the blockchain. In some examples, at least one of the appliances associated with the blockchain includes a reputation score or level. In some such examples, the score provided on the blockchain can be weighted by the reputation score (e.g., a higher reputation score corresponds to a higher weighting).

In some examples, upon validation, the trained model is promoted to a global model. In some such examples, the global model is authorized for execution on any of the appropriate appliances. Additionally or alternatively, determination of whether the model is improving or degrading is made (e.g. during training thereof). For example, a particular edge location has as associated current reference model, which is denoted as A_POR_Model, and receives a model denoted as A_on_location_x to be merged to the A_POR_Model. The example edge location and/or appliance can evaluate whether the merged model, which is denoted as A_merged_model=Merge(A_POR_Model, A_on_location_x), improves or degrades predictions on the local edge (e.g., utilizing or having a validation set). If the model improves or does not degraded, in some examples, the edge location will send an acknowledgement (ACK) to include A_on_location_X to the A_POR_Model. In some examples, each edge node and/or edge location can have a benchmark (e.g., a threshold associated with the edge node and/or edge location) to evaluate a derivative model. The benchmark can be assigned from and/or provided by an edge infrastructure owner, for example.

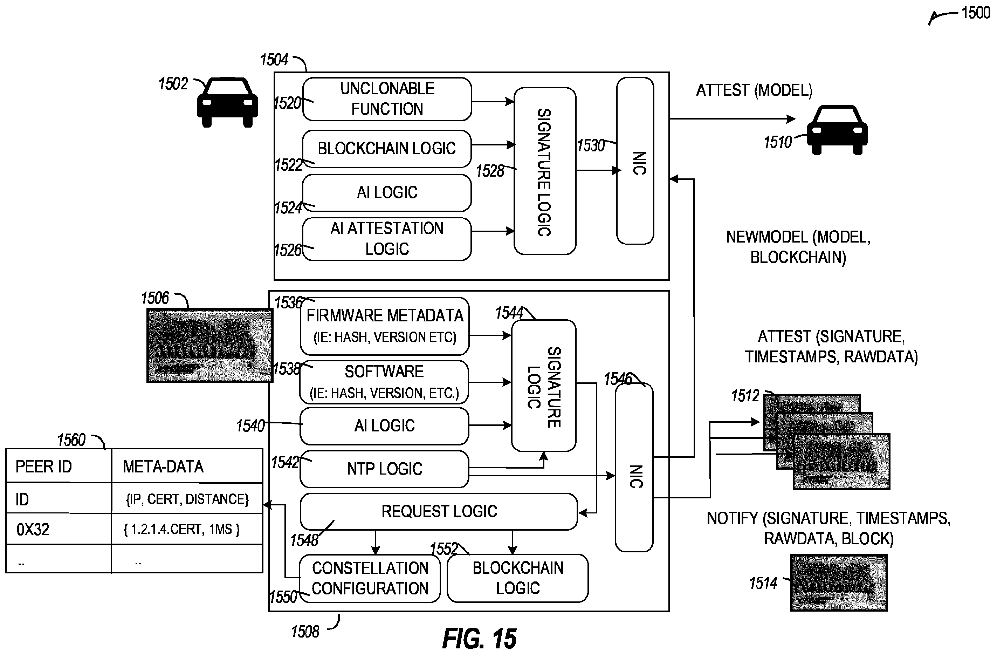

FIG. 15 depicts an example implementation 1500 of the example model validating process 1400 of FIG. 14. In the illustrated example of FIG. 15, an example vehicle 1502 includes associated circuitry/logic 1504 while an example appliance 1506 include corresponding circuitry/logic 1508. Further, a vehicle 1510 and appliances 1512, 1514 are shown in FIG. 15. In this example, function(s) of the appliance 1506 are extended and/or associated with other hardware (e.g., the vehicle 1502) to perform generation of a model, training of the model, as well as attestation and propagation of the model. In other words, functions of examples disclosed herein can be shared with multiple computational nodes.

The example circuitry/logic 1504 includes an unclonable function 1520, blockchain (logic) 1522, AI logic 1524, AI attestation logic 1526, signature logic 1528 and a network interface card (NIC) 1530. Further, the example circuitry/logic 1508 includes firmware metadata 1536, software 1538, AI logic 1540, network time protocol (NTP) logic 1542, signature logic 1544, a NIC 1546, request logic 1548, a constellation configuration 1550 and blockchain logic 1552. Further, metadata 1560 is associated with the appliance 1506.

In operation, the aforementioned model is generated at the appliance 1506 and analyzed at the example circuitry/logic 1504 of the vehicle 1502. Further, in this example, a blockchain associated with the model is also forwarded to the example circuitry/logic 1504. In this example, the model (e.g., signatures, timestamps and/or raw data of the model) is attested and/or verified at the appliances 1512 and the appliance 1514 indicates and/or applies scores of the model to the block chain. The scores can include and/or pertain to signatures, timestamps and/or raw data of the model. In this example, the unclonable function 1520 is used to uniquely identify the vehicle 1502 and sensors pertaining to the vehicle 1502. In turn, the circuitry/logic 1504 attests and/or scores the model for the vehicle 1510.

In this example, the unclonable function 1520 is implemented to uniquely identify the edge appliance 1504. Further, hardware such as Device Identity Composition Engine (DICE) or other root-of-trust technology and firmware, firmware metadata, such as the example firmware 1536, and firmware initialization data are implemented to uniquely identify different hardware elements involved with sensor data collection, for example. In particular, the hardware elements, firmware, metadata or initialization data can be identified as a list of digests of actual values and/or actual values, for example. Additionally or alternatively, software metadata can be implemented to uniquely identify the different software elements associated with data collection. The software metadata can include a list of hashes digests corresponding to different libraries or applications used to collect data. Similar to the hardware metadata, in some examples, the software metadata can include different elements from training libraries.

In some examples, the appliances 1512 and/or the appliance 1512 employ constellation logic. The constellation logic can be implemented in an out-of-band manner to configure a set of peers (e.g., peer appliances) that are part of a blockchain (e.g., a private blockchain) to validate the model. In some examples, the peers are defined by (i) distance to a current edge location (e.g., may be selected based on proximity), (ii) certificate of the peer and/or (iii) an identifier of the peer (e.g., an IP address).

In some examples, blockchain logic is employed. In some such examples, the blockchain logic 1522 and/or the blockchain logic 1552 generate the model and signatures corresponding to hardware (CPU, training accelerators etc.) and software elements (e.g., firmware, training software stack, etc.). In turn, the model is sent to a set of N peers (e.g., the appliances 1512) within a distributed edge expecting M (<= N) to validate the model. Each of the peers run the model with their historical data (note that only the validators needs to store historical data), validate the generated output and coordinate with the M or more peers that have validated the model using a blockchain consensus algorithm. The comparison to validate the model can be configured and/or modified based on a criticality and/or importance of the model (e.g., identifying an object on the road has an increased criticality and/or importance as opposed to identifying light conditions, etc.). Once the model is successfully accepted, the model can be propagated to the rest of the distributed edges. If the model is not successfully accepted, the model is not propagated and/or the model is further refined until blockchain consensus can be reached (e.g., the model is further iterated until an attestation score collectively exceeds a threshold as part of a blockchain or DLT consensus computation).

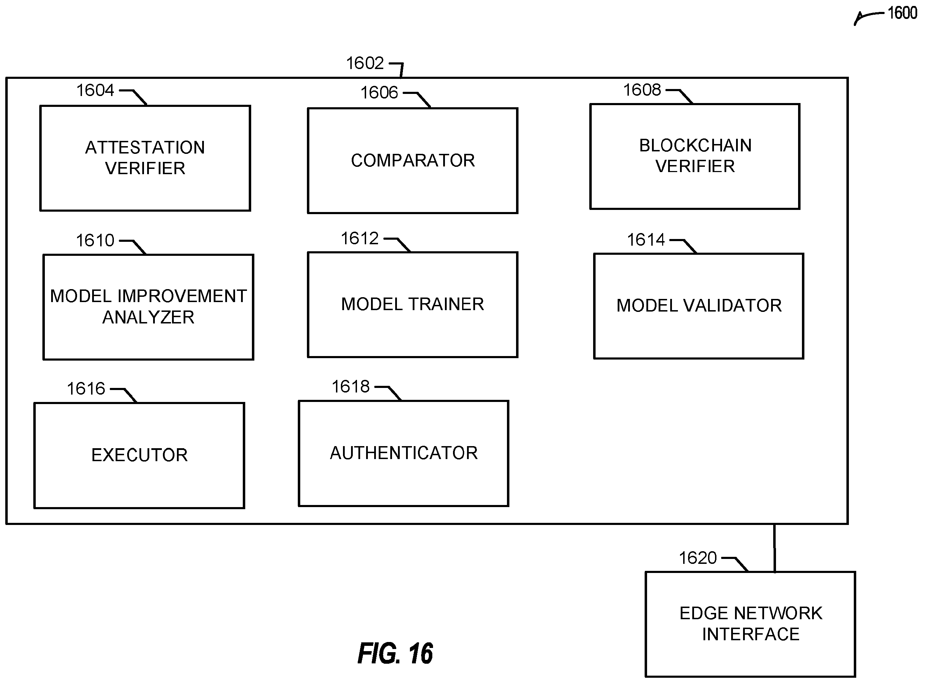

FIG. 16 is a schematic overview of an example model analysis system 1600 in accordance with teachings of this disclosure. The model analysis system 1600 of the illustrated example can be implemented in the example edge cloud 110, the example edge cloud 210, the example endpoints 310, the example edge computing system 400, the example edge computing system 600, the example edge system architecture 700, the example edge compute node 800, the example cloud computing network 900, the example satellite constellation 1000, the example information centric network 1100 or the example software distribution platform 1200, or any other suitable example disclosed herein. In this example, the model analysis system 1600 is implemented to train AI/ML models utilizing computing resources of an edge environment and/or system to train and validate a model. According to the illustrated example, the model analysis system 1600 is to authenticate and evaluate the model (e.g., as the model is trained) for subsequent execution and/or deployment.

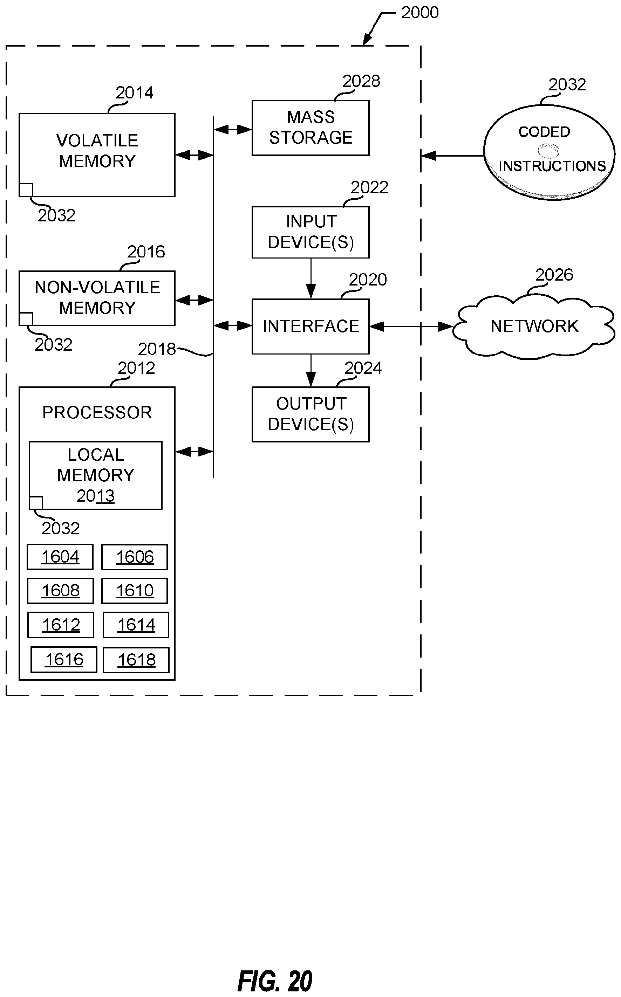

The model analysis system 1600 of the illustrated example of FIG. 16 includes a model analyzer 1602 which, in turn, includes an example attestation verifier 1604 (e.g., the appliance 1402b and/or the appliance 1406c shown in FIG. 14, in at least one embodiment; the AI attestation logic 1526 shown in FIG. 15, in at least one embodiment; implemented by executing instructions on the processor 2012 shown in FIG. 20, in at least one embodiment), an example comparator 1606 (e.g., the appliance 1402b and/or the appliance 1406c, shown in FIG. 14, in at least one embodiment; the AI attestation logic 1526, the AI logic 1524 and/or the AI logic 1540 shown in FIG. 15, in at least one embodiment; implemented by executing instructions on the processor 2012 shown in FIG. 20, in at least one embodiment), an example blockchain verifier 1608 (e.g., the appliance 1402b and/or the appliance 1406c shown in FIG. 14, in at least one embodiment; the block chain logic 1522 shown in FIG. 15 in at least one embodiment; implemented by executing instructions on the processor 2012 shown in FIG. 20, in at least one embodiment), a model improvement analyzer 1610 (e.g., the appliance 1406a shown in FIG. 14, in at least one embodiment, the example circuitry/logic 1504 shown in FIG. 15, in at least one embodiment; implemented by executing instructions on the processor 2012 shown in FIG. 20, in at least one embodiment), a model trainer 1612 (e.g., the appliance 1406a shown in FIG. 14, in at least one embodiment, the AI logic 1524 and/or the AI logic 1540, in at least one embodiment), a model validator 1614 (e.g., the AI Attestation logic 1526 shown in FIG. 15 in at least one embodiment; implemented by executing instructions on the processor 2012 shown in FIG. 20, in at least one embodiment), an example executor 1616 (e.g., the software 1538 and/or the firmware metadata 1536 shown in FIG. 15, in at least one embodiment; implemented by executing instructions on the processor 2012 shown in FIG. 20, in at least one embodiment) and an example authenticator 1618(e.g., the signature logic 1528 and/or the signature logic 1544 shown in FIG. 15, in at least one embodiment; implemented by executing instructions on the processor 2012 shown in FIG. 20, in at least one embodiment). In some examples, the model analysis system 1600 includes an attester 1619 (e.g., the request logic 1514 of FIG. 15, in at least one embodiment; implemented by executing instructions on the processor 2012 shown in FIG. 20, in at least one embodiment). In this example, the model analyzer 1602 is communicatively coupled to an edge network interface 1620 that may be communicatively coupled to at least one edge node and/or edge network. In particular, the edge network interface 1620 can interface with multiple edge networks or is operated for use with a single edge network or node. The edge network interface 1620 can interface and/or communicate with any of the examples disclosed herein.

The attestation verifier 1604 of the illustrated example is implemented to determine a score (e.g., an attestation score) of the model received at a first appliance of an edge environment. In this example, the attestation verifier 1604 determines the score based on determination and/or evaluation performed by a second appliance different from the first appliance. In some examples, the attestation verifier 1604 requests the score from the second appliance and/or a network associated with its edge and/or edge node. In some examples, the attestation verifier computes the score based on data from the second appliance and/or a blockchain associated with the data. The locally computed score may be compared to scores obtained from peer nodes where a statistical test for anomaly may be applied. Analysis of the score can be based on an average, median, threshold or other statistical test of scores may be applied. Scores may be generated by peer appliances or a number of the peer appliances that generated a score. When a majority, super-majority or other threshold scheme used to determine DLT consensus is reached; where the statistical test is satisfied, the model is accepted. Additionally or alternatively, the score can be based on a vote of peer appliances. In some examples, a composite score of multiple peer scores is calculated.

The example comparator 1606 compares the aforementioned score to a threshold. In this example, the threshold is defined by the first appliance. In other examples, the threshold is defined by data in the blockchain. The threshold score can be based on a desired degree of accuracy of the model. In particular, the desired degree of accuracy may be based on the type of data (e.g., accident data, autonomous driving data have a higher desired degree of accuracy than preferable music selections, etc.) being output from the model.

In some examples, the blockchain verifier 1608 is implemented to obtain and/or analyze data pertaining to the model from the blockchain. In particular, the example blockchain verifier 1608 can obtain scores (e.g., attestation scores) and/or associated scoring/evaluation data of the model from the blockchain. In examples where the blockchain verifier 1608 is implemented, the blockchain verifier 1608 can request a third appliance associated with the blockchain (e.g., participated in the blockchain updates, confirmed the blockchain for validity, etc.) to validate the model and/or provide scoring data associated with the model.

The example model improvement analyzer 1610 determines whether the model is improving or degrading. In particular, the model improvement analyzer 1610 can monitor whether the model is improving or degrading during training thereof. In some examples, the model improvement analyzer 1610 determines whether the model is converging (e.g., a degree of convergence) and/or whether the model has a confirmed accuracy (e.g., externally verified at another appliance, a comparison to other measurements, etc.). In some examples, the model improvement analyzer 1610 requests at least one additional training iteration when the model has not improved or has degraded. In some examples, the model improvement analyzer 1610 determines whether the model is improving or degrading based on attestation scores of each training iteration (e.g., attestation scores from the blockchain). Additionally or alternatively, the model improvement analyzer 1610 utilizes historical data and compares the output of the model to expected outputs to determine a change in accuracy of the model.

In the illustrated example, the model trainer 1612 trains the model. In some examples, the model is trained by moving the model between appliances of the edge network. In some such examples, the blockchain is utilized to evaluate an accuracy of the model and/or provide scoring of the model. Accordingly, the blockchain that evaluates the accuracy of a trained model can provide reference to an evaluation result and/or forward the result with the model for contextual evaluation of model training quality. Alternatively, the blockchain can be queried based on the reference and an evaluation of training quality may include a review of historic blockchain blocks that have been committed to the chain

The model validator 1614 of the illustrated example validates the model. The model can be validated based on the attestation score exceeding a threshold. Additionally or alternatively, the model validator 1614 analyzes a validity and/or integrity of the blockchain associated with the model.

The example executor 1616 executes and/or deploys the model once the model has been validated. In some examples, the executor 1616 enables an appliance that received the model to execute the model. Additionally or alternatively, the example executor 1616 can be implemented to designate the model as approved for distribution (e.g., the executor 1616 assigns the model to be a global model).

In this example, the authenticator 1618 is implemented to authenticate hardware, software, identifiers of hardware and/or software, appliances, vehicles associated with the appliance, etc. For example, the authenticator 1618 can authenticate identifiers (e.g., has identifiers) of hardware and/or software involved in training the model and/or forwarding the model.

In some examples, an attester 1619 collects attestation evidence to be presented to the attestation verifer 1604 and/or any edge appliance.

While an example manner of implementing the example model analysis system 1600 is illustrated in FIG. 16, one or more of the elements, processes and/or devices illustrated in FIG. 16 may be combined, divided, re-arranged, omitted, eliminated and/or implemented in any other way. Further, the example attestation verifier 1604, the example comparator 1606, the example blockchain verifier 1608, the example model improvement analyzer 1610, the example model trainer 1612, the example model validator 1614, the example executor 1616, the example authenticator 1618, the example attester 1619 and/or, more generally, the example model analysis system 1600 of FIG. 16 may be implemented by hardware, software, firmware and/or any combination of hardware, software and/or firmware. Thus, for example, any of the example attestation verifier 1604, the example comparator 1606, the example blockchain verifier 1608, the example model improvement analyzer 1610, the example model trainer 1612, the example model validator 1614, the example executor 1616, the example authenticator 1618, the example attester 1619 and/or, more generally, the example model analysis system 1600 could be implemented by one or more analog or digital circuit(s), logic circuits, programmable processor(s), programmable controller(s), graphics processing unit(s) (GPU(s)), digital signal processor(s) (DSP(s)), application specific integrated circuit(s) (ASIC(s)), programmable logic device(s) (PLD(s)) and/or field programmable logic device(s) (FPLD(s)). When reading any of the apparatus or system claims of this patent to cover a purely software and/or firmware implementation, at least one of the example, attestation verifier 1604, the example comparator 1606, the example blockchain verifier 1608, the example model improvement analyzer 1610, the example model trainer 1612, the example model validator 1614, the example executor 1616, and/or the example authenticator 1618, the example attester 1619 is/are hereby expressly defined to include a non-transitory computer readable storage device or storage disk such as a memory, a digital versatile disk (DVD), a compact disk (CD), a Blu-ray disk, etc. including the software and/or firmware. Further still, the example model analysis system 1600 of FIG. 16 may include one or more elements, processes and/or devices in addition to, or instead of, those illustrated in FIG. 16, and/or may include more than one of any or all of the illustrated elements, processes and devices. As used herein, the phrase "in communication," including variations thereof, encompasses direct communication and/or indirect communication through one or more intermediary components, and does not require direct physical (e.g., wired) communication and/or constant communication, but rather additionally includes selective communication at periodic intervals, scheduled intervals, aperiodic intervals, and/or one-time events.

Flowcharts representative of example hardware logic, machine readable instructions, hardware implemented state machines, and/or any combination thereof for implementing the model analysis system 1600 of FIG. 16 are shown in FIGS. 17-19. The machine readable instructions may be one or more executable programs or portion(s) of an executable program for execution by a computer processor and/or processor circuitry, such as the processor 2012 shown in the example processor platform 2000 discussed below in connection with FIG. 20. The program may be embodied in software stored on a non-transitory computer readable storage medium such as a CD-ROM, a floppy disk, a hard drive, a DVD, a Blu-ray disk, or a memory associated with the processor 2012, but the entire program and/or parts thereof could alternatively be executed by a device other than the processor 2012 and/or embodied in firmware or dedicated hardware. Further, although the example program is described with reference to the flowcharts illustrated in FIGS. 17-19, many other methods of implementing the example model analysis system 1600 may alternatively be used. For example, the order of execution of the blocks may be changed, and/or some of the blocks described may be changed, eliminated, or combined. Additionally or alternatively, any or all of the blocks may be implemented by one or more hardware circuits (e.g., discrete and/or integrated analog and/or digital circuitry, an FPGA, an ASIC, a comparator, an operational-amplifier (op-amp), a logic circuit, etc.) structured to perform the corresponding operation without executing software or firmware. The processor circuitry may be distributed in different network locations and/or local to one or more devices (e.g., a multi-core processor in a single machine, multiple processors distributed across a server rack, etc.).

The machine readable instructions described herein may be stored in one or more of a compressed format, an encrypted format, a fragmented format, a compiled format, an executable format, a packaged format, etc. Machine readable instructions as described herein may be stored as data or a data structure (e.g., portions of instructions, code, representations of code, etc.) that may be utilized to create, manufacture, and/or produce machine executable instructions. For example, the machine readable instructions may be fragmented and stored on one or more storage devices and/or computing devices (e.g., servers) located at the same or different locations of a network or collection of networks (e.g., in the cloud, in edge devices, etc.). The machine readable instructions may require one or more of installation, modification, adaptation, updating, combining, supplementing, configuring, decryption, decompression, unpacking, distribution, reassignment, compilation, etc. in order to make them directly readable, interpretable, and/or executable by a computing device and/or other machine. For example, the machine readable instructions may be stored in multiple parts, which are individually compressed, encrypted, and stored on separate computing devices, wherein the parts when decrypted, decompressed, and combined form a set of executable instructions that implement one or more functions that may together form a program such as that described herein.

In another example, the machine readable instructions may be stored in a state in which they may be read by processor circuitry, but require addition of a library (e.g., a dynamic link library (DLL)), a software development kit (SDK), an application programming interface (API), etc. in order to execute the instructions on a particular computing device or other device. In another example, the machine readable instructions may need to be configured (e.g., settings stored, data input, network addresses recorded, etc.) before the machine readable instructions and/or the corresponding program(s) can be executed in whole or in part. Thus, machine readable media, as used herein, may include machine readable instructions and/or program(s) regardless of the particular format or state of the machine readable instructions and/or program(s) when stored or otherwise at rest or in transit.

The machine readable instructions described herein can be represented by any past, present, or future instruction language, scripting language, programming language, etc. For example, the machine readable instructions may be represented using any of the following languages: C, C++, Java, C#, Perl, Python, JavaScript, HyperText Markup Language (HTML), Structured Query Language (SQL), Swift, etc.

As mentioned above, the example processes of FIGS. 17-19 may be implemented using executable instructions (e.g., computer and/or machine readable instructions) stored on a non-transitory computer and/or machine readable medium such as a hard disk drive, a flash memory, a read-only memory, a compact disk, a digital versatile disk, a cache, a random-access memory and/or any other storage device or storage disk in which information is stored for any duration (e.g., for extended time periods, permanently, for brief instances, for temporarily buffering, and/or for caching of the information). As used herein, the term non-transitory computer readable medium is expressly defined to include any type of computer readable storage device and/or storage disk and to exclude propagating signals and to exclude transmission media.

"Including" and "comprising" (and all forms and tenses thereof) are used herein to be open ended terms. Thus, whenever a claim employs any form of "include" or "comprise" (e.g., comprises, includes, comprising, including, having, etc.) as a preamble or within a claim recitation of any kind, it is to be understood that additional elements, terms, etc. may be present without falling outside the scope of the corresponding claim or recitation. As used herein, when the phrase "at least" is used as the transition term in, for example, a preamble of a claim, it is open-ended in the same manner as the term "comprising" and "including" are open ended. The term "and/or" when used, for example, in a form such as A, B, and/or C refers to any combination or subset of A, B, C such as (1) A alone, (2) B alone, (3) C alone, (4) A with B, (5) A with C, (6) B with C, and (7) A with B and with C. As used herein in the context of describing structures, components, items, objects and/or things, the phrase "at least one of A and B" is intended to refer to implementations including any of (1) at least one A, (2) at least one B, and (3) at least one A and at least one B. Similarly, as used herein in the context of describing structures, components, items, objects and/or things, the phrase "at least one of A or B" is intended to refer to implementations including any of (1) at least one A, (2) at least one B, and (3) at least one A and at least one B. As used herein in the context of describing the performance or execution of processes, instructions, actions, activities and/or steps, the phrase "at least one of A and B" is intended to refer to implementations including any of (1) at least one A, (2) at least one B, and (3) at least one A and at least one B. Similarly, as used herein in the context of describing the performance or execution of processes, instructions, actions, activities and/or steps, the phrase "at least one of A or B" is intended to refer to implementations including any of (1) at least one A, (2) at least one B, and (3) at least one A and at least one B.

As used herein, singular references (e.g., "a", "an", "first", "second", etc.) do not exclude a plurality. The term "a" or "an" entity, as used herein, refers to one or more of that entity. The terms "a" (or "an"), "one or more", and "at least one" can be used interchangeably herein. Furthermore, although individually listed, a plurality of means, elements or method actions may be implemented by, e.g., a single unit or processor. Additionally, although individual features may be included in different examples or claims, these may possibly be combined, and the inclusion in different examples or claims does not imply that a combination of features is not feasible and/or advantageous.

The example method 1700 of FIG. 17 begins as a model is to be generated. The model is to be trained based on sensor data and attested for deployment and/or execution. In this example, the model provides output data based on input. Further, the model includes and/or is associated with a blockchain (e.g., a distributed ledger, a multi-edge blockchain, etc.) to store information pertaining to the model.

At block 1702, the model trainer 1612 generates and trains the model. In this example, the model trainer 1612 trains the model across multiple appliances (e.g., the appliances 1406) of an edge node. In other examples, a single appliance is utilized to train the model. Additionally or alternatively, the model is trained by computing devices and/or appliances across multiple edge nodes and/or edge clusters (e.g., a cross-cluster edge training). In this example, the model improvement analyzer 1610 determines whether the model is improving or degrading as the model is being trained. In some such examples, training of the model is ceased when the model has reached a requisite degree of improvement.

At block 1704, in the illustrated example, the attestation verifier 1604 and/or the blockchain verifier 1608 provides the model to a first appliance and/or computational node. The model may be provided to the first appliance via the edge network based on a request received from the first appliance. In other examples, the model is provided to the first appliance based on a configuration or action performed by the first appliance (e.g., the first appliance is brought into self-driving mode and, thus, a model trained for self-driving is provided to the first appliance). In this example, the model is accompanied with a blockchain associated with the model. For example, the blockchain and/or data associated with the model can be sent along with the model when it is forwarded to an appliance.

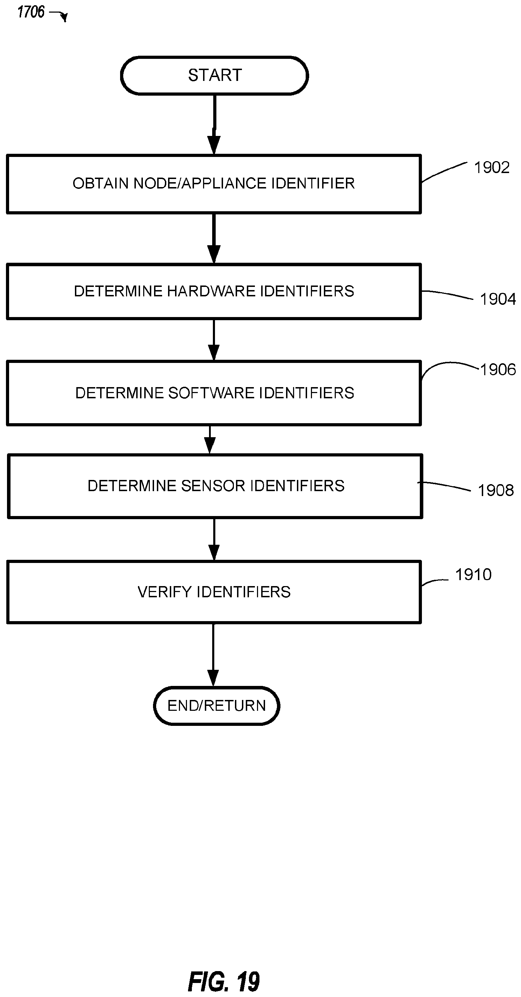

At block 1706, the authenticator 1618 of the illustrated example authenticates hardware and/or software associated with the model and/or the blockchain associated with the model. This process is described in greater detail below in connection with FIG. 19.

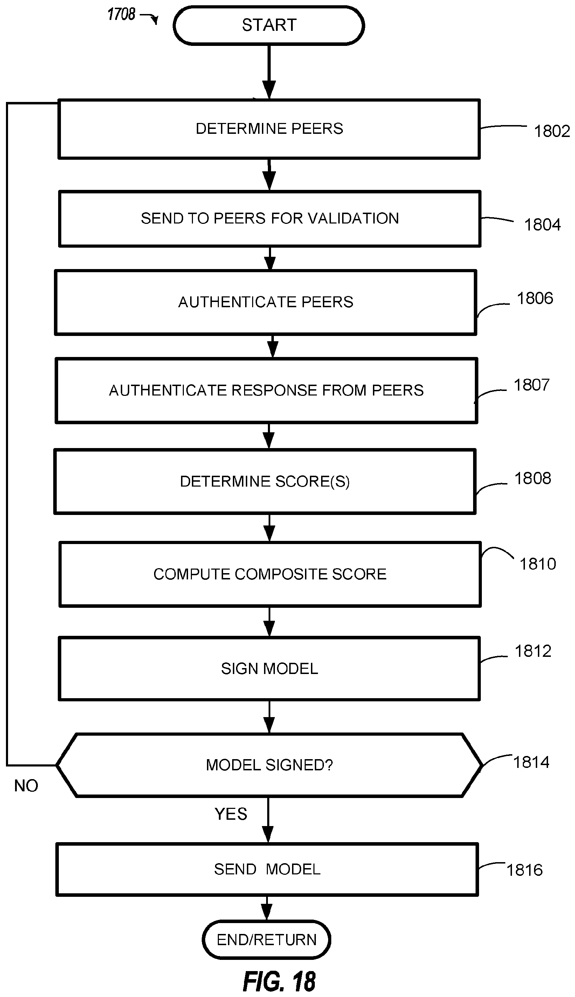

At block 1708, the example attestation verifier 1604 of the first appliance validates the model. In this example, the attestation verifier 1604 determines and/or receives an attestation score of the model that is calculated at a second appliance and/or a computational node different from the first appliance. In some examples, the example attestation verifier 1604 requests the attestation score from the second appliance. The determination of the attestation score and validation of the model is discussed in greater detail below in connection with FIG. 18.

At block 1710, the comparator 1606 compares the aforementioned attestation score to a threshold (e.g., a threshold criteria). If the attestation score exceeds the threshold (block 1710), control of the process proceeds to block 1712. Otherwise, the process returns to block 1702.

At block 1712, in some examples, the attestation verifier 1604 and/or the model validator 1614 requests validation of the model. In particular, a third appliance can be requested to validate the model based on the attestation score exceeding the threshold (block 1710). For example, the third appliance may attest to successfully validating the model by providing confirmation that the model was validated to the first appliance. In some such examples, the attestation verifier 1604 and/or the model validator 1614 analyze the blockchain associated with the model to validate the model (e.g., the third appliance is associated with attestation data of the model in the blockchain). Validation of the model is discussed in greater detail below in connection with FIG. 18.

At block 1714, the model validator 1614 and/or the attestation verifier 1604 determine whether the model is validated. In this example, the determination is based on the comparison formed by the example comparator 1606 (block 1710). If the model is validated (block 1714) by the model validator 1614, control of the process proceeds to block 1716. Otherwise, the process returns to block 1702. In this example, upon validation of the model, the corresponding blockchain is updated to indicate the validation and/or scoring of the model.

At block 1716, the executor 1616 of the illustrated example executes and/or deploys the model. In some examples, the model is executed on the first appliance that received the model. Additionally or alternatively, the model is released and/or designated as a global model (e.g., for use by other appliances in the edge network).

At block 1718, the model validator 1614, the attestation verifier 1605 and/or the blockchain verifier 1608 determine whether to repeat the process. If the process is to be repeated (block 1718), control of the process return to block 1702. In some examples, the process is repeated with a different set of peers to validate the model. In some such examples, the different set of peers may be selected based on having better (e.g., more accurate models) and/or the peers may be associated with models that were deployed in similar conditions. Additionally or alternatively, if the model is not validated, the model is not registered and/ or send a message is sent to an authority managing the edge environment.

FIG. 18 is a flowchart representative of an example subroutine 1708 of the example method 1700 of FIG. 17. The subroutine 1708 is executed to evaluate (e.g., quantitatively evaluate) the model based on data from a blockchain. In other examples, the blockchain is not implemented, however.

At block 1802, the example blockchain verifier 1608 determines peers (e.g., peer appliances, peer computing nodes, etc.) of the first appliance and/or peers associated with updating the blockchain of the model. In some examples, the peers are determined and/or designated based on: (i) a distance to a current edge location (e.g., may be selected based on physical distance or proximity), (ii) a certificate of the peer and/or (iii) an identifier of the peer (e.g., an IP address). Additionally or alternatively, the peers are determined based on constellation logic that configures a set of peers to be part of a blockchain (e.g., a private blockchain) that is designated for model validation.

At block 1804, in some examples, the attestation verifier 1604 and/or the blockchain verifier 1608 send the model to the determined peers for validation. In some other examples, the blockchain verifier 1608 accesses the blockchain for information (e.g., attestation score(s)) pertaining to the model. In some examples, ones of the aforementioned peers run the model with their historical data, validate the generated output and coordinate with the other peers that have validated the model to sign the model in the blockchain. In other words, historical data is run through the model and corresponding output is analyzed for accuracy. In some such examples, if the number of peers successfully validating the model exceeds a number of peers that did not successfully validate the model, the model is deemed validated by the attestation verifier 1604 and/or the blockchain verifier 1608.

At block 1806, in some examples, the determined peers providing respective attestation score(s) are authenticated by the authenticator 1618, for example. In some such examples, hardware and/or software associated with the peers is authenticated. For example, hash identifiers of the hardware and/or software are utilized by the determined peers to authenticate the determined peers. In some examples, peers are authenticated prior to the model being sent to the peers and/or the peers analyzing the model. In some examples, the peers are authenticated, as part of believing the authentication challenge (e.g., a verifier and/or verifying peer processes attestation of the peer). In some examples, validation of the trained model occurs based on attestation of the training environments and/or quality of training. Accordingly, the attested and trained model is provisioned to a node and/or appliance in response to the peer being attested and authenticated.

At block 1807, in some examples, the authenticator 1618 authenticates response(s) from the determined peers. In particular, the authenticator 1618 authenticates the score(s) of the model calculated and/or received from the determined peers.

At block 1808, in some examples, the attestation verifier 1604, the attester 1619 and/or the blockchain verifier 1608 determine attestation score(s) of the model. In this example, the score(s) are determined from the blockchain associated with the model. For example, the score(s) is/are accessed from the blockchain and entries in the blockchain are verified, determined and/or authenticated. In some examples, verified and/or authenticated peers (e.g., appliances with verified hash identifiers in the edge environment) are utilized while other peer attestation scores of un-verified peers are ignored. In some examples, attestation scores in the blockchain from verified, determined and/or authenticated peers are averaged together. In some other examples, an attestation score higher than a threshold (e.g., a threshold provided to or determined by the first appliance) causes the attestation verifier 1604 and/or the blockchain verifier 1608 to request another appliance that was involved in training of the model and/or attestation of the model to validate the model. Additionally or alternatively, the aforementioned first appliance requests and/or queries the attestation score(s) from another appliance. In some examples, the attester 1619 gathers evidence of attestation of the model and/or a training environment of the model.

At block 1810, in some examples, a composite score of the attestation score(s) is calculated by the example attestation verifier 1604. The composite score may be an average of attestation scores. In some examples, the average can be weighted such that peers with a higher reputation score and/or validation probability are weighted higher than other peers.

At block 1812, in some examples the model and/or its associated blockchain and/or blockchain portion is signed by the peers (e.g., after a requisite number of peers validate the model based on the blockchain) and the process ends. In some examples, if the model is signed, the model can be propagated to other distributed edges and/or edge nodes. Alternatively, if the model is not signed, the model is not propagated (e.g., until after the model undergoes at least one further iteration). In some examples, only one of the peers signs the model based on a requisite number of peers signing the model.

At block 1814, the attestation verifier 1604 and/or the blockchain verifier 1608 determines whether the model has been signed. If the model has been signed (block 1814), control of the process proceeds to block 1816. Otherwise, the process returns to block 1802.

At block 1816, the model is sent by the model validator 1614 and/or the executor 1616 to an appliance (e.g., for execution or distribution) and the process ends/returns.

FIG. 19 is a flowchart representative of an example subroutine 1706 of the example method 1700 of FIG. 17. In the illustrated example, the subroutine 1706 can be implemented to authenticate various components and/or software of the edge network that pertain to the model and/or validation thereof. As a result, models with erroneous and/or tampered data can be prevented from propagating throughout the edge network. Moreover, models that are diverging (e.g., output from the models is decreasing in accuracy

At block 1902, the example authenticator 1618 obtains a node and/or appliance identifier. For example, the node and/or appliance identifier can pertain to an appliance that is used to validate the model.

At block 1904, the example authenticator 1618 determines hardware identifiers. The hardware identifiers may pertain to sensors obtaining data used to train the model. Additionally or alternatively, the hardware identifiers may be associated with computational hardware used to train and/or evaluate the model.

At block 1906, the example authenticator 1618 determines software identifiers. For example, the authenticator 1618 determines identifiers associated with software applications, firmware, training software stack, etc.

At block 1908, the example authenticator 1618 determines sensor identifiers. The sensor identifiers can be associated with sensor data captured to train the model. Additionally or alternatively, the sensor identifiers can be associated with sensor data used to validate the model.

At block 1910, the identifiers are verified and/or authenticated by the authenticator 1618, for example. In some examples, hash identifiers are authenticated by the authenticator 1618.

FIG. 20 is a block diagram of an example processor platform 2000 structured to execute the instructions of FIGS. 17-19 to implement the model analysis system 1600 of FIG. 16. The processor platform 2000 can be, for example, a server, a personal computer, a workstation, a self-learning machine (e.g., a neural network), a mobile device (e.g., a cell phone, a smart phone, a tablet such as an iPadTM), a personal digital assistant (PDA), an Internet appliance, a DVD player, a CD player, a digital video recorder, a Blu-ray player, a gaming console, a personal video recorder, a set top box, a headset or other wearable device, or any other type of computing device.

The processor platform 2000 of the illustrated example includes a processor 2012. The processor 2012 of the illustrated example is hardware. For example, the processor 2012 can be implemented by one or more integrated circuits, logic circuits, microprocessors, GPUs, DSPs, or controllers from any desired family or manufacturer. The hardware processor may be a semiconductor based (e.g., silicon based) device. In this example, the processor implements attestation verifier 1604, the example comparator 1606, the example blockchain verifier 1608, the example model improvement analyzer 1610, the example model trainer 1612, the example model validator 1614, the example executor 1616, the example authenticator 1618, and the example attester 1619.

The processor 2012 of the illustrated example includes a local memory 2013 (e.g., a cache). The processor 2012 of the illustrated example is in communication with a main memory including a volatile memory 2014 and a non-volatile memory 2016 via a bus 2018. The volatile memory 2014 may be implemented by Synchronous Dynamic Random Access Memory (SDRAM), Dynamic Random Access Memory (DRAM), RAMBUS^{®} Dynamic Random Access Memory (RDRAM^{®}) and/or any other type of random access memory device. The non-volatile memory 2016 may be implemented by flash memory and/or any other desired type of memory device. Access to the main memory 2014, 2016 is controlled by a memory controller.

The processor platform 2000 of the illustrated example also includes an interface circuit 2020. The interface circuit 2020 may be implemented by any type of interface standard, such as an Ethernet interface, a universal serial bus (USB), a Bluetooth^{®} interface, a near field communication (NFC) interface, and/or a PCI express interface.

In the illustrated example, one or more input devices 2022 are connected to the interface circuit 2020. The input device(s) 2022 permit(s) a user to enter data and/or commands into the processor 2012. The input device(s) can be implemented by, for example, an audio sensor, a microphone, a camera (still or video), a keyboard, a button, a mouse, a touchscreen, a track-pad, a trackball, isopoint and/or a voice recognition system.

One or more output devices 2024 are also connected to the interface circuit 2020 of the illustrated example. The output devices 2024 can be implemented, for example, by display devices (e.g., a light emitting diode (LED), an organic light emitting diode (OLED), a liquid crystal display (LCD), a cathode ray tube display (CRT), an in-place switching (IPS) display, a touchscreen, etc.), a tactile output device, a printer and/or speaker. The interface circuit 2020 of the illustrated example, thus, typically includes a graphics driver card, a graphics driver chip and/or a graphics driver processor.

The interface circuit 2020 of the illustrated example also includes a communication device such as a transmitter, a receiver, a transceiver, a modem, a residential gateway, a wireless access point, and/or a network interface to facilitate exchange of data with external machines (e.g., computing devices of any kind) via a network 2026. The communication can be via, for example, an Ethernet connection, a digital subscriber line (DSL) connection, a telephone line connection, a coaxial cable system, a satellite system, a line-of-site wireless system, a cellular telephone system, etc.

The processor platform 2000 of the illustrated example also includes one or more mass storage devices 2028 for storing software and/or data. Examples of such mass storage devices 2028 include floppy disk drives, hard drive disks, compact disk drives, Blu-ray disk drives, redundant array of independent disks (RAID) systems, and digital versatile disk (DVD) drives.

The machine executable instructions 2032 of FIGS. 17-19 may be stored in the mass storage device 2028, in the volatile memory 2014, in the non-volatile memory 2016, and/or on a removable non-transitory computer readable storage medium such as a CD or DVD.

From the foregoing, it will be appreciated that example methods, apparatus and articles of manufacture have been disclosed that enable verification of trained models. Accordingly, examples disclosed herein can prevent use of erroneous and/or tampered models. The disclosed methods, apparatus and articles of manufacture improve the efficiency of using a computing device by enabling use of models that are more accurate and, thus, can reduce computations (e.g., computations to reach a solution and/or converge a calculation or model). The disclosed methods, apparatus and articles of manufacture are accordingly directed to one or more improvement(s) in the functioning of a computer.

## Claims

1. A method of validating a trained machine learning model that is trained in an edge environment, the method comprising:
Determining (1710), by executing instructions with at least one processor, an attestation score of the trained machine learning model received at a first appliance of the edge environment, the determination of the attestation score performed at a second appliance, different from the first appliance;
in response to the attestation score exceeding a threshold, validating (1708), by executing instructions with the at least one processor, the trained machine learning model; and
at least one of executing or deploying (1716), by executing instructions with the at least one processor, the model based on the validation of the trained machine learning model.

2. The method as defined in claim 1, wherein the attestation score is determined based on a blockchain associated with the trained machine learning model.

3. The method as defined in claim 2, further including, requesting, by executing instructions with the at least one processor, validation of the trained machine learning model at a third appliance that is associated with the blockchain.

4. The method as defined in any of claims 1 to 3, further including determining, by executing instructions with the at least one processor, whether the trained machine learning model is improving or degrading.

5. The method as defined in any of claims 1 to 4, further including authenticating, by executing instructions with the at least one processor, a signature of sensor data associated with the trained machine learning model.

6. The method as defined in any of claims 1 to 5, wherein the attestation score is calculated based on consensus scoring.

7. The method as defined in any of claims 1 to 6, wherein the attestation score is calculated based on comparing a number of peer appliances that validated the trained machine learning model with a number of peer appliances that did not validate the trained machine learning model.

8. The method as defined in any of claims 1 to 7, further including initiating, by executing instructions with the at least one processor, further validation if the validation is not successful with a third appliance different from the first and second appliances.

9. The method as defined in any of claims 1 to 8, further including selecting, by executing instructions with the at least one processor, the second appliance based on at least one of a model of the second appliance having sufficient accuracy or the model of the second appliance being deployed in similar conditions to that being analyzed by the first appliance.

10. The method as defined in any of claims 2 to 9, wherein the attestation score is calculated based on an average of multiple attestation scores stored in the blockchain.

11. The method as defined in any of claims 2 to 10, wherein the attestation score is calculated based on a number of scores in the blockchain exceeding a threshold.

12. The method as defined in any of claims 1 to 11, wherein the at least one processor is to train the trained machine learning model at a third appliance of the edge environment.

13. The method as defined in any of claims 1 to 12, wherein the at least one processor is to authenticate software associated with the trained machine learning model.

14. An apparatus (1300, 1400, 1500) comprising means to perform a method as claimed in any one of preceding claims.

15. At least one machine-readable storage including machine-readable instructions, when executed by one or more processors of an electronic device of an edge computing system, to implement a method as claimed in any one of preceding claims.

## Patentansprüche

1. Verfahren zum Validieren eines trainierten Maschinenlernmodells, das in einer Edge-Umgebung trainiert wird, wobei das Verfahren Folgendes umfasst:
Bestimmen (1710), durch Ausführen von Anweisungen mit mindestens einem Prozessor, einer an einem ersten Gerät der Edge-Umgebung empfangenen Attestierungsbewertung des trainierten Maschinenlernmodells, wobei die Bestimmung der Attestierungsbewertung an einem zweiten Gerät durchgeführt wird, das sich von dem ersten Gerät unterscheidet;
als Reaktion darauf, dass die Attestierungsbewertung eine Schwelle überschreitet, Validieren (1708), durch Ausführen von Anweisungen mit dem mindestens einen Prozessor, des trainierten Maschinenlernmodells; und
Ausführen und/oder Einsetzen (1716) des Modells durch Ausführen von Anweisungen mit dem mindestens einen Prozessor basierend auf der Validierung des trainierten Maschinenlernmodells.

2. Verfahren nach Anspruch 1, wobei die Attestierungsbewertung basierend auf einer mit dem trainierten Maschinenlernmodell assoziierten Blockchain bestimmt wird.

3. Verfahren nach Anspruch 2, das ferner beinhaltet, durch Ausführen von Anweisungen mit dem mindestens einen Prozessor eine Validierung des trainierten Maschinenlernmodells an einem mit der Blockchain assoziierten dritten Gerät anzufordern.

4. Verfahren nach einem der Ansprüche 1 bis 3, das ferner beinhaltet, durch Ausführen von Anweisungen mit dem mindestens einen Prozessor zu bestimmen, ob sich das trainierte Maschinenlernmodell verbessert oder verschlechtert.

5. Verfahren nach einem der Ansprüche 1 bis 4, das ferner beinhaltet, durch Ausführen von Anweisungen mit dem mindestens einen Prozessor eine Signatur von mit dem trainierten Maschinenlernmodell assoziierten Sensordaten zu authentifizieren.

6. Verfahren nach einem der Ansprüche 1 bis 5, wobei die Attestierungsbewertung basierend auf einer Konsensbewertung berechnet wird.

7. Verfahren nach einem der Ansprüche 1 bis 6, wobei die Attestierungsbewertung basierend auf einem Vergleich einer Anzahl von Peer-Geräten, die das trainierte Maschinenlernmodell validiert haben, mit einer Anzahl von Peer-Geräten, die das trainierte Maschinenlernmodell nicht validiert haben, berechnet wird.

8. Verfahren nach einem der Ansprüche 1 bis 7, das ferner beinhaltet, durch Ausführen von Anweisungen mit dem mindestens einen Prozessor eine weitere Validierung zu initiieren, falls die Validierung mit einem dritten Gerät, das sich von dem ersten und dem zweiten Gerät unterscheidet, nicht erfolgreich ist.

9. Verfahren nach einem der Ansprüche 1 bis 8, das ferner beinhaltet, durch Ausführen von Anweisungen mit dem mindestens einen Prozessor das zweite Gerät basierend darauf auszuwählen, dass ein Modell des zweiten Geräts eine ausreichende Genauigkeit aufweist und/oder das Modell des zweiten Geräts unter ähnlichen Bedingungen wie das durch das erste Gerät analysierte eingesetzt wird.

10. Verfahren nach einem der Ansprüche 2 bis 9, wobei die Attestierungsbewertung basierend auf einem Durchschnitt mehrerer in der Blockchain gespeicherter Attestierungsbewertungen berechnet wird.

11. Verfahren nach einem der Ansprüche 2 bis 10, wobei die Attestierungsbewertung basierend darauf berechnet wird, dass eine Anzahl von Bewertungen in der Blockchain eine Schwelle überschreitet.

12. Verfahren nach einem der Ansprüche 1 bis 11, wobei der mindestens eine Prozessor das trainierte Maschinenlernmodell an einem dritten Gerät der Edge-Umgebung trainieren soll.

13. Verfahren nach einem der Ansprüche 1 bis 12, wobei der mindestens eine Prozessor mit dem trainierten Maschinenlernmodell assoziierte Software authentifizieren soll.

14. Einrichtung (1300, 1400, 1500), die Mittel zum Durchführen eines Verfahrens nach einem der vorhergehenden Ansprüche umfasst.

15. Maschinenlesbarer Speicher bzw. maschinenlesbare Speicher, beinhaltend maschinenlesbare Anweisungen, die bei Ausführung durch einen oder mehrere Prozessoren einer elektronischen Vorrichtung eines Edge-Computing-Systems ein Verfahren nach einem der vorhergehenden Ansprüche implementieren sollen.

## Revendications

1. Procédé de validation d'un modèle d'apprentissage automatique entrainé qui est entraîné dans un environnement de périphérie, le procédé comprenant :
la détermination (1710), en exécutant des instructions à l'aide d'au moins un processeur, d'un score d'attestation du modèle d'apprentissage automatique entrainé reçu au niveau d'un premier appareil de l'environnement de périphérie, la détermination du score d'attestation étant réalisée au niveau d'un deuxième appareil, différent du premier appareil ;
en réponse au fait que le score d'attestation dépasse un seuil, la validation (1708), en exécutant des instructions à l'aide du ou des processeurs, du modèle d'apprentissage automatique entraîné ; et
l'exécution et/ou le déploiement (1716), en exécutant des instructions à l'aide du ou des processeurs, du modèle sur la base de la validation du modèle d'apprentissage automatique entraîné.

2. Procédé selon la revendication 1, le score d'attestation étant déterminé sur la base d'une chaîne de blocs associée au modèle d'apprentissage automatique entraîné.

3. Procédé selon la revendication 2, comprenant en outre le fait de demander, en exécutant des instructions à l'aide du ou des processeurs, la validation du modèle d'apprentissage automatique entraîné au niveau d'un troisième appareil qui est associé à la chaîne de blocs.

4. Procédé selon l'une quelconque des revendications 1 à 3, comprenant en outre le fait de déterminer, en exécutant des instructions à l'aide du ou des processeurs, si le modèle d'apprentissage automatique entraîné est en cours d'amélioration ou de dégradation.

5. Procédé selon l'une quelconque des revendications 1 à 4, comprenant en outre l'authentification, en exécutant des instructions à l'aide du ou des processeurs, d'une signature de données de capteur associées au modèle d'apprentissage automatique entraîné.

6. Procédé selon l'une quelconque des revendications 1 à 5, le score d'attestation étant calculé sur la base d'une notation consensuelle.

7. Procédé selon l'une quelconque des revendications 1 à 6, le score d'attestation étant calculé sur la base de la comparaison d'un nombre d'appareils homologues qui ont validé le modèle d'apprentissage automatique entraîné avec un nombre d'appareils homologues qui n'ont pas validé le modèle d'apprentissage automatique entraîné.

8. Procédé selon l'une quelconque des revendications 1 à 7, comprenant en outre le lancement, en exécutant des instructions à l'aide du ou des processeurs, d'une validation supplémentaire si la validation n'est pas réussie avec un troisième appareil différent des premier et deuxième appareils.

9. Procédé selon l'une quelconque des revendications 1 à 8, comprenant en outre la sélection, en exécutant des instructions à l'aide du ou des processeurs, du deuxième appareil sur la base du fait qu'un modèle du deuxième appareil présente une précision suffisante et/ou que le modèle du deuxième appareil soit déployé dans des conditions similaires à celles en cours d'analyse par le premier appareil.

10. Procédé selon l'une quelconque des revendications 2 à 9, le score d'attestation étant calculé sur la base d'une moyenne de multiples scores d'attestation stockés dans la chaîne de blocs.

11. Procédé selon l'une quelconque des revendications 2 à 10, le score d'attestation étant calculé sur la base d'un nombre de scores dans la chaîne de blocs dépassant un seuil.

12. Procédé selon l'une quelconque des revendications 1 à 11, dans lequel le ou les processeurs étant appelés à entraîner le modèle d'apprentissage automatique entraîné au niveau d'un troisième appareil de l'environnement de périphérie.

13. Procédé selon l'une quelconque des revendications 1 à 12, le ou les processeurs étant appelés à authentifier un logiciel associé au modèle d'apprentissage automatique entraîné.

14. Appareil (1300, 1400, 1500) comprenant des moyens pour réaliser un procédé selon l'une quelconque des revendications précédentes.

15. Au moins un stockage lisible par machine comprenant des instructions lisibles par machine servant, lorsqu'elles sont exécutées par un ou plusieurs processeurs d'un dispositif électronique d'un système informatique de périphérie, à mettre en œuvre un procédé selon l'une quelconque des revendications précédentes.
